(19) Europäisches Patentamt
European Patent Office
Office européen des brevets

(11) **EP 2 924 466 B1**

(12) **EUROPÄISCHE PATENTSCHRIFT**

(45) Veröffentlichungstag und Bekanntmachung des Hinweises auf die Patenterteilung:
**03.06.2020 Patentblatt 2020/23**

(51) Int Cl.:
*G01S 17/46* (2006.01)  *G01S 17/10* (2020.01)
*G01S 7/487* (2006.01)  *G01S 7/497* (2006.01)
*G01N 21/17* (2006.01)

(21) Anmeldenummer: **14161553.4**

(22) Anmeldetag: **25.03.2014**

(54) **Sensorsystem zur Erkennung mindestens eines Objekts in einer Übertragungsstrecke**

Sensor system for identifying at least one object of a transmission line

Système de capteurs pour la détection d'au moins un objet dans une voie de transmission

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.09.2015 Patentblatt 2015/40**

(73) Patentinhaber: **Elmos Semiconductor Aktiengesellschaft**
**44227 Dortmund (DE)**

(72) Erfinder:
• **Melcher, Dr. Rolf**
**76227 Karlsruhe (DE)**

• **Münzer, Roland**
**75179 Pforzheim (DE)**

(74) Vertreter: **Durm Patentanwälte PartG mbB Patentanwälte**
**Moltkestrasse 45**
**76133 Karlsruhe (DE)**

(56) Entgegenhaltungen:
**EP-A1- 2 631 674    WO-A1-2008/092611**
**US-A- 3 734 631**

**Beschreibung**

Die vorliegende Erfindung betrifft ein Sensorsystem zur Erkennung mindestens eines Objekts in einer Übertragungsstrecke, die eine erste Übertragungsstrecke und eine zweite Übertragungsstrecke einschließt, zwischen einem Sender und einem Empfänger. Das Sensorsystem umfasst mindestens einen Sender, der mit einem Speisesignal angesteuert wird, um zumindest ein bekanntes Sendesignal des Senders in die Übertragungsstrecke hinein zu senden, das nach Durchgang durch mindestens einen Teil der Übertragungsstrecke und Beeinflussung durch mindestens ein Objekt als modifiziertes Sendesignal zumindest zu einem Empfänger gelangt, der Teil des Sensorsystems ist. Das modifizierte Sendesignal wird als modifiziertes Empfangssignal im Empfänger empfangen, der daraus ein Empfängerausgangssignal mit wenigstens einem modifizierten Empfängerausgangssignalanteil bildet. Eine Verarbeitungseinheit des Sensorsystems verarbeitet das Verarbeitungszwischensignal, welches das Empfängerausgangssignal umfasst, weiter und separiert mindestens einen modifizierten Empfängerausgangssignalanteil, aus dem eine Regelwert-Matrix mit wenigstens einem Regelwert-Signal erzeugt wird, wobei mindestens ein Regelwert-Signal von Null verschieden ist.

Aus dem Stand der Technik sind eine ganze Reihe verschiedener Verfahren zum Erkennen eines Objekts in einer optischen Übertragungsstrecke bekannt.

Zu nennen sind hier beispielhaft:

DE102012024597.1
DE102013013664.4
WO2013124018
DE10001955A1
DE10024156A1
DE19839730C1
DE930983U1
DE10001943C1
DE10346741B3
DE102004025345B3
DE102005013325A1
DE102005010745B3
DE102007005187B4

Allen diesen Verfahren ist gemeinsam, dass sie nicht in der Lage sind, mehrere Objekte in einer Übertragungsstrecke ohne Zuhilfenahme verschiedener Zeitschlitze zu erkennen. Derartige Verfahren mit Zeitschlitzen sind jedoch aufwendig.

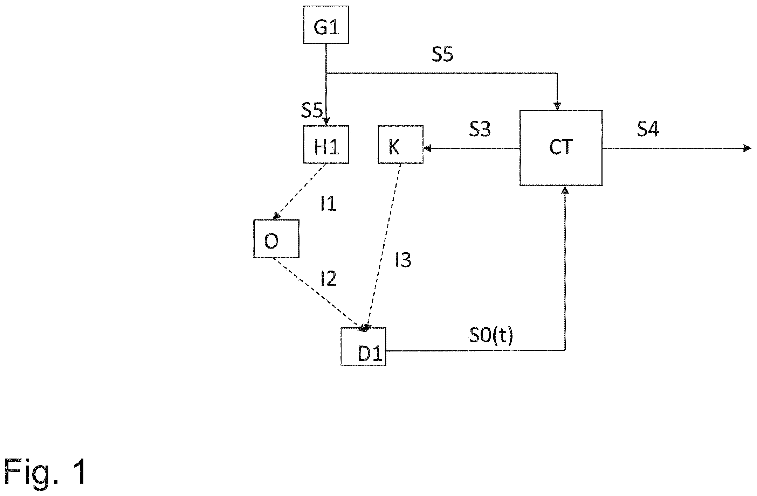

Das Problem wird anhand der Figuren 1 bis 4 erläutert:

Figur 1 zeigt ein nicht beanspruchtes, typisches Sensorsystem, ein sogenanntes Halios-System, wie es aus dem Stand der Technik bekannt ist. Ein Signalgenerator G1 erzeugt ein Sendesignal S5 und speist damit einen ersten Sender H1. Dieser strahlt in eine erste Übertragungsstrecke I1 ein, die an einem Objekt O endet.

Dort wird das Signal, welches das Objekt O durch die Übertragungsstrecke I1 erreicht hat, in eine zweite Übertragungsstrecke I2 hinein transmittiert oder reflektiert. Nach Durchgang durch diese zweite Übertragungsstrecke I2 wird das Signal von einem Empfänger D1 aufgefangen und an einen Regler CT als Empfängerausgangssignal S0(t) weitergegeben. Dieser erzeugt aus dem Sendesignal S5 und dem Empfängerausgangssignal S0(t) das Kompensatorspeisesignal S3. Mit diesem Kompensatorspeisesignal S3 wird ein Kompensationssender K gespeist, der ebenfalls (über eine dritte Übertragungstrecke I3) in den Detektor (Empfänger) D1 einstrahlt. Diese Einstrahlung erfolgt typischerweise linear überlagernd zum Signal, das über die Übertragungsstrecke I2 zum Empfänger (Detektor) gelangt. Der Regler CT filtert und verstärkt dabei bestimmte Signalanteile des Empfängerausgangssignals S0(t) in der Art, dass die Überlagerung der Signale im Detektor im Wesentlichen einen Gleichpegel ergibt. Das Kompensatorspeisesignal S3 ist im eingeschwungenen Zustand also komplementär kompensierend zu dem nach dem Durchgang durch die beiden Übertragungsstrecken modifizierten Sendesignal S5. Eine Regelgröße des Reglers CT stellt dabei typischerweise einen Parameter dar, der mit den Transmissions- oder Reflexionseigenschaften des Objekts O oder den Übertragungeigenschaften der beiden Übertragungsstrecken I1 und I2 korrespondiert.

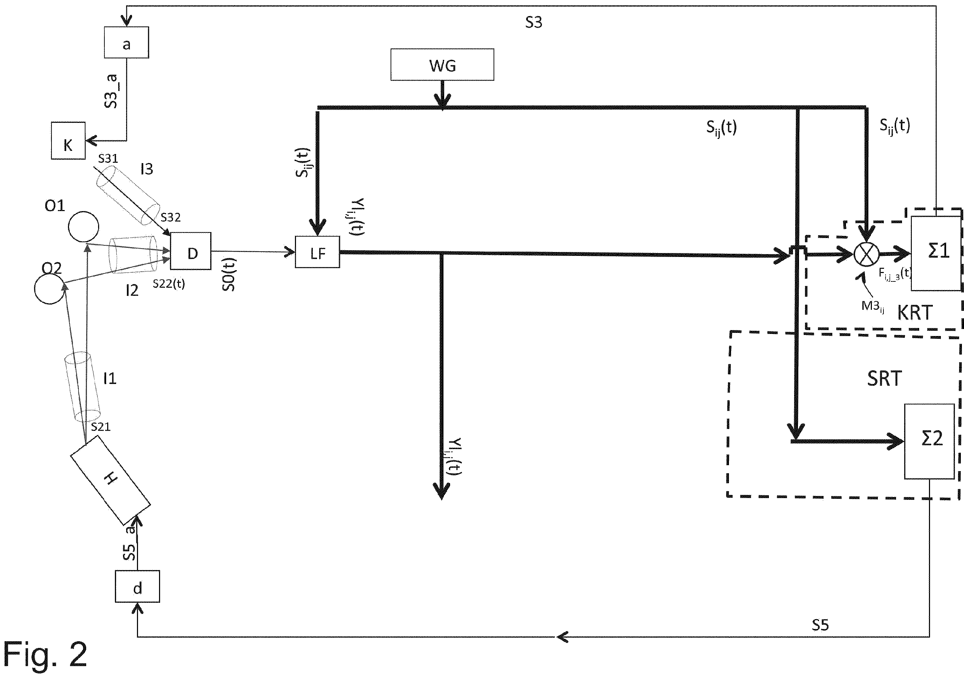

Figur 2 zeigt ein solches System etwas detaillierter: Der Sender G1 wird durch einen Wavelet-Generator WG ersetzt, der nun mehrere Wavelet-Signale $s_{i,j}(t)$ (Wavelets) liefert. Diese Wavelet-Signale $s_{i,j}(t)$ (oder kurz Wavelets) werden durch eine erste Vorrichtung, die eine Linearform LF bildet, mit dem Empfängerausgangssignal S0(t) des Empfängers (D) verknüpft. Es ergibt sich eine Ausgangssignalmatrix $YI_{i,j}$ der Linearform LF. Diese ist eine Matrix von Regelwertsignalen $yi_{i,j}(t)$. Jedes Element, also das Regelwertsignal $yi_{i,j}(t)$, dieser Ausgangssignalmatrix $YI_{i,j}$ der Linearform LF stellt im Idealfall eines ungestörten Systems mit idealen Komponenten einen Quasigleichpegel dar. In der Realität verhindern Störungen, Rauschen und Regelfehler das Erreichen eines perfekten Quasigleichpegels.

Jedes Regelwertsignal $yi_{i,j}(t)$ dieser Ausgangssignalmatrix $YI_{i,j}$ der Linearform LF wird nun in einer Kompensationsrücktransformationseinheit KRT durch jeweils einen Multiplizierer einer dritten Multipliziereinheit M3$_{ij}$ wieder mit dem korrespondierenden Ausgangssignal s$_{i,j}$(t) (Wavelet-Signal) des Wavelet-Generators WG multipliziert. Es ergibt sich die Roh-Kompensationssignalmatrix F$_{i,j\_3}$. Die einzelnen Elemente dieser Roh-Kompensationssignalmatrix F$_{i,j\_3}$ werden durch einen Summierer $\Sigma$1 zum Kompensationssignal S3 reduziert, genauer, zusammengefasst. Über einen ersten Sendeverstärker a wird der Kompensationssender K mittels des Signals S3_a, das einen optionalen Offset beinhalten kann, gespeist. Dieser strahlt wieder in die besagte dritte Übertragungsstrecke I3 das gesendete Kompensationssendersignal S31 ein. Die folgende dritte Übertragungsstrecke I3 ist vorzugsweise bekannt. Am Ausgang der dritten Übertragungsstrecke I3 befindet sich wieder der Empfänger D. Dieser empfängt das gesendete Kompensationssendersignal S31 nach Durchgang durch die dritte Übertragungsstrecke I3 als zweites Übertragungsstreckenausgangssignal S32.

Das Sendesignal S5 wird typischerweise durch gewichtete, summierende Zusammenfassung typischer Weise nur eines Teils der Ausgangssignale s$_{i,j}$(t) durch den zweiten Summierer $\Sigma$2 gebildet. Dabei kann im Extremfall eines der Signale s$_{i,j}$(t) dem Sendesignal S5 entsprechen. Das Signal S5 speist wieder den Sender H, der in eine erste Übertragungsstrecke I1 das gesendete Sendersignal S21 einspeist an deren Ausgang das Signal durch ein oder mehr Objekte O1, O2 reflektiert oder transmittiert wird. Dabei wird das derartig durch Reflexion oder Transmission modifizierte Signal in eine zweite Übertragungsstrecke I2 eingespeist. Am Ausgang der zweiten Übertragungsstrecke wird das durch die Objekte O1, O2 und die Übertragungsstrecken I1, I2 modifizierte Signal als erstes Übertragungsstreckenausgangssignal S22 ebenfalls in den Empfänger D eingespeist, wo sich die das erste Übertragungsstreckenausgangssignal S22 und das zweite Übertragungsstreckenausgangssignal S32 typischerweise summierend oder multiplizierend überlagern.

Im Folgenden schreiben wir zur Vereinfachung die Linearform zweier Signale A und B als LF(A,B). A, B, C seien beliebige Signale. $\alpha$ sei eine reelle Zahl.

Eine Linearform (LF) zweier Signale A(t) und B(t), die durch eine Linearformfunktion LF(A(t), B(t)) beschrieben wird und wie sie die erste Vorrichtung zur Bildung ihrer Ausgangssignale yi$_{i,j}$(t) durchführt, hat bezüglich der Linearformfunktion und eines dritten Signals C(t) und einer komplexen Konstante $\alpha$ folgende Eigenschaften:

$$LF(A(t) + B(t), C(t))=LF(A(t), C(t))+LF(B(t), C(t))$$

$$LF(\alpha*A(t), C(t))=\alpha*LF(A(t), C(t))$$

Zwei Signale A(t) und C(t) werden im Folgenden als orthogonal bezeichnet, wenn LF(A(t), C(t))=0 oder in der Realität LF(A(t), C(t))~0 gilt und A(t) und C(t) von Null verschieden sind.

Solange gilt: LF(S$_{i,j}$(t), S$_{kl}$(t))=0 für i#k oder j≠l, solange sind die S$_{i,j}$(t) untereinander orthogonal. Daher wird der Regler nur die Anteile des ersten Übertragungsstreckenausgangssignals S22 ausregeln, die exakt einem vom Null verschiedenen Signal s$_{i,j}$(t) entsprechen.

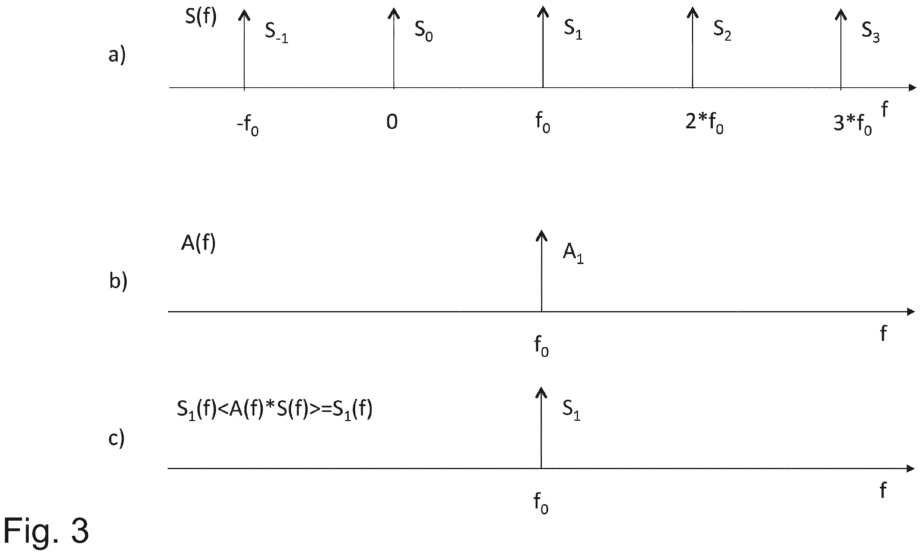

In Figur 3a sind vereinfacht mehrere Signalanteile S$_{-1}$ bis S$_3$ eines Signals S(t) gezeigt, wobei S(t) im Frequenzbereich als Signalbetragsspektrum S(f) dargestellt ist. Diese Signale entsprechen ausdrücklich nicht den Signalen S(-1) bis S3. Die Frequenzen der Signalanteile S$_{-1}$ bis S$_3$. sollen ganzzahlige Vielfache einer Grundfrequenz f0 sein. Wird nun ein Signal S(t), wie in Figur 3a dargestellt, als Empfängerausgangssignal S0(t) in das oben beschriebene Halios-System gemäß Figur 2 eingespeist, so ergibt die Linearform LF(S0(t),S$_1$), die durch die erste Vorrichtung durchgeführt wird, dieses Signals S0(t), das hier ja das Signal S(t) sein soll, und einer Signalkomponente dieses Signals S0(t) bzw. S(t), hier beispielsweise die Komponente S$_1$, als A(f) bezeichnet, einen Pegel, der nochmals multipliziert mit S$_1$(f) die Signalkomponente S$_1$(f) entsprechend ihrem Anteil in S0(t) reproduziert. Die anderen Frequenzkanäle sprechen nicht an, Figur 3b, 3c.

Ein solches System ist beispielsweise in der EP2631674A1 beschrieben. Das Problem eines solchen Systems ist, dass mehrere Objekte nur begrenzt getrennt werden können. Befinden sich zwei Objekte in einem Zeitschlitz, so ist eine Trennung nicht möglich.

Ursache hierfür ist die in der EP2631674A1 geforderte Orthogonalität der Basissignale, die die Auflösung beschränkt. Dieses Problem taucht auch in Systemen gemäß DE102013013664 und DE102012024597 auf. Dort wird jeweils bereits ein Wavelet-Generator verwendet, ohne das Problem der Notwendigkeit von Zeitschlitzen wirklich zu lösen. Die DE10001943C2 offenbart eine technische Lehre, welche ebenfalls die Unterscheidung verschiedener Objekte mittels der dort offenbarten Messtechnik nicht ermöglicht.

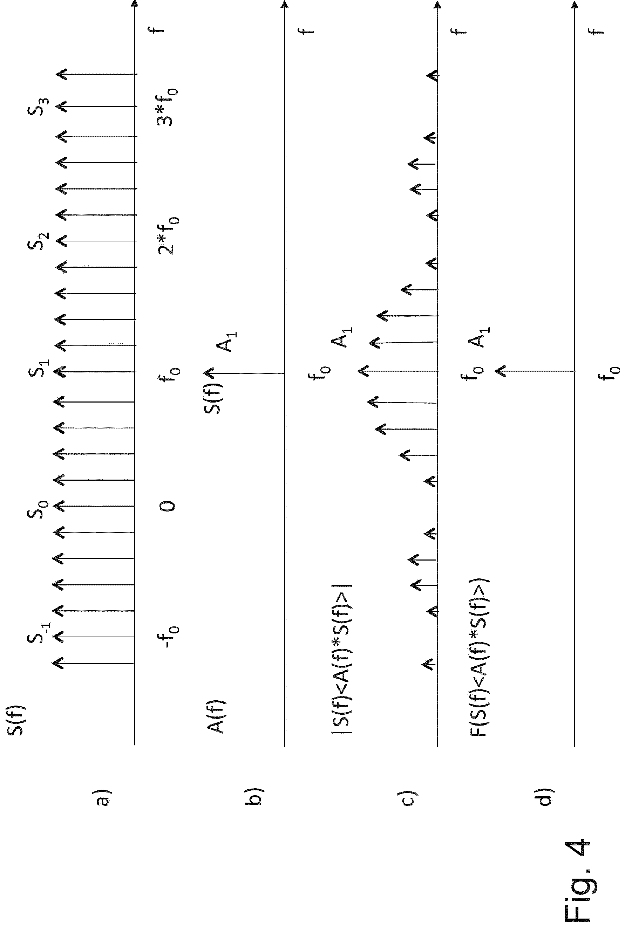

Verzichtet man jedoch auf die Orthogonalität der Wavelet-Signale s$_{i,j}$(t) des Wavelet-Generators (WG) zueinander, so sprechen immer mehrere i,j-Kanäle an. Dies ist in Figur 4a dargestellt. Hierbei sind die S$_{-1}$ bis S$_3$ aus Figur 3 nochmals eingezeichnet. Die zwischen den die S$_{-1}$ bis S$_3$ aus Figur 3 liegenden Signalkomponenten des Spektrums sind zusätzliche Wavelet-Signale s$_{i,j}$(t), wobei die Signale S$_{-1}$ bis S$_3$ aus Figur 3 ebenfalls zu diesen Wavelet-Signalen

$s_{i,j}(t)$ gehören. Sind die Wavelet-Signale $s_{i,j}(t)$ dichter zueinander im Frequenzbereich erzeugt (Figur 4a), so sprechen bei Korrelation mit einem einzelnen Signal (Figur 4b) immer einige Seitenkanäle mit an (Figur 4c). In dem Beispiel ergibt sich eine Empfindlichkeitshüllkurve ähnlich dem Betrag einer si(f) Funktion. Die Korrelation zu genau einem Wavelet-Signal $s_{j,j}(t)$ist bei einem Verlust der Orthogonalität also nicht mehr eindeutig. Dies ist der Kern des zu lösenden Problems.

Es ist somit Aufgabe der vorliegenden Erfindung, die im Stand der Technik bekannten Probleme der Erkennung einzelner Objekte bei Vorhandensein mehrerer Objekte weiter zu verbessern. Es ist somit das eigentliche Ziel der Erfindung, eine Erkennung mehrerer Objekte innerhalb einer optischen Übertragungsstrecke zu ermöglichen, ohne dass die Objekte sich in bestimmten räumlichen Bereichen befinden müssen, um getrennt werden zu können.

Gelöst wird die Aufgabe durch ein Sensorsystem mit den Merkmalen der Ansprüche 1 und 2.

Die bekannten Systeme versuchen die obigen Probleme und das Erkennen einzelner Objekte durch eine Orthogonalisierung mittels Zeitschlitzen zu lösen. Gemäß der vorliegenden Erfindung wird - auch bei nicht orthogonalen Wavelet-Signalen $s_{i,j}(t)$ (Wavelet-Satz) - ein Signal, das ein Objekt repräsentiert und das mit einem einzigen der Wavelet-Signale $s_{i,j}(t)$ (Wavelets) korreliert wird, eindeutig wieder gefunden (Figur 4d). Die Erfindung, die nicht mehr an Zeitschlitze gebunden ist, ermöglicht somit eine höhere Auflösung als Systeme im Stand der Technik. Die Erfindung ist also insbesondere im Gegensatz zum Stand der Technik in der Lage, mit nicht-orthogonalen Basis-Signalen, also einer untereinander nicht-orthogonalen Signal-Matrix $S_{i,j}$ des Wavelet-Generators (WG) bestehend aus den Wavelet-Signalen $s_{i,j}(t)$ zu arbeiten.

Bei der Erfindung handelt es sich um ein Sensorsystem zur Erkennung mehrerer Objekte in einer Übertragungsstrecke. Diese Übertragungsstrecke besteht typischerweise aus einer ersten Übertragungsstrecke und einer zweiten Übertragungsstrecke. Die Objekte in der Übertragungsstrecke befinden sich typischerweise zwischen der ersten Übertragungsstrecke und der zweiten Übertragungsstrecke. Eine der Übertragungsstrecken kann dabei die Länge Null haben. Auch kann eine der Übertragungsstrecken selbst das Objekt repräsentieren, das vermessen werden soll. Die Übertragungsstrecken befinden sich zwischen dem Sender und einem Empfänger. Die Anordnung aus Figur 2 entspricht also insoweit dem Stand der Technik.

In der folgenden Beschreibung wird zwar vorauseilend an verschiedenen Stellen auf die Figuren zum besseren Verständnis bereits Bezug genommen, diese werden aber in der Figurenbeschreibung nochmals tiefergehend erläutert. Die Beschreibung ist also in ihrer Verallgemeinerung zu verstehen und nicht durch die dargestellten Elemente beschränkt.

Das erfindungsgemäße Sensorsystem umfasst mindestens einen Sender, der mit einem Speisesignal (S5) angesteuert wird und daraufhin ein bekanntes Sendesignal (S21) in die erste Übertragungsstrecke (I1) hinein sendet. Nach Durchgang durch mindestens einen Teil der ersten Übertragungsstrecke und Reflexion an einem Objekt oder Transmission durch ein Objekt gelangt das nun modifizierte Sendesignal über die zweite Übertragungsstrecke als modifiziertes Empfangssignal S22(t) zu dem Empfänger. Dabei weist das modifizierte Empfangssignal S22(t) einen modifizierten Empfangssignalanteil (S22e(t)) auf. Dieser modifizierte Empfangssignalanteil S22e(t) ist die Signalkomponente des modifizierten Sendesignals, die auf die Wirkungen der Transmission bzw. der Reflektion zurückzuführen ist. Da sie Teil des modifizierten Empfangssignals S22(t) ist, ist sie in den Zeichnungen nicht eingezeichnet.

Aus dem Stand der Technik ist bekannt, dass der Empfänger (D) des Sensorsystems das von dem Sender (H) ausgesandte Sendesignal (S21) nach Modifikation durch Übertragungsstrecken (I, I1, I2) und Objekte (O) in den Übertragungsstrecken (I) empfängt. Typischerweise wird das Signal während dieser Übertragung an mindestens einem Objekt (O) reflektiert oder durch dieses Objekt hindurch transmittiert. Das reflektierte oder transmittierte Empfangssignal (S22) enthält dabei den modifizierten Empfangssignalanteil (S22e(t)), der das Echo-Signal repräsentiert, aus dem auf das Objekt und seine Entfernung oder Position geschlossen werden kann. Die erfindungsgemäße Vorrichtung kann daher auch diesen Empfangssignalanteil (S22e(t)) separieren.

Das Empfängerausgangssignal (S0(t)), das der Empfänger (D) ausgibt, enthält daher als Signalkomponente des Empfängerausgangssignals (S0(t)) einen modifizierten Ausgangssignalanteil (S0e(t)), der mit dem besagten modifizierten Empfangssignalanteil (S22e(t)) des Empfangssignals (S22(t)) korrespondiert. Diese Signalkomponente des Empfängerausgangssignals (S0(t)) ist als Signalanteil nicht in den Zeichnungen eingezeichnet. Sie korrespondiert mit dem modifizierten Empfangssignalanteil S22e(t) des transmittierten oder reflektierten Empfangssignals (S22).

Das erfindungsgemäße Sensorsystem umfasst des Weiteren eine erste Verarbeitungseinheit, die eine Linearform (LF) zweier Signale bildet. Bei diesen beiden Signalen handelt es sich zum ersten um ein Verarbeitungszwischensignal, das das Empfängerausgangssignal (S0) umfasst, oder um ein kompensiertes Empfängerausgangssignal (S1(t)) und zum zweiten um wenigstens ein Basissignal $s_{i,j}(t)$ (Wavelet). Die Verarbeitungseinheit kann beispielsweise einen Addierer A1 oder ein anderes Element umfassen, das eine Addition ausführt. Ist kein addierendes Element vorhanden, kann das Verarbeitungszwischensignal bzw. das kompensierte Empfängerausgangssignal S1(t) mit dem Empfängerausgangssignal (S0(t)) des Empfängers (D) identisch sein.

Durch die Berechnung der Linearform (LF) in der ersten Vorrichtung werden die Ausgangssignalanteile separiert. Dabei wird typischerweise für jedes Basissignal $s_{i,j}(t)$ durch eine zugehörige Linearform (LF) aus dem Eingangssignal der Verarbeitungseinheit (beispielsweise das Verarbeitungszwischensignal oder das kompensierte Empfängerausgangssignal S1(t)) ein Signal einer Regelwert-Matrix ($YI_{i,j}$) in Form von entsprechenden Regelwert-Signalen ($yi_{i,j}(t)$)

erzeugt. Dies ist natürlich nur sinnvoll, wenn zumindest eines der Regelwert-Signale ($yi_{i,j}(t)$) von Null verschieden ist.

Mindestens eines der Regelwert-Signale ($yi_{i,j}(t)$) oder ein daraus abgeleitetes Signal ($xi_{i,j}(t)$, $zi_{i,j}(t)$, $nf_{i,j}(t)$, $inf_{i,j}(t)$, $S4_{i,j}(t)$, $S6_{i,j\_3}(t)$ , $S6_{i,j\_5}(t)$) und/oder ein aus diesen Signalen abgeleitetes Signal ist erfindungsgemäß mindestens ein Maß für eine Eigenschaft oder einen Abstand eines Objekts in der Übertragungsstrecke zum Sensorsystem oder ein Maß für die Eigenschaft der Übertragungsstrecke (I) oder Teile der Übertragungsstrecke, beispielsweise der ersten oder zweiten Übertragungsstrecke (I1, I2). Somit lässt sich mit dem erfindungsgemäßen System beispielsweise auch der Transmissionsgrad eines Materials, beispielsweise einer Flüssigkeit, die die Übertragungsstrecke bildet, bestimmen.

Im Gegensatz zum Stand der Technik verfügt das erfindungsgemäße Sensorsystem zusätzlich über zumindest einen nicht-linearen Filter (NLF). Dieser Filter wandelt typischer Weise alle oder zumindest einen Teil dieser Regelwert-Signale ($yi_{i,j}(t)$) (oder andere aus diesen Regelwert-Signalen abgeleitete andere mögliche Eingangssignale des nicht-linearen Filters (NLF) ($y_{i,j}(t_n)$, $x_{i,j}(t)$, $z_{i,j}(t)$), die später erläutert werden) zu Ausgangssignalen ($nf_{i,j}(t)$) des nicht-linearen Filters (NLF) (NLF-Ausgangssignale) um. Dabei selektiert er beispielsweise durch einen nicht-linearen Prozess einige wenige der Regelwert-Signale ($yi_{i,j}(t)$). Alternativ können auch andere aus diesen Regelwert-Signalen abgeleitete Eingangssignale des nicht-linearen Filters (NLF-Eingangssignale), wie beispielsweise $y_{i,j}(tn)$, $x_{i,j}(t)$, $z_{i,j}(t)$, die später erläutert werden, selektiert werden. Der nichtlineare Filter zeichnet sich dabei dadurch aus, dass für zwei Signale A(t) und B(t) und bezüglich eines komplexen Faktors $\alpha$ bezüglich der Filterfunktion NLF() des nichtlinearen Filters (NLF) gilt:

$$\alpha * NLF(A) \neq NLF(\alpha * A(t))$$

und/oder

$$NLF(A(t)) + NLF(B(t)) \neq NLF(A(t) + B(t))$$

Natürlich muss das Sensorsystem mindestens eine Einheit (z.B. einen Wavelet-Generator WG) umfassen, die zumindest ein Speisesignal (S5) zur Speisung des Senders erzeugt. Ebenso muss das Sensorsystem mindestens eine Einheit umfassen, die ein Kompensatorspeisesignal (S3) zur Speisung eines Kompensators bzw. Kompensationssenders (K) erzeugt.

Es bestehen dabei grundsätzlich zwei Möglichkeiten für die Regelung der Sensorsystemstabilität, die gemischt werden können. Zum Einen kann das Sendesignal (S5) geregelt werden und zum Anderen das Kompensatorspeisesignal (S3). Eine Kombination von beiden Verfahren nach einem Regelalgorithmus ist natürlich immer möglich.

Somit umfasst bevorzugt das Sensorsystem eine Einheit, die eine Senderücktransformation (SRT) durchführt, die aus zumindest einem Teil der NLF-Ausgangssignale ($nf_{i,j}(t)$) oder aus diesen abgeleiteten Signalen ($inf_{i,j}(t)$, $S4_{i,j}(t)$), die später erläutert werden, das Speisesignal (S5) erzeugt und/oder eine Einheit, die eine Kompensationsrücktransformation (KRT) durchführt, die aus zumindest einem Teil der NLF-Ausgangssignale ($nf_{i,j}(t)$) oder aus diesen abgeleiteten Signalen ($inf_{i,j}(t)$, $S4_{i,j}(t)$), die später erläutert werden, ein Kompensatorspeisesignal (S3) erzeugt.

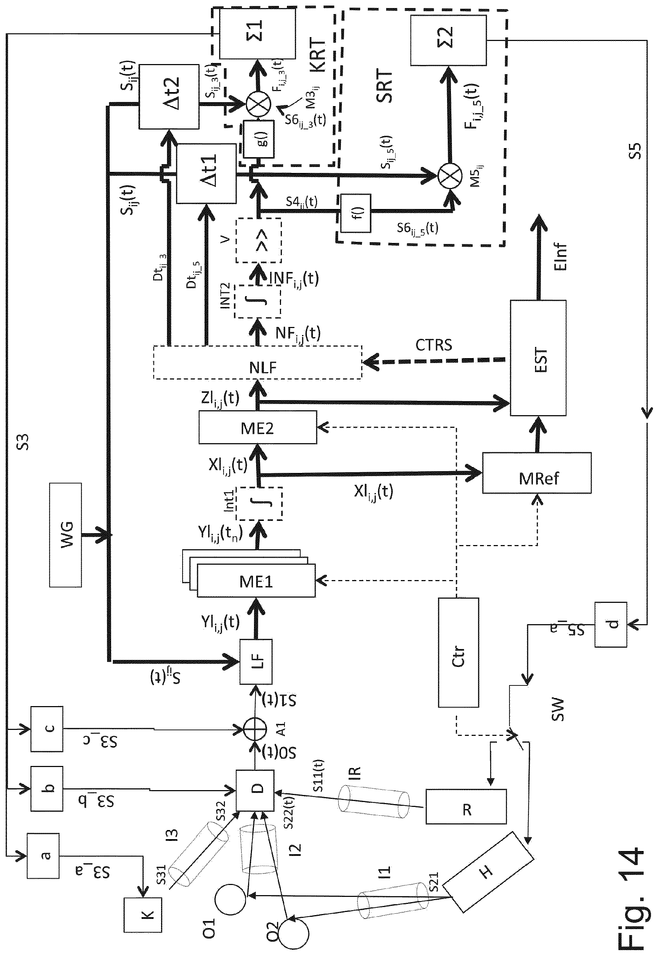

Wie bei anderen Halios-System ist eine Rückführung des Kompensatorspeisesignals (S3) Teil des Systems. Bei der Rückführung kommt es nur darauf an, dass der Kopplungspfad der Rückkopplung im Wesentlichen bekannt oder bestimmbar ist. Für diese Rückführung bestehen grundsätzlich wenigstens drei Möglichkeiten. Die Möglichkeiten sind alle beispielhaft in Figur 14 gezeigt. Dabei wird ausdrücklich daraufhin gewiesen, dass jede der Kompensationsmöglichkeiten einzeln oder in einer beliebigen (hier nicht dargestellten) Kombination auftreten kann. Im Einzelnen sind die drei Möglichkeiten:

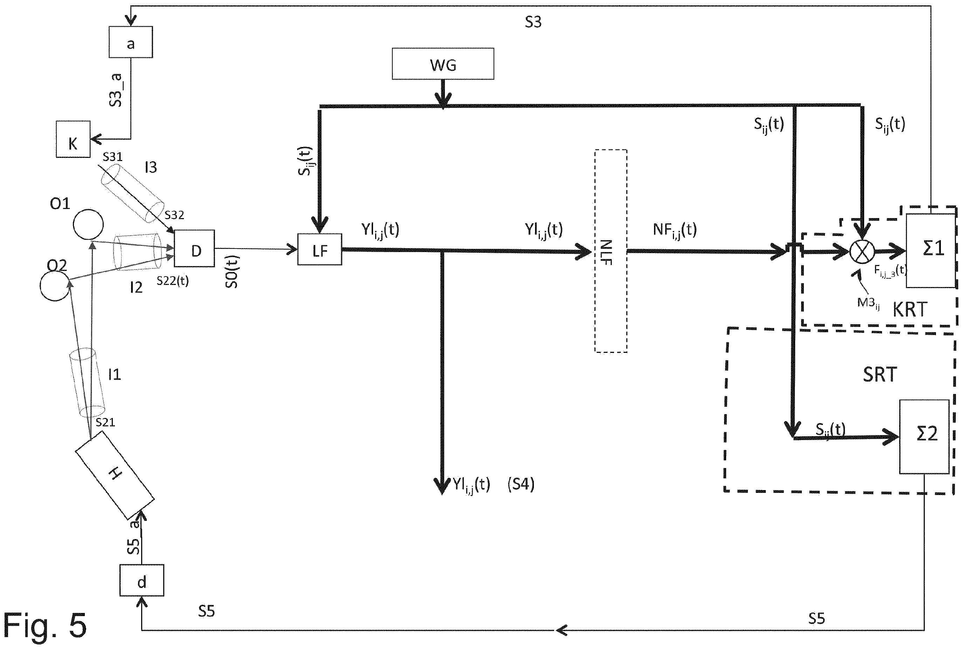

Zum Ersten kann die Rückführung des Kompensatorspeisesignals (S3) als erstes Kompensatorsignal (S3_a) (siehe z.B. Figur 5) verstärkt und/oder gefiltert mit einer ersten Kompensationsfilterfunktion a(S3) und ggf. mit einem Offset versehene über einen Kompensationssender (K) und eine dritte Übertragungsstrecke (I3), wie bereits beschrieben, summierend überlagernd oder multiplizierend überlagernd im Empfänger (D) erfolgen. Typischerweise erfolgt diese Überlagerung im Empfänger D summierend, wenn dieser linear arbeitet. Sofern dieser eine nicht-lineare Empfindlichkeitskennlinie besitzt, können beispielsweise höhere Terme einer Taylor-Entwicklung ausgenutzt werden, um eine Multiplikation oder komplexere Verknüpfungen zu realisieren. Die nachfolgende Linearform (LF) wird dann beispielsweise nicht mit einem Signal $s_{i,j}(t)$ sondern mit einem Signal $s_{i,j}(t)^2$ durchgeführt.

Zum Zweiten kann die Rückführung des Kompensatorspeisesignals (S3) als zweites Kompensatorsignal (S3_b) (siehe z.B. Figur 14) verstärkt und ggf. mit einem Offset versehen und/oder gefiltert mit einer zweiten Kompensationsfilterfunktion b(S3) summierend überlagernd oder multiplizierend überlagernd direkt in den Empfänger (D) hinein erfolgen.

Zum Dritten kann die Rückführung des Kompensatorspeisesignals (S3) als drittes Kompensatorsignal (S3_c) (siehe z.B. Figur 14) verstärkt und ggf. mit einem Offset versehen und/oder gefiltert mit einer dritten Kompensationsfilterfunktion c(S3) summierend in einem Addierer (A1) mit dem Empfängerausgangssignal S0(t) zum kompensierten Empfängerausgangssignal S1(t) erfolgen.

Wie bei allen Halios-System werden dabei die Vorzeichen und Verstärkungen und Übertragungsfunktionen aller Elemente so gewählt, dass sich im Regelkreis des Sensorsystems Stabilität ergibt. Hierunter versteht der Fachmann, dass das System so geregelt wird, dass bei idealen Verhältnissen am Ausgang des Empfänger im Wesentlichen (bis auf einen Regelfehler oder das Systemrauschen) ein Gleichsignal anliegt, bevorzugt ein Nullsignal. Typischerweise ist dann mindestens ein Signal $yi_{i,j}(t)$ der Regelwert-Matrix $YI_{i,j}$ und/oder ein Signal $(xi_{i,j}(t), zi_{i,j}(t), nf_{i,j}(t), inf_{i,j}(t), S4_{i,j}(t))$ einer der daraus abgeleiteten Matrizen $(XI_{i,j}, ZI_{i,j}, NF_{i,j}, INF_{i,j}, S4_{i,j})$ eine charakteristische Größe für wenigstens einen vom n x m möglichen Ausgangssignalanteilen.

Ein weiteres Charakteristikum des erfindungsgemäßen Sensorsystems ist, dass das Sensorsystem über einen Wavelet-Generator (WG) verfügt, der Wavelets in der beispielhaften Definition des Buches von Stephane Mallat, "A Wavelet Tour of Signal Processing" Academic Press London 1997 erzeugt.

Danach erzeugt beispielsweise der Wavelet-Generator (WG) aus mindestens einem Ur-Wavelet $(s_{1,1}(t))$ das Basissignal, das periodisch mit einer Ur-Wavelet-Periode (P) ist, wobei eine Ur-Wavelet-Periode (P) die Länge unendlich haben kann.

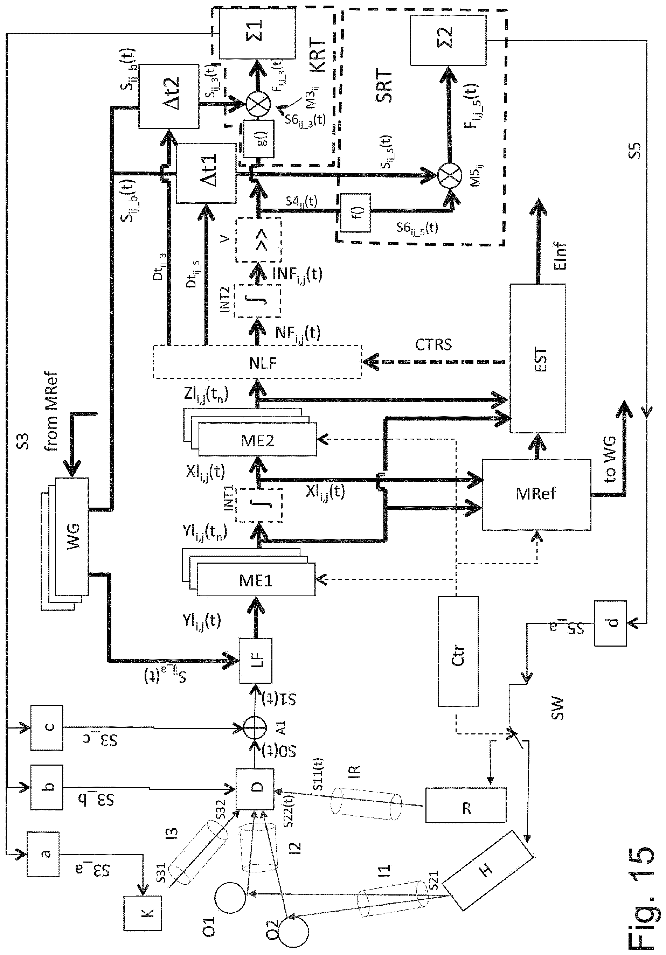

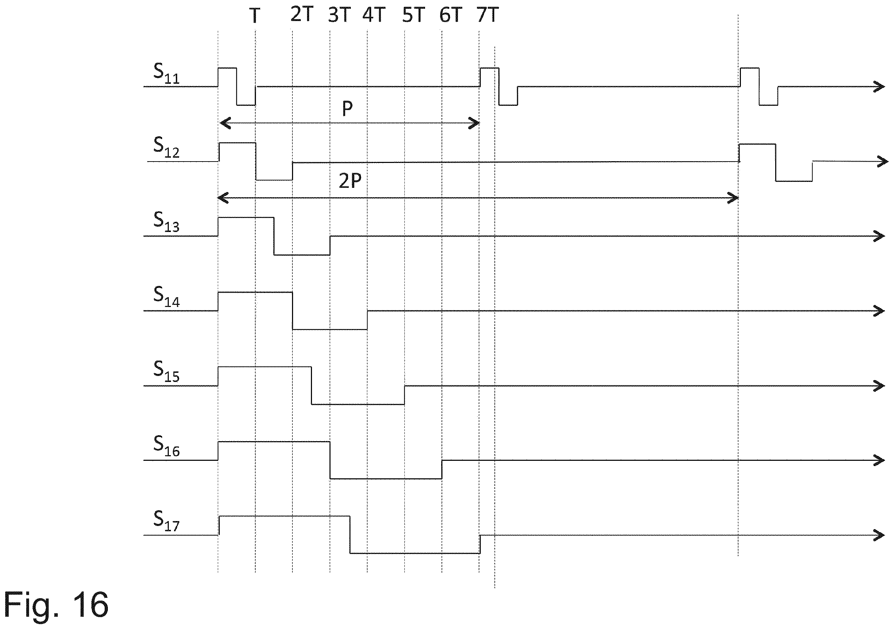

Bei mehreren Wavelet-Generatoren, beispielsweise zwei Wavelet-Generatoren, erzeugen diese aus mindestens einem - möglicherweise Wavelet-Generator spezifischen - Ur-Wavelet $(s_{1,1\_a}(t)\, s_{1,1\_b}(t))$ (siehe z.B. Figur 15) ein jeweiliges Basissignal, das periodisch mit einer (möglicherweise spezifischen) Ur-Wavelet-Periode (Pa, Pb) ist, wobei auch hier eine oder mehrere dieser Ur-Wavelet-Perioden (Pa, Pb) die Länge unendlich haben können. Die Wavelets sind hierdurch zueinander zeitlich um den Abstand der Periode P bzw. Pa und Pb beabstandet, wie in Figur 16 gezeigt.

Neben diesem Abstand weisen aber die Wavelets auch noch eine zeitliche Länge T bzw. Ta, Tb auf. (siehe Figur 16). Typischer Weise wird daher das Sensorsystem mit einer Systemperiode der Periodenlänge (T, Ta, Tb) oder einer gemeinsamen Systemperiodendauer, die ein kleinstes gemeinsames Vielfaches dieser Periodenlängen ist. Die Periodenlänge (T, Ta, Tb) braucht dabei nicht für jede Periode gleich sein. Auch kann die Periodenlänge (T, Ta, Tb) einen beliebigen Wert haben, der den Wert unendlich einschließt und von der Periodenlänge 0 verschieden ist.

Bevorzugt erzeugt der Wavelet-Generator (WG) n x m aus dem Ur-Wavelet generierte periodische Tochter-Wavelets $(s_{i,j}(t), si,j,j\_a(t)\, si,j_{i,j\_b}(t)$ mit $1<i<n, 1<j<m)$ oder zumindest eine Teilmenge dieser Tochter-Wavelets $(s_{i,j}(t), s_{i,j\_a}(t), s_{i,j\_b}(t)$ mit $1<i<n, 1<j<m)$, die beispielsweise gegenüber dem jeweiligen Ur-Wavelet $(s_{1,1}, s_{1,1\_a}(t)\, s_{1,1\_b}(t))$ zeitlich um einen Faktor gestaucht oder gestreckt sind. Dieser Faktor kann beispielsweise der Faktor 1/j oder j, aber auch 1 oder eine reelle Zahl sein. Gleichzeitig können die Tochter-Wavelets um einen zweiten Faktor gegenüber dem korrespondierenden Wavelet $s_{1,j}(t)$ bzw. $s_{1,j\_a}(t)$ bzw. $s_{1,j\_b}(t)$ verzögert sein. Dieser zweite Faktor kann unter anderem beispielsweise der Faktor (n-1)*T/j bzw. (n-1)*Ta/j bzw. (n-1)*Tb/j oder (n-1)*T*j bzw. (n-1)*Ta*j bzw. (n-1)*Tb*j sein. Ein alternativer zweiter Faktor wäre beispielsweise der Faktor (n-1)*T bzw. (n-1)*Ta bzw. (n-1)*Tb.

Die Tochter-Wavelet-Periode kann bevorzugt ebenfalls angepasst werden. Eine typische Tochter-Wavelet-Periode hat beispielsweise eine Periodenlänge von P/j bzw. von Pa/j bzw. von Pb/j oder P*j bzw. Pa*j bzw. bzw. Pb*j. Hinsichtlich der Theorie der Wavelets sei hier, wie auch an anderer Stelle, auf die einschlägige Literatur, beispielsweise Stephane Mallat, "A Wavelet Tour of Signal Processing" Academic Press London 1997 verwiesen. Dies sind also nur Beispiele der vielfältigen möglich Wavelets, die hier denkbar sind.

Ein wesentliches Element des Sensorsystems ist die Verarbeitungseinheit, die die notwendige Linearform (LF) erzeugt. Mit Hilfe der jeweils stets gleichartigen Linearform (LF) wird durch die Verarbeitungseinheit das Verarbeitungszwischensignal, welches das Empfängerausgangssignal oder das kompensierte Empfängerausgangssignal umfasst, mit jeweils einem der Wavelets $(s_{i,j}(t)\, s_{i,j\_a}(t))$ verknüpft (Verknüpfung). Das Ergebnis dieser n x m Verknüpfungen ist eine Regelwert-Matrix in Form der ersten Regelwert-Signale $yi_{1\_i,j}$. In den Zeichnungen ist als Ausgang der Linearform stets nur das Regelwert-Signal $yi_{i,j}(t)$ als Regelwertmatrix $YI_{i,j}$ eingezeichnet. Dieses repräsentiert eine oder mehrere der hier und im Folgenden erläuterten möglichen Regelwert-Signale $yi_{1\_i,j}$ bis $yi_{6\_i,j}$.

Eine bevorzugte alternative Form der Verknüpfung, die ebenfalls eine Linearform ist, ist eine einfache Multiplikation. Die Verarbeitungseinheit verknüpft mit Hilfe einer Multiplikation das Verarbeitungszwischensignal mit jeweils einem der Wavelets $s_{i,j}(t)$. Das Ergebnis dieser n x m möglichen Verknüpfungen ist wieder eine (zweite) Regelwert-Matrix $YI_{2\_i,j}$ in Form der zweiten Regelwert-Signale $yi_{2\_i,j}(t)$.

Eine bevorzugte Erweiterung dieser Methode ist die Bildung der Linearform mit Hilfe jeweils einer Multiplikation gefolgt von einer Filterung oder Integration. Dabei wird zunächst das Verarbeitungszwischensignal mit jeweils einem der besagten Wavelets $s_{i,j}(t)$ multipliziert und anschließend mittels eines Filters, insbesondere eines Tiefpasses, gefiltert oder mittels eines Integrators integriert. Dabei ist das Ergebnis dieser n x m möglichen Verknüpfungen wieder eine (dritte) Regelwert-Matrix $YI_{3\_i,j}$ in Form der dritten Regelwert-Signale $yi_{3\_i,j}(t)$.

Genaugenommen ist die zuvor beschriebene Form der Linearform (LF) nichts anderes als ein Skalar-Produkt. Somit kann auch mit Hilfe jeweils eines stets gleichartigen Skalar-Produkts das Verarbeitungszwischensignal (Empfängerausgangssignal oder das kompensierte Empfängerausgangssignal) mit jeweils einem der Wavelets $s_{i,j}(t)$ verknüpft werden. In diesem Falle ist das Ergebnis dieser n x m möglichen Verknüpfungen eine (vierte) Regelwert-Matrix $YI_{4\_i,j}$ in Form der vierten Regelwert-Signale $yi_{4\_i,j}(t)$.

Als vorletztes sei an dieser Stelle nochmals erwähnt, dass bevorzugt jeweils ein stets gleichartiger Korrelationsfilter das Verarbeitungszwischensignal wiederum mit jeweils einem der Wavelets $s_{i,j}(t)$ verknüpfen kann. Das Ergebnis dieser n x m möglichen Verknüpfungen ist in diesem Falle eine (fünfte) Regelwert-Matrix $YI_{5\_i,j}$ in Form der fünften Regelwert-Signale $yi_{5\_i,j}(t)$.

Als letztes sei an dieser Stelle nochmals erwähnt, dass bevorzugt jeweils ein stets gleichartiger Matched-Filter das Verarbeitungszwischensignal (Empfängerausgangssignal oder das kompensierte Empfängerausgangssignal) mit jeweils einem der Wavelets $s_{i,j}(t)$ verknüpfen kann. Hierbei müssen die Wavelets $s_{i,j}(t)$ allerdings vordefiniert sein. Der Matched-Filter ist also jeweils so konstruiert, dass er nur das jeweilige Wavelet $s_{i,j}(t)$ (oder dessen Zusammenstellungen) durchlässt und die anderen Wavelets (oder Zusammenstellungen) derselben sperrt. Das Ergebnis dieser n x m möglichen Verknüpfungen ist in diesem Falle eine (sechste) Regelwert-Matrix $YI_{6\_i,j}$ in Form der sechsten Regelwert-Signale $yi_{6\_i,j}(t)$.

Wie oben bereits mehrfach ausgeführt, ist es in der Praxis typischer Weise nicht notwendig, dass alle möglichen n x m Verknüpfungen oder n x m Multiplikationen oder n x m Skalar-Produkte etc. notwendiger Weise tatsächlich ausgeführt werden müssen. So ist typischer Weise auch nicht jeder der n x m möglichen Korrelationsfilter vorhanden. Es kann also sein, dass einzelne der n x m Signale zu Null gesetzt werden oder weggelassen werden. Die Operationen können statt durch Raummultiplex durch Zeitmultiplex durch eine oder mehrere Teilvorrichtungen durchgeführt werden.

Zur Vereinfachung wird im Folgenden allgemein von einer Regelwertmatrix $YI_{i,j}$ bzw. einem Regelwertsignal $yi_{i,j}(t)$ gesprochen, wobei beide Bezeichnungen das gleiche bezeichnen. Es ist damit stets eine der zuvor beschriebenen Formen $yi_{1\_i,j}(t)$, $yi_{2\_i,j}(t)$, $yi_{3\_i,j}(t)$, $yi_{4\_i,j}(t)$, $yi_{5\_i,j}(t)$, $yi_{6\_i,j}(t)$ oder eine Kombination derselben gemeint, ohne diese näher zu spezifizieren. Zur weiteren Vereinfachung wird häufig anstatt von $yi_{i,j}(t)$ oder $s(t)$ lediglich von $yi_{i,j}$ oder $s$ gesprochen, wobei das gleiche gemeint ist. Dies betrifft auch die Ansprüche. Zu den Signalen $yi_{1\_i,j}$, $yi_{2\_i,j}$, $yi_{3\_i,j}$, $yi_{4\_i,j}$, $yi_{5\_i,j}$, $yi_{6\_i,j}$ korrespondieren die Regelwertmatrizen $YI_{1\_i,j}$, $YI_{2\_i,j}$, $YI_{3\_i,j}$, $YI_{4\_i,j}$, $YI_{5\_i,j}$, $YI_{6\_i,j}$.

In vielen technischen Realisierungen kommt es vor, dass das erfindungsgemäße Sensorsystem einen erster Speicher (ME1) einschließt, der bevorzugt mindestens eines der Regelwert-Signale ($yi_{i,j}(t)$) für zumindest einen Speicherzeitpunkt ($t_n$) enthält.

Eine andere Realisierung weist bevorzugt mindestens einen ersten Integrator (INT1) auf, der mindestens eines der Regelwert-Signale ($yi_{i,j}(t)$) und/oder mindestens eines der gespeicherten Regelwert-Signale ($yi_{i,j}(t_n)$) integriert oder eine äquivalente Funktion ausführt. Dessen Ausgangssignalmatrix ($XI_{i,j}(t)$) wird im folgenden auch als integrierte Regelwert-Signale ($xi_{i,j}(t)$) der ersten Integrationseinheit (INT1) bezeichnet. Der Integrator (INT1) hat dabei bevorzugt die Aufgabe, die Regelfehler zu minimieren.

In einer weiteren bevorzugten Realisierung weist das erfindungsgemäße System mindestens einen zweiten Speicher (ME2) auf, der beispielsweise mindestens eines der Regelwert-Signale ($yi_{i,j}(t)$) und/oder eines der gespeicherten Regelwert-Signale ($yi_{i,j}(t_n)$) und/oder eines der integrierten Regelwert-Signale ($xi_{i,j}(t)$) für zumindest einen Speicherzeitpunkt ($t_n$) enthält.

Das erfindungsgemäße nicht-lineare Filter (NLF), der das erfindungsgemäße System von den Systemen im Stand der Technik unterscheidet, kann verschiedene Eingangssignale haben. Eines dieser Eingangssignale kann beispielsweise sein:

- ein Regelwert-Signal ($yi_{i,j}(t)$) der Regelwert-Matrix $YI_{i,j}$,

- ein gespeichertes Regelwert-Signal ($yi_{i,j}(t_n)$) (Ausgangssignal), das zu einem Speicherzeitpunkt $t_n$ in der ersten Speichereinheit ME1 gespeichert wird,

- ein integriertes Regelwert-Signal ($xi_{i,j}(t)$) als Ausgangssignal der ersten Integrationseinheit (INT1),

- ein Ausgangssignal (Regelwert-Signal) ($zi_{i,j}(t_m)$) des zweiten Speichers (ME2), das zu einem Speicherzeitpunkt $t_m$ in dem zweiten Speicher (ME2) gespeichert wird.

In einer besonderen Ausführung des erfindungsgemäßen Systems weist der nicht-lineare Filter (NLF) Ausgangssignale ($nf_{i,j}(t)$) auf, die Teil der Ausgangssignalmatrix ($NF_{i,j}$) des nicht-linearen Filters (NLF) sind. Von den Ausgangssignalen ($nf_{i,j}(t)$) des nicht-linearen Filters (NLF) kann beispielsweise eines oder mehrere in einem zweiten Integrator (INT2) integriert werden. Dieses integrierte Ausgangssignal ($inf_{i,j}(t)$) des nicht-linearen Filters (NLF) ist wiederum Teil der integrierten Ausgangssignalmatrix ($INF_{i,j}$) der zweiten Integratoreinheit (INT2). Auch diese zweite Integratoreinheit (INT2) hat bevorzugt die Aufgabe, den Regelfehler zu minimieren.

In einer weiteren bevorzugten Ausführungsform des Sensorsystems wird beispielsweise eines der Ausgangssignale ($nf_{i,j}(t)$) des nicht-linearen Filters (NLF) und/oder eines der integrierten Ausgangssignale des Filters ($inf_{i,j}(t)$) durch mindestens einen Verstärker (V) verstärkt. Dessen Ausgangssignale ($S4_{i,j}(t)$) sind wiederum Teil der Ausgangssignalmatrix der Verstärkereinheit (V).

Das erfindungsgemäße Sensorsystem hat eine Rücktransformations-Einheit. In einer weiteren bevorzugten Ausführungsform des Sensorsystems umfasst die Rücktransformations-Einheit eine Senderücktransformation (SRT) mittels der das Speisesignal (S5) des Senders erzeugt wird. Ein Multiplikator ($M5_{ij}$) (Multiplizereinheit) multipliziert ein mit einer Filterfunktion (f()) in einem Filter gefiltertes Ausgangssignal ($nf_{i,j}(t)$) des nicht-linearen Filters (NLF) oder ein daraus abgeleitetes Signal ($INF_{i,j}(t), S4_{i,j}(t)$) mit einem zugeordneten Wavelet ($s6_{i,j\_5}$) zu einem Rohsendesignal ($F_{i,j\_5}(t)$). Das Ausgangssignal ($nf_{i,j}(t)$) des nicht-linearen Filters (NLF) kann integriert ($INF_{i,j}(t)$) und/oder verstärkt ($S4_{i,j}(t)$) sein. Die Wavelets ($s_{i,j}(t)$) können beispielsweise verzögert sein. Ein zweiter Summierer ($\Sigma 2$) erzeugt bevorzugt aus allen diesen Rohsendesignalen ($F_{i,j\_5}(t)$) durch Summierung das Speisesignal (S5). Es ist für den Fachmann offensichtlich, dass in dem Fall, wenn die Filterfunktion f() eine Konstante für ein einzelnes $s6_{i,j\_5}(t)$ liefert, und alle anderen $s6_{k,l\_5}(t)$ gleich null gesetzt werden, das Sendesignal S5 gleich dem jeweiligen $s6_{i,j\_5}(t)$ Signal ist.

Bevorzugt können also folgende Signale in der Senderücktransformation (SRT) verarbeitet werden:
Ein Eingangssignal des Filters der Senderücktransformation (SRT) kann das Verstärkerausgangssignal ($S4_{i,j}(t)$) und/oder das integrierte Ausgangssignal ($inf_{i,j}(t)$) und/oder das Ausgangssignal ($nf_{i,j}(t)$) des nicht-linearen Filters (NLF) sein. Das jeweils gefilterte Signal ($S6_{i,j\_5}(t)$) wird dem Multiplikator ($M5_{ij}$) zugeführt. Hier wird es mit einem zugeordneten Wavelet ($S_{i,j}(t)$, $S_{i,j\_b}(t)$ oder verzögerten Wavelet ($S_{i,j\_5}(t)$ multipliziert.

Beispielsweise kann also bevorzugt ein mit einer ersten Filterfunktion $f(S4_{i,j}(t))$ gefiltertes Verstärkerausgangssignal ($S4_{i,j}(t)$) und/oder bevorzugt ein mit einer zweiten Filterfunktion $f(inf_{i,j}(t))$ gefiltertes integriertes Ausgangssignal ($inf_{i,j}(t)$) des nicht-linearen Filters (NLF) und/oder beispielsweise bevorzugt ein mit einer dritten Filterfunktion $f(nf_{i,j}(t))$ gefiltertes Ausgangssignal ($nf_{i,j}(t)$) des nichtlinearen Filters (NLF) mit einem zugeordneten Wavelet ($s_{i,j}(t)$, $s_{i,j\_b}(t)$ (bevorzugt) multipliziert werden oder mit einem zugeordneten verzögerten Wavelet ($s_{i,j\_5}(t)$ (siehe z.B. Figur 15) multipliziert werden. Es wird so das Rohsendesignal ($F_{i,j\_5}(t)$), auch Speisevorsignal genannt, gebildet.

Die erste Filterfunktion $f(S4_{i,j}(t))$ und/oder die zweite Filterfunktion $f(inf_{i,j}(t))$ und/oder die dritte Filterfunktion $f(nf_{i,j}(t))$ können dabei ausdrücklich auch Konstanten sein. Auch müssen nicht alle Rohsendesignale ($F_{i,j\_5}(t)$) gebildet werden. Dies kann bedeuten, dass sie auf einen festen Wert, beispielsweise 1 oder 0, gesetzt oder weggelassen werden können.

Ähnliches gilt für die Erzeugung des Kompensatorspeisesignals S3. Die Rücktransformations-Einheit umfasst in diesem Fall bevorzugt eine Kompensationsrücktransformation (KRT) mit einer dritten Multiplizereinheit ($M3_{ij}$).

In einer weiteren bevorzugten Ausführungsform des Sensorsystems umfasst die Rücktransformations-Einheit die Kompensationsrücktransformation (KRT) mittels der das Kompensationssendesignal (S3) des Kompensators erzeugt wird.

Die der Senderrücktransformation (SRT) entsprechende Kompensationsrücktransformation (KRT) umfasst bevorzugt die dritte Multiplizereinheit ($M3_{ij}$), die bevorzugt eines der obengenannten Ausgangsignale des nicht-linearen Filters (NLF), die nun in einem Filter mit einer Filterfunktion g() statt f() gefiltert sind, mit einem zugeordneten Wavelet zu einem Rohkompensationssignal ($F_{i,j\_3}(t)$) multipliziert. Die jeweiligen Rohkompensationssignale ($F_{i,j\_3}(t)$) werden als Ausgangssignale in einem (ersten) Summierer ($\Sigma 1$) zu dem Kompensationssendesignal (S3) summiert.

Bevorzugt wird also in der dritten Multiplizereinheit ($M3_{ij}$) der Kompensationsrücktransformation (KRT) ein mit einer vierten Filterfunktion $g(S4_{i,j}(t))$ gefiltertes Verstärkerausgangssignal ($S4_{i,j}(t)$) und/oder ein mit einer fünften Filterfunktion $g(inf_{i,j}(t))$ gefiltertes integriertes Ausgangssignal des nicht-linearen Filters ($inf_{i,j}(t)$) und/oder ein mit einer sechsten Filterfunktion $g(nf_{i,j}(t))$ gefiltertes Ausgangssignal ($nf_{i,j}(t)$) des nicht-linearen Filters (NLF) bevorzugt mit typischerweise je einem zugeordneten Wavelet ($s_{i,j}(t)$) oder einem zugeordneten verzögerten Wavelet ($S_{i,j\_3}(t)$) zu dem Rohkompensationssignal $F_{i,j\_3}(t)$ multipliziert. Der erste Summierer ($\Sigma 1$) erzeugt aus allen diesen Rohkompensationssignalen ($F_{i,j\_3}(t)$) durch Summierung das Kompensationssendesignal (S3).

Die vierte Filterfunktion $g(S4_{i,j}(t))$ und/oder die fünfte Filterfunktion $g(INF_{i,j}(t))$ und/oder die sechste Filterfunktion $g(nf_{i,j}(t))$ können dabei ausdrücklich auch Konstanten sein. Auch müssen nicht alle Rohkompensationssignale ($F_{i,j\_3}(t)$) gebildet werden. Dies kann bedeuten, dass sie auf einen festen Wert, beispielsweise 1 oder 0, gesetzt oder weggelassen werden können.

Selbstverständlich kann die Rücktransformations-Einheit des erfindungsgemäßen Sensorsystems sowohl eine Senderrücktransformation (SRT) als auch eine Kompensationsrücktransformation (KRT) umfassen, die unterschiedlich sein können.

In einer weiteren bevorzugten Ausführungsform des erfindungsgemäßen Sensorsystems steuert der nicht-lineare Filter (NLF) zumindest die Verzögerung eines der Wavelets ($s_{i,j}(t)$) zu zumindest einem verzögerten ersten Wavelet ($s_{i,j\_5}(t)$) durch eine erste Verzögerungsvorrichtung ($\Delta t1$) und/oder die Verzögerung mindestens eines der Wavelets ($s_{i,j}(t)$) zu zumindest einem verzögerten zweiten Wavelets ($s_{i,j\_3}(t)$) durch eine zweite Verzögerungsvorrichtung ($\Delta t2$). Statt einer Verzögerungseinrichtung kann es sich dabei jeweils auch um einen Phasenschieber handeln. Daher wird der Begriff "Verzögerungseinrichtung" im Folgenden als Synonym für eine Einrichtung verwendet, die eine gesteuerte Verzögerung und/oder eine gesteuerte Phasenschiebung verursacht. Diese Verwendung gilt auch für die Ansprüche.

In einer weiteren bevorzugten Ausführungsform des erfindungsgemäßen Sensorsystems wird mindestens ein Speisesignal (S5) und/oder mindestens ein Kompensationssendesignal (S3) mit einem Offset versehen.

In einer weiteren bevorzugten Ausführungsform des Sensorsystems ist mindestens ein linearer Filter und/oder mindestens ein erster Integrator (INT1) im Signalpfad vor dem nicht-linearen Filter (NLF) angeordnet.

In einer weiteren bevorzugten Ausführungsform des Systems ist mindestens ein linearer Filter und/oder mindestens ein zweiter Integrator (INT2) im Signalpfad hinter dem nicht-linearen Filter (NLF) angeordnet.

Im Rahmen der Erfindung wurde erkannt, dass - im Gegensatz zum Stand der Technik - die Position der linearen Elemente nicht mehr beliebig längs der Signalkette verschoben werden kann. Vielmehr hängt deren Wirkung im erfindungsgemäßen Sensorsystem von der Positionierung vor oder hinter dem nicht-linearen Filter (NLF) ab. In der Regel ist jedoch eine Verschiebung längs des Signalpfades zwischen Empfänger und nicht-linearem Filter (NLF) für lineare Verarbeitungskomponenten, die vor dem nicht-linearen Filter (NLF) liegen, möglich. Analog ist dies auch für lineare Verarbeitungskomponenten, die zwischen dem nicht-linearem Filter (NLF) auf der einen Seite und dem Sender (H) oder dem Kompensator (K) auf anderen Seite liegen, möglich, wenn diese in dem Signalpfad nach dem nicht-linearen Filter (NLF) liegen. Für einen Fachmann wird eine Minimierung des Realisierungsaufwands bei der Positionierung ausschlaggebend sein.

In einer weiteren bevorzugten Ausführungsform des erfindungsgemäßen Sensorsystems ist die Dimension der n x m Matrizen, beispielsweise $S_{i,j}$, $YI_{i,j}$, $YIn_{i,j}$, $XI_{i,j}$, $ZI_{i,j}$, $NF_{i,j}$, $INF_{i,j}$, $S4_{i,j}$, etc., entweder

n mindestens 2 und m mindestens 1 oder
n mindestens 1 und m mindestens 2 oder
n mindestens 1 und m mindestens 1.

Im letzteren Fall muss jedoch ein Zeitmultiplex für die Verarbeitung statt des bisher beschriebenen Raummultiplexes verwendet werden. Zwischenwerte müssen bei einem Zeitmultiplex zwischengespeichert werden.

In einer weiteren bevorzugten Ausführungsform des erfindungsgemäßen Sensorsystems kann der nicht-lineare Filter (NLF) durch mindestens ein Signal mindestens einer der Regelwert-Matrizen $YI_{1\_i,j}$, $YI_{2\_i,j}$, $YI_{3\_i,j}$, $YI_{4\_i,j}$, $YI_{5\_i,j}$, $YI_{6\_i,j}$ und/oder mindestens einer der daraus abgeleiteten Matrizen $YIn_{i,j}$, $XI_{i,j}$, $ZI_{i,j}$, $M_{ref\_i,j}$ mittels eines Schätzers (EST) gesteuert werden. Bei der Signalmatrix $M_{ref\_i,j}(t)$ handelt es sich um eine Matrix mit abgespeicherten Werten mindestens einer der Regelwert-Matrizen $YI_{1\_i,j}$, $YI_{2\_i,j}$, $YI_{3\_i,j}$, $YI_{4\_i,j}$, $YI_{5\_i,j}$, $YI_{6\_i,j}$ und/oder mindestens einer der daraus abgeleiteten Matrizen $YIn_{i,j}$, $XI_{i,j}$, $ZI_{i,j}$. Die Speicherung erfolgt in dem Referenzspeicher MRef. In dem Referenzspeicher MRef werden Referenzwerte dieser Matrizen abgespeichert, die aus einer Referenzmessung gewonnen wurden.

In einer weiteren bevorzugten Ausführungsform des erfindungsgemäßen Sensorsystems ermittelt ein Schätzer auf Basis mindestens eines Signals mindestens einer der Regelwert-Matrizen $YI_{1\_i,j}$, $YI_{2\_i,j}$, $YI_{3\_i,j}$, $YI_{4\_i,j}$, $YI_{5\_i,j}$, $YI_{6\_i,j}$ und/oder mindestens einer der daraus abgeleiteten Matrizen $YIn_{i,j}$, $XI_{i,j}$, $ZI_{i,j}$, $M_{ref\_i,j}$ die wahrscheinlichen Zeitpunkte des Eintreffens der Eingangssignalanteile (SOe(t)) des Empfängerausgangssignals (S0(t)) und/oder der korrespondierenden Ausgangsignalanteile (S1e(t)) des kompensierten modifizierten Empfängerausgangssignals (S1(t)).

In einer weiteren bevorzugten Ausführungsform des erfindungsgemäßen Sensorsystems wird das Speisesignal (S5) durch gewichtete oder ungewichtete Summierung aus den Wavelet-Signalen $s_{i,j}(t)$ erzeugt oder kann aus diesen erzeugt werden.

In einer weiteren bevorzugten Ausführungsform weist das Sensorsystem einen Referenzsender (R) auf, der zumindest zeitweise mit dem Speisesignal (S5) gespeist wird und zumindest zeitweise ein Referenzsignal (S11) direkt zu dem Empfänger sendet. Dieses Referenzsignal (S11) wird bevorzugt am Empfänger (D) als Referenzempfangssignal (S0r(t)) empfangen und in der Verarbeitungseinheit (LF) weiterverarbeitet. Dabei wird in einem Referenzspeicher MRef bevorzugt zumindest ein Signal (Regelwert-Signal) mindestens einer der Matrizen $YI_{i,j}$, (auch $YI_{1\_i,j}$, $YI_{2\_i,j}$, $YI_{3\_i,j}$, $YI_{4\_i,j}$, $YI_{5\_i,j}$, $YI_{6\_i,j}$), $YIn_{i,j}$, $XI_{i,j}$ oder $ZI_{i,j}$ als Referenzinformation abgelegt. Dabei umfasst die Regelwert-Matrix $YIn_{i,j}$ die Regelwert-Signale $yi_{i,j}(t_n)$ vorzugsweise zum Zeitpunkt $t_n$. Die Zurverfügungstellung von $ZI_{i,j}$ ist zur Vereinfachung in den Zeichnungen nicht aufgeführt.

In einer weiteren bevorzugten Ausführungsform des erfindungsgemäßen Sensorsystems wird das Referenzempfangssignal (S0r(t)) in der Verarbeitungseinheit weiterverarbeitet. Bevorzugt wird mindestens eine der Regelwert-Matrizen $YI_{1\_i,j}$, $YI_{2\_i,j}$, $YI_{3\_i,j}$, $YI_{4\_i,j}$, $YI_{5\_i,j}$, $YI_{6\_i,j}$, $YIn_{i,j}$, $XI_{i,j}$, $ZI_{i,j}$ in mindestens einem Referenz-Speicher MRef der Verarbeitungseinheit zumindest teilweise abgespeichert. Die Speicherung erfolgt bevorzugt wenigstens für einen vorgegebenen Zeitraum. Bevorzugt werden wenigstens einige der Regelwert-Signale mindestens einer der Regelwert-Matrizen zur Kompensation der spezifischen Übertragungseigenschaften mindestens eines Senders (H) und mindestens eines des Empfängers (D) verwendet, wobei auch die gerätespezifischen Eigenschaften kompensiert werden können.

Bevorzugt weist die Verarbeitungseinheit des Sensorsystems eine Speichereinheit (ME1, ME2, MRef) auf, in der Werte mindestens einer der Regelwert-Matrizen $YI_{1\_i,j}$, $YI_{2\_i,j}$, $YI_{3\_i,j}$, $YI_{4\_i,j}$, $YI_{5\_i,j}$, $YI_{6\_i,j}$, $YIn_{i,j}$, $XI_{i,j}$, $ZI_{i,j}$ gespeichert werden. Gleichzeitig kann die Speichereinheit bevorzugt mindestens einen dieser Werte mindestens einer der Regelwert-Matrizen in einer zeitlichen Tiefe von mehr als einem Wert speichern.

In einer weiteren bevorzugten Ausführungsform des Sensorsystems wird mindestens eine der Regelwert-Matrizen $YI_{1\_i,j}$, $YI_{2\_i,j}$, $YI_{3\_i,j}$, $YI_{4\_i,j}$, $YI_{5\_i,j}$, $YI_{6\_i,j}$, und/oder eine der Matrizen $YIn_{i,j}$, $XI_{i,j}$, $ZI_{i,j}$ in einer Echo-Auswerteeinheit derart weiterverarbeitet, dass die Echoanteile des Empfangssignals oder ein Echo-Zeitsignal bestimmt werden. Dabei kann auch das Echo-Zeitsignal ausgegeben oder weiterverarbeitet werden, bevorzugt um daraus die Entfernung zu einem Objekt zu bestimmen.

In einer weiteren bevorzugten Ausführungsform des Sensorsystems wird auf dieser Grundlage auf das Vorhandensein weiterer Objekte geschlossen, deren Entfernung bevorzugt aber nicht bestimmt wird. Dies kommt immer dann zum Tragen, wenn die Objektortungskapazität des Systems bereits ausgeschöpft ist. Alternativ können auch die Entfernungen zu mehreren Objekten bestimmt werden.

In einer bevorzugten Ausführungsform des erfindungsgemäßen Sensorsystems umfasst die Signalerzeugungseinheit einen Wavelet-Generator, der wenigstens zwei Wavelets $s_{i,j}(t)$ als Basissignal erzeugt. Je zwei Wavelets bilden ein Paar. Die beiden Wavelets $s_{i,j}(t)$, die ein Paar von Signalen bilden, erfüllen bevorzugt die folgenden Bedingungen:

das eine Signal $s_{i,j}(t)$ ist aus mindestens einem Ur-Wavelet $s_{1,1}(t)$ gebildet,

das andere Signal $s_{i,j}(t)$ ist aus mindestens einem Ur-Wavelet $s_{1,1}'(t)$ gebildet,

die Integration der Ur-Wavelets $s_{1,1}(t)$ und $s_{1,1}'(t)$ über eine Ur-Wavelet-Periode P ist jeweils gleich Null für jedes der Ur-Wavelets $s_{1,1}(t)$, $s_{1,1}'(t)$,

die Ur-Wavelets $s_{1,1}(t)$, $s_{1,1}'(t)$ mit einer Periodendauer T sind bezüglich eines zeitlichen Symmetriepunktes T/2 symmetrisch, wobei gilt:

$$s_{1,1}(t-T/2) = (-1)^*s_{1,1}(-t-T/2) \text{ und } s_{1,1}'(t-T/2) = (-1)^*s_{1,1}'(-t-T/2),$$

und

für die beiden Ur-Wavelets $(s_{1,1}, s_{1,1}')$: $s_{1,1}(t) = s_{11}'(t+T/4)$, für $0 <= t <= T/2$

Der Fachmann erkennt, dass ein Paar kontinuierlicher Wellenzüge von zwei Signalen bestehend aus einer kontinuierlichen Aufeinanderfolge dieser Wavelets, das diese bevorzugten Bedingungen erfüllt, 90 Grad phasenverschoben ist. Genauere Erläuterungen zu den Ur-Wavelets, der Ur-Wavelet-Periode P und der Periodendauer T sind an späterer Stelle im Text offenbart.

Damit ein Signal, dass die obige Integrationsbedingung erfüllt, zur Speisung eines Senders (H) oder eines Kompensationssenders (K), insbesondere zur Speisung eines optischen Senders, beispielsweise einer LED verwendet werden kann, ist ein Offset notwendig, damit keine negativen Signalanteile entstehen. Derartige Signalanteile lassen sich sonst nicht (optisch) senden, da es kein "negatives Licht" gibt. Dieser Aspekt ist dem Fachmann jedoch geläufig, so dass er geeignete Maßnahmen ergreifen wird. Beispielsweise können zu den obigen Signalen ein Gleichanteil oder ein konstantes Gleichsignal addiert werden.

In einer weiteren bevorzugten Ausführungsform umfassen die verwendeten Wavelets $s_{i,j}(t)$ jeweils ein erstes monofrequentes Signal und ein dazu um 90° phasenverschobenes zweites monofrequentes Signal dar. Besonders bevorzugt kann es sich bei dem ersten Signal beispielsweise um ein Sinussignal und bei dem zweiten, um 90 Grad phasenverschobenen Signal um ein dazu orthogonales Cosinussignal handeln.

In einer ebenfalls bevorzugten Ausführungsform des erfindungsgemäßen Sensorsystems kann der Empfänger (D) bevorzugt eine Avalanche-Diode sein, deren Empfängerausgangssignal S0(t) durch Modulation der Sperrspannung auf eine vorbestimmte Zwischenfrequenz gewandelt wird. Dies hat den Vorteil, dass das Empfangssignal direkt in der Avalanche-Photodiode verstärkt und demoduliert werden kann. Hierdurch entsteht ein geringes Rauschen. Gleichzeitig bietet die Avalanche-Diode (AVD) eine große Bandbreite. Ein weiterer Vorteil des Heruntermischens des Empfangssignals auf eine vordefinierte Zwischenfrequenz durch Modulation der Sperrspannung besteht darin, dass der nachfolgende Verstärker AC gekoppelt sein kann. Es ist offensichtlich, dass es in diesem Fall vorteilhaft ist, wenn die Wavelets $s_{i,j}(t)$, die für die Bildung der Linearform (LF) in der ersten Vorrichtung verwendet werden, bevorzugt auf die Zwischenfrequenz, die sich auf Basis des Speisesignals (S5) und der Modulationsfrequenz ergibt, abgestimmt sind. Die für die Rücktransformation (SRT, KRT) verwendeten Wavelets müssen somit mit denen für die Linearform (LF) verwendeten Wavelets nicht übereinstimmen.

Es ist auch denkbar, ein Feld mit mehreren integrierten Avalanche-Photodioden zu bilden. In diesem Fall können die sogenannten Quadraturkomponenten unterschiedliche Frequenzen parallel verarbeiten. Hierdurch erfolgt eine schnellere Verarbeitung und eine kürzere Reaktionszeit des Systems.

In einer weiteren bevorzugten Ausführungsform des erfindungsgemäßen Sensorsystems ist der Empfänger eine Drift-Field-Fotodiode, in der wenigstens ein Element der Verarbeitungseinheit integriert ist. Bevorzugt ist eine Multiplikation als Teil der Linearform der Verarbeitungseinheit (LF) in der Drift-Field-Diode umfasst.

Mit einer Drift-Field-Diode oder einem Drift-Field-Demodulation-Pixel lässt sich das Empfangssignal im Pixel kumulieren und demodulieren. Die Demodulation kann dann bevorzugt mit Rechtecksignalen erfolgen. Mit einer Drift-Field-Diode ist es möglich, direkt in der Diode die Demodulation durchzuführen. Mit vier schnellen Abtastungen pro Periode kann beispielsweise bevorzugt die Amplitude und Phase des Empfangssignals bestimmt werden.

In einer bevorzugten Ausführungsform wird eine Drift-Field-Diode in Form einer Lateral-Drift-Field-Diode verwendet. Sie bietet eine schnelle Auflösemöglichkeit, die durch laterale elektrische Felder ermöglicht wird. Die maximale theoretische Demodulationsfrequenz liegt hierbei im Gigahertzbereich. Somit bietet auch die Drift-Field-Diode den Vorteil, dass eine sehr schnelle und effiziente Verarbeitung durchgeführt werden kann. In einer bevorzugten Ausführungsform des Sensorsystems mit Drift-Field-Diode umfasst sie eine Multiplikationseinheit als Teil der Linearform der Verarbeitungseinheit, so dass das Empfangssignal direkt in der Drift-Field-Diode mit beispielsweise dem Wavelet-Signal multipliziert werden kann. In dem Fall führt also eine Drift-Field-Diode einen Teil des Verfahrens zur Bildung der Linearform durch.

Zum besseren Verständnis wird die vorliegende Erfindung nochmals anhand der Figuren 5 bis 25 erläutert. Die hier dargestellten Besonderheiten können jedoch auch einzeln und in einer anderen Kombination und Zusammensetzung verwendet werden. Es müssen nicht alle in den Figuren dargestellten Elemente und Komponenten in bevorzugten Ausführungsformen vorhanden sein. (In den Figuren werden die Signale teilweise mit Großbuchstaben bezeichnet, während sie in der Beschreibung mit Kleinbuchstaben bezeichnet sind, um sie von den Matrizen zu unterscheiden und das Verständnis zu fördern.)

Die erfindungsgemäße Vorrichtung gemäß Figur 5 unterscheidet sich bevorzugt vom Stand der Technik im Wesentlichen durch einen nicht-linearen Filter (NLF), welcher aus den ansprechenden Kanälen der Ausgangssignalmatrix ($YI_{i,j}$) der Linearform (Verarbeitungseinheit LF) bevorzugt einige Kanäle verstärkt und so eine Filterung durchführt, die dem bestimmungsgemäßen Zweck erfüllt. Insbesondere müssen nicht alle Signale ($nf_{i,j}(t)$) der Ausgangssignalmatrix $NF_{i,j}$ des nicht-linearen Filters (NLF) vorhanden und/oder von Null oder Eins verschieden sein. Die Filterung war bereits anhand von Figur 4c (Filtereingang) und Figur 4d (Filterausgang) erläutert worden.

Die Steuerung des nicht-linearen Filters (NLF) wird weiter unten beschrieben. Im einfachsten Fall wird beispielsweise nur der Kanal mit der maximalen Amplitude gewählt und alle anderen Kanäle zu Null gesetzt. In dem Beispiel gemäß Figur 4 ist das der Kanal mit f=f0. (Figur 4d). Um das Kompensatorspeisesignal (S3) zu erhalten, wird bevorzugt und typischerweise jedes der vorhandenen Ausgangssignale ($nf_{i,j}(t)$) des nicht-linearen Filters (NLF), wenn es denn vorhanden ist, mit dem korrespondierenden Wavelet-Signal ($s_{i,j}(t)$) des Wavelet-Generators (WG) in einer dritten Multipliziereinheit ($M3_{ij}$) zum Rohkompensationssignal ($F_{i,j\_3}(t)$) multipliziert. Dieses wird, wie oben beschrieben, durch den ersten Summierer ($\Sigma 1$) zum Kompensatorspeisesignal (S3) aufsummiert. Figur 4d zeigt also dieses Kompensatorspeisesignal (S3) für das zuvor beschriebene Selektionsverfahren. Im Rahmen der Erfindung wurde nun erkannt, dass der nicht-lineare Filter (NLF) somit der entscheidende Schritt ist, um die Orthogonalität der Wavelet-Signale $s_{i,j}(t)$ des Wavelet-Generators (WG) fallenlassen zu können, da er typischerweise unter der Vielzahl ansprechender $s_{i,j}(t)$-Kanäle einen oder mehrere mit Hilfe eines nichtlinearen Algorithmus auswählt.

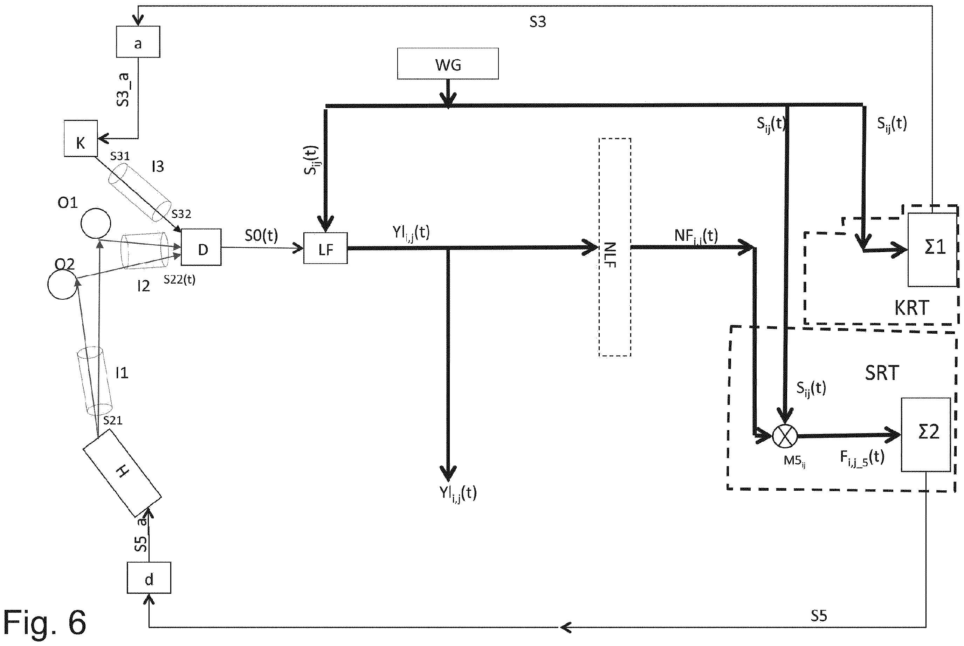

Natürlich ist es auch denkbar, statt des Kompensationssenders (K) oder parallel zu diesem den Sender (H) zu regeln. Dies ist beispielhaft in Figur 6 dargestellt. Statt eines Rohkompensationssignals ($F_{i,j\_3}(t)$) wird nun ein Rohsendesignal ($F_{i,j\_5}(t)$) erzeugt, das durch den zweiten Summierer ($\Sigma 2$) zum Speisesignal (S5) des Senders (H) summiert wird. Das Rohsendesignal ($F_{i,j\_5}(t)$) wird dabei durch die Multiplizierter einer fünften Multipliziereinheit $M5_{ij}$ gebildet, wobei wieder jeweils ein Wavelet-Signal ($s_{i,j}(t)$) der Ausgangssignal-Matrix ($S_{i,j}$) des Wavelet-Generators (WG) mit einem Signal ($nf_{i,j}(t)$) der Ausgangssignalmatrix ($NF_{i,j}$) des nicht-linearen Filters (NLF) multipliziert wird, sofern dieser vorhanden ist.

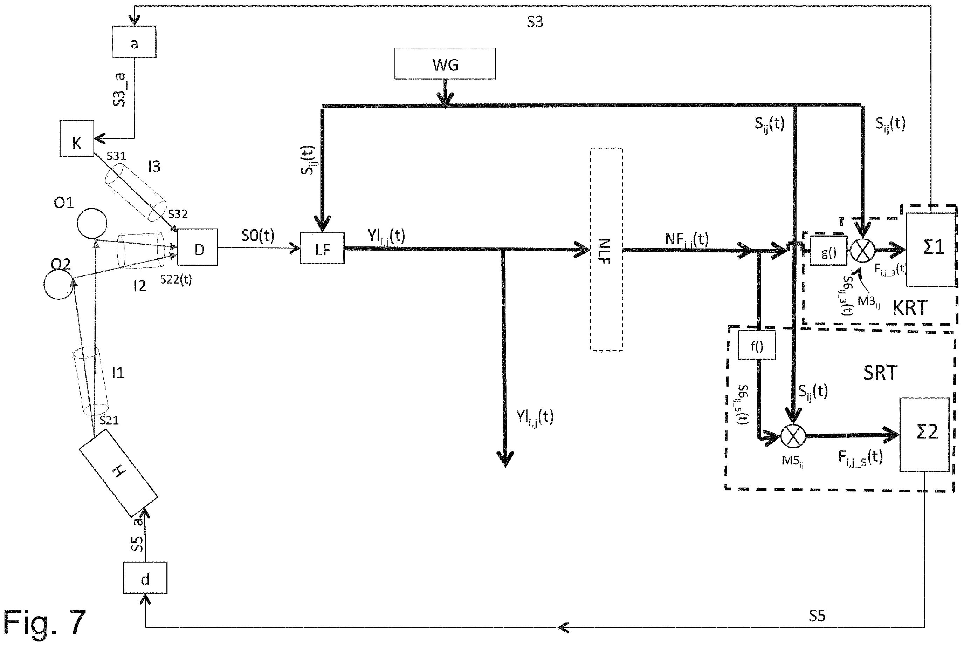

Natürlich ist es auch denkbar, die beiden Verfahren miteinander zu kombinieren. Dies ist beispielhaft in Figur 7 dargestellt. Hierbei werden die Signale ($nf_{i,j}(t)$) der Ausgangssignalmatrix ($NF_{i,j}$) des nicht-linearen Filters (NLF) für die verschiedenen Regelpfade über das Kompensatorspeisesignal (S3) und das Speisesignal (S5) unterschiedlich gewichtet.

Im Falle des Kompensatorspeisesignals (S3) geschieht dies beispielsweise so, dass die Signale ($nf_{i,j}(t)$) der Ausgangssignalmatrix ($NF_{i,j}$) des nichtlinearen Filters (NLF) jeweils mit einer ersten Gewichtungsmatrix oder Filterfunktion g() in einer geeigneten Vorrichtung zu einer Kompensationspegelmatrix ($S6_{i,j\_3}$) multipliziert werden. Im einfachsten Fall kann die erste Gewichtungsmatrix g() auch ein einfacher einziger Skalar sein. Diese Kompensationspegelmatrix ($S6_{i,j\_3}$) kann dann bevorzugt anstelle der Ausgangsignale ($nf_{i,j}(t)$) der Ausgangssignalmatrix ($NF_{i,j}$) des nicht-linearen Filters (NLF), wie zuvor beschrieben, durch die dritte Multiplikationseinheit ($M3_{ij}$) weiterverarbeitet werden. Dabei müssen nicht alle Signale ($nf_{i,j}(t)$) der Ausgangssignalmatrix ($NF_{i,j}$) tatsächlich vorhanden oder von Null oder Eins verschieden sein.

Im Falle des Speisesignals (S5) geschieht dies analog beispielsweise so, dass die Signale ($nf_{i,j}(t)$) der Ausgangssignalmatrix ($NF_{i,j}$) des nicht-linearen Filters (NLF) bevorzugt jeweils mit einer zweiten Gewichtungsmatrix f() in einer geeigneten Vorrichtung zu einer Sendepegelmatrix ($S6_{i,j\_5}$) multipliziert werden. Im einfachsten Fall kann die zweite Gewichtungsmatrix f() wiederum auch ein einfacher einziger Skalar sein. Diese Sendepegelmatrix ($S6_{i,j\_5}$) kann dann bevorzugt anstelle der Ausgangsignale ($nf_{i,j}(t)$) der Ausgangssignalmatrix ($NF_{i,j}$) des nicht-linearen Filters (NLF), wie zuvor beschrieben, durch die fünfte Multiplikationseinheit ($M5_{ij}$) weiterverarbeitet werden. Dabei müssen ebenfalls nicht alle Signale ($nf_{i,j}(t)$) der Ausgangssignalmatrix ($NF_{i,j}$) tatsächlich vorhanden oder von Null oder Eins verschieden sein.

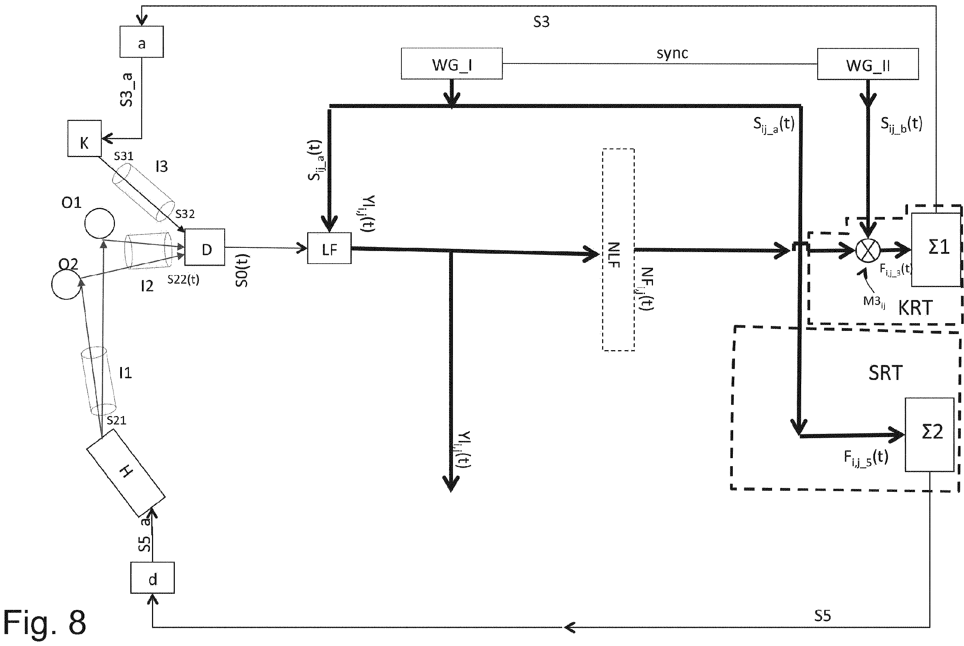

Prinzipiell ist es auch denkbar, statt eines Wavelet-Generators (WG) einen ersten Wavelet-Generator (WG) und einen zweiten Wavelet-Generator (WG_II) zu verwenden, die beispiels- und vorzugsweise über eine Leitung (sync) miteinander synchronisiert sind. Dies ist beispielhaft in Figur 8 dargestellt. Dies ist insbesondere bei einer nicht-linearen Verzerrung der Kanäle oder des Empfangs durch den Empfänger von Vorteil. Hierzu sei auf die bereits beschriebene multiplizierende Überlagerung im Empfänger (D) verwiesen.

Dies ist nur ein Beispiel für die Verwendung mehrerer Wavelet-Generatoren (WG, WG_II), deren Zahl nicht auf zwei beschränkt sein muss. Es ist beispielsweise auch denkbar, einen ersten Wavelet-Generator (WG) für die Ansteuerung eines Teils der Vorrichtung zu benutzen, die eine Linearform LF erstellt, einen zweiten Wavelet-Generator (WG_II) für die Erzeugung eines Kompensatorspeisesignals (S3) zu verwenden, und einen dritten Wavelet-Generator (WG_III) für die Erzeugung eines Sendesignals (S5) zu verwenden. Werden beispielsweise mehr als ein Sender H und/oder mehr als ein Detektor (D) und/oder mehr als ein Kompensationssender (K) mit zugehörigen Signalen verwendet, so sind bevorzugt noch mehr Wavelet-Generatoren denkbar.

Im Folgenden wird zur Vereinfachung im Wesentlichen nur der Fall mit einem Wavelet-Generator (WG) beschrieben.

Aus dem Stand der Technik ist es bekannt, dass es günstig ist, hinter der Linearform (Verarbeitungseinheit LF) eine Signalformung einzusetzen und so statt eines einfachen Proportionalreglers (P-Regler) beispielsweise einen Regler mit PI-Eigenschaften zu erhalten. Dies geschieht im Stand der Technik durch Einsatz eines Integrators. Im Gegensatz zum Stand der Technik ist es nun aber, wie bereits skizziert, nicht äquivalent, ob eine solche Signalformung durch Integration vor oder hinter dem nicht-linearen Filter (NLF) eingesetzt wird.

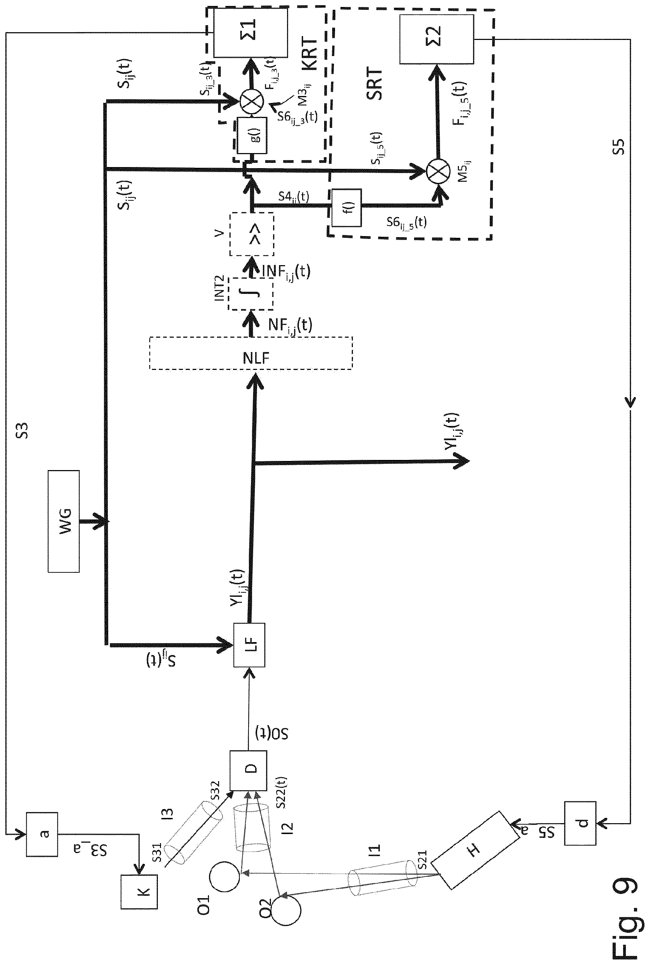

In der bevorzugten Ausführungsform gemäß Figur 9 ist jeweils eine zweite Integratoreinheit (INT2) als ein Beispiel für eine mögliche Signalformung hinter dem nicht-linearen Filter (NLF) eingefügt. Die beispielhafte zweite Integratoreinheit (INT2) erzeugt durch jeweils separate Integration der Signale der Ausgangssignalmatrix ($NF_{i,j}$) des nicht-linearen Filters (NLF) die Signale ($inf_{i,j}(t)$) der integrierten Ausgangssignalmatrix ($INF_{i,j}$). Mit diesen Signalen ($inf_{i,j}(t)$) der integrierten Ausgangssignalmatrix ($INF_{i,j}$) können beispielsweise die Vorrichtungen zur Verknüpfung mit der ersten Gewichtungsmatrix g() und der zweiten Gewichtungsmatrix f() direkt beaufschlagt werden.

In Figur 9 ist noch eine mögliche (optionale) Verstärkereinheit (V) dazwischen geschaltet, die bevorzugt die verstärkte Ausgangssignalmatrix ($S4_{i,j}$) der Verstärkereinheit (V) durch Verstärkung der Signale ($NF_{i,j}(t)$) der Ausgangssignalmatrix ($NF_{i,j}$) des nicht-linearen Filters (NLF) und/oder der Signale ($inf_{i,j}(t)$) der integrierten Ausgangssignalmatrix ($INF_{i,j}$) der zweiten Integratoreinheit (INT2) erzeugt. In der Regel kann das Signal ($S4_{i,j}(t)$) als Ausgangssignal, d.h. als Messergebnis, bereits genutzt werden. Es ist jedoch relativ unhandlich und für die Integration in eine integrierte Schaltung nicht wirklich geeignet. Es sollte dabei nicht unerwähnt bleiben, dass die Verstärkung der einzelnen Kanäle typischerweise, aber nicht immer, gleich gewählt wird.

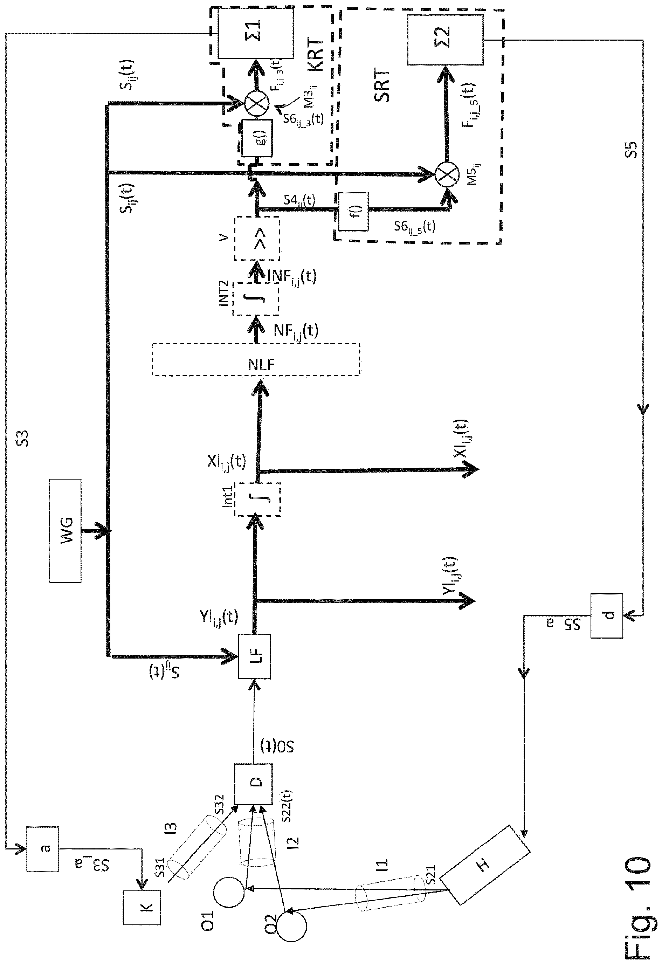

Wie bereits erwähnt, führt eine Verschiebung des typischerweise linearen Verstärkers (V) oder der Signalformung, beispielsweise in Form des Integrators (INT2), an eine Position vor dem nicht-linearen Filter (NLF) nicht zu einem äquivalenten (gleichen) Ergebnis, sondern verändert dieses und das Verhalten des Sensorsystems insgesamt. Bei einer Verschiebung einer solchen Einheit an eine Position innerhalb des Signalteilpfades beginnend mit dem Ausgang des nicht-linearen Filters (NLF) und endend vor dem Kompensationssender (K) und/oder dem Sender (H), entspricht das im Wesentlichen einer Äquivalenzumformung des erfindungsgemäßen Systems. Da die Komponenten, die dem nicht-linearen Filter (NLF) folgen, allesamt linear sind, ist die Reihenfolge dieser Komponenten kommutativ und in der Regel nur von der Notwendigkeit bestimmt, eine Übersteuerung zu vermeiden und den Aufwand zu minimieren. Im Sinne dieser Offenbarung kann bevorzugt die Reihenfolge dieser Komponenten daher nahezu beliebig gewählt werden. Deren Ausformung richtet sich dabei jedoch, wie bereits erwähnt, an die jeweiligen Anforderungen. Wird beispielsweise die Verstärkereinrichtung unmittelbar vor den Kompensationssender (K) platziert, so handelt es sich in der Regel nur um einen einzelnen Verstärker. Bei einer Platzierung, wie beispielsweise in Figur 10, handelt es sich in der Regel bevorzugt um eine Vielzahl von Verstärkern, deren Verstärkung, wie zuvor erwähnt, unterschiedlich gewählt werden kann. In der Regel ist sie jedoch gleich. Unterschiedliche Verstärkungen sind insbesondere dann von Vorteil, wenn verschiedene Wavelet-Typen gleichzeitig eingesetzt werden, die sich für unterschiedliche Erkennungsaufgaben unterschiedlich gut eignen. Die optimale Topologie eines erfindungsgemäßen Systems wird sich in der Regel an dem zu lösenden Problem orientieren.

Wie bereits erwähnt, kann eine Signalformung auch vor dem nicht-linearen Filter (NLF) platziert werden. In dem bevorzugten Beispiel der Figur 10 ist dies eine erste Integratoreinheit (INT1), die aus den Signalen ($yi_{i,j}(t)$) der Ausganssignalmatrix ($YI_{i,j}$) der Linearform (Verarbeitungseinheit) (LF) die zugehörigen integrierten Signale ($xi_{i,j}(t)$) der Ausgangssignalmatrix ($XI_{i,j}$) der ersten Integrationseinheit (INT1) erzeugt. Die Signale ($xi_{i,j}(t)$) der Ausgangssignalmatrix ($XI_{i,j}$) der ersten Integrationseinheit (INT1) werden dann anstelle der Signale ($yi_{i,j}(t)$) der Ausgangssignalmatrix ($YI_{i,j}$) der Linearform (LF) als Eingangssignal für das nicht-lineare Filter (NLF) verwendet.

Sowohl die Signale $(yi_{i,j}(t))$ der Ausgangssignalmatrix $(YI_{i,j})$ der Linearform (LF) als auch die Signale $(xi_{i,j}(t))$ der Ausgangssignalmatrix $(XI_{i,j})$ der ersten Integrationseinheit (INT1) können als Ausgangssignale des Systems zur weiteren Verarbeitung verwendet werden.

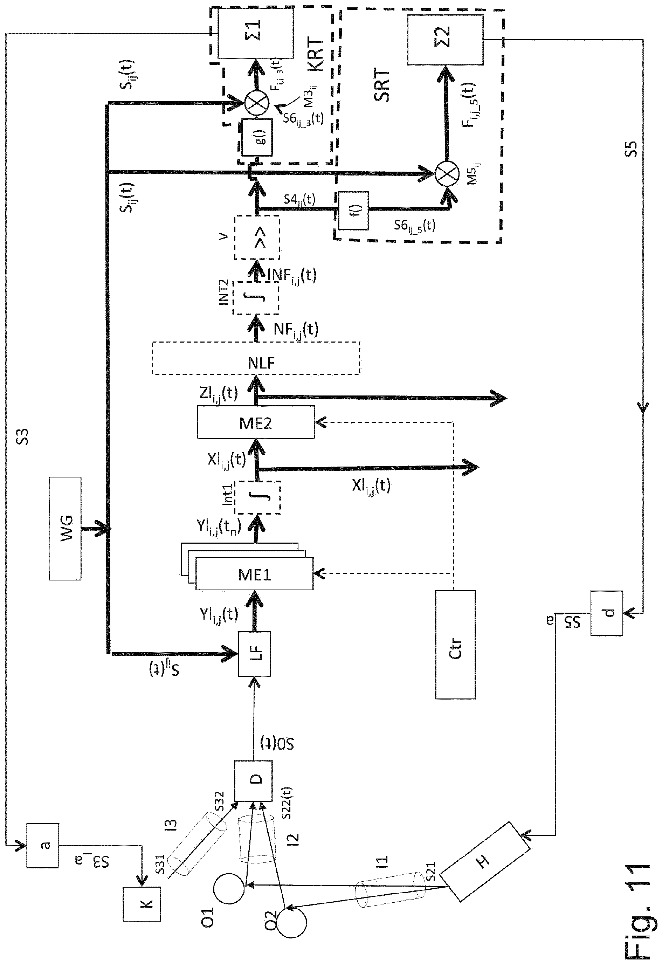

Es hat sich im Rahmen der Erfindung gezeigt, dass es günstig sein kann, nicht nur die aktuellen Werte der Signale $(yi_{i,j}(t))$ der Ausgangssignalmatrix $(YI_{i,j})$ der Linearform (LF) zu verwenden, sondern auch vergangene Werte der Signale $(yi_{i,j}(t))$ der Ausgangssignalmatrix $(YI_{i,j})$ der Linearform (LF) zu einem oder mehreren früheren Zeitpunkten, z.B. bevorzugt auch um Ableitungen dieser Größen verwenden zu können. In Figur 11 ist beispielhaft eine bevorzugte zusätzliche erste Speichereinheit (ME1) vorgesehen, die die Werte der Signale $(yi_{i,j}(t))$ der Ausgangssignalmatrix $(YI_{i,j})$ der Linearform (LF) zwischenspeichern kann. Spätestens an dieser Stelle ist es offensichtlich vorteilhaft und bevorzugt, zumindest einen Teil des Signalpfads digitalisiert und/oder insbesondere durch einen Signalprozessor zu realisieren. Insofern können mehrere oder alle der zuvor beschriebenen Funktionalitäten des Sensorsystems in einem einzelnen Regler (CT) durchgeführt werden. Eine Ausführung in jeweils zugeordneten Teilvorrichtungen ist aber selbstverständlich auch möglich. In dem bevorzugten Beispiel von Figur 11 werden die Ausgangssignale $(yi_{i,j}(t_n))$ der ersten Speichereinheit (ME1) statt der Signale $(yi_{i,j}(t))$ der Ausgangssignalmatrix $(YI_{i,j})$ der Linearform (LF) als Eingangssignale der ersten Integrationseinheit (INT1) verwendet. Natürlich ist es auch denkbar, diese direkt in den nicht-linearen Filter (NLF) einzuspeisen.

Andere bevorzugte Positionierungen solcher Speicher sind denkbar. So ist es beispielsweise, wie in Figur 11 dargestellt, auch möglich, eine zweite Speichereinheit (ME2) vorzusehen, die die Werte der Signale $(xi_{i,j}(t))$ der Ausgangssignalmatrix $(XI_{i,j})$ der ersten Integrationseinheit (INT1) zwischenspeichert. Die Signale $(zi_{i,j}(t))$ der Ausgangssignalmatrix $(ZI_{i,j})$ der bevorzugten zweiten Speichereinheit (ME2) werden in dem Beispiel der Figur 11 statt der Werte der Signale $(xi_{i,j}(t))$ der Ausgangssignalmatrix $(XI_{i,j})$ der ersten Integrationseinheit (INT1) dem nicht-linearen Filter (NLF) zugeführt.

Wie leicht zu erkennen ist, sind alle die zuvor diskutierten bevorzugten Variationen und Ausführungen nur einzelne Beispiele der möglichen Ausführungen der erfindungsgemäßen Vorrichtungen. Diese haben zumindest als Teilstruktur die Grundstruktur der Figuren 1 und 2 und den zusätzlichen nicht-linearen Filter (NLF) gemeinsam. Mehrere bevorzugte Sender (H), Kompensationssender (K) und Empfänger (D) werden im zitierten Stand der Technik bereits ausführlich behandelt und sind in ihren speziellen Ausformungen ebenso wie die Kombinationen der zuvor diskutierten Elemente Teil dieser Offenbarung. Dies gilt auch für die folgenden beispielhaft beschriebenen Ausführungen.

Ein Problem, das bisher nicht betrachtet wurde, ist die Steuerung des nichtlinearen Filters (NLF). Im einfachsten Fall besteht der nicht-lineare Filter (NLF) bevorzugt beispielsweise aus einer Schaltmatrix, bei dem bevorzugt ein Schaltelement ein Signal $(zi_{i,j}(t))$ auf der einen Seite mit einem korrespondierenden Ausgangssignal $(nf_{i,j}(t))$ auf der anderen Seite des nicht-linearen Filters (NLF) verbindet. Die Schaltelemente des nicht-linearen Filters (NLF) werden dabei bevorzugt durch einen Steuersignal-Bus (CTRS) kontrolliert. Dieser enthält in diesem einfachen Beispiel typischerweise für jedes der zuvor erwähnten Paare aus Signal $(zi_{i,j}(t))$ auf der einen Seite und einem korrespondierenden Ausgangssignal $(nf_{i,j}(t))$ ein Steuersignal. Wird die Funktion des nichtlinearen Filters (NLF) durch einen Signalprozessor vorgenommen, so entspricht die Funktion des nicht-linearen Filters (NLF) der Multiplikation des Eingangssignals $(zi_{i,j}(t))$ mit einer der Steuerung (CTRS) entsprechenden Matrix, die selbst wieder durch einen nicht-linearen Prozess aus den zuvor ermittelten Werten der Matrizen $(YI_{i,j}, YIn_{i,j}, XI_{i,j}, ZI_{i,j})$ abgeleitet werden kann. Die Regelwert-Matrix $(YI_{i,j}(t_n))$ wird im Folgenden auch als $YIn_{i,j}$ bezeichnet. Die Matrix $(YIn_{i,j})$ umfasst dabei zumindest einen Teil der Ausgangssignale $(yi_{i,j}(t_n))$ der ersten Speichereinheit (ME1).

Hinsichtlich der Steuerung des nicht-linearen Filters (NLF) sollte ein einfaches Beispiel ausreichen: Ganz zu Beginn wurde erwähnt, dass beispielsweise das Maximum der Regelwertsignale $zi_{i,j}(t)$ der Ausgangssignalmatrix $ZI_{i,j}$ gesucht werden kann und genau nur dieses durch ein korrespondierendes CTRS-Teilsignal durchgelassen wird. Das Suchen des Maximums ist nur ein bevorzugtes Beispiel für einen von vielen nicht-linearen Steueralgorithmen für den nicht-linearen Filter NLF. Die Maximumsuche wird beispielsweise in einer Steuervorrichtung, auch Schätzer (EST) genannt, durchgeführt. Der Schätzer (EST) führt in der Regel Verfahren der statistischen Signaltheorie aus, um beispielsweise die Signale $yi_{i,j}(t)$, $yi_{i,j}(t_n)$, $xi_{i,j}(t)$, $zi_{i,j}(t)$ zu selektieren und/oder selektiv durch den nicht-linearen Filter (NLF) verstärken zu lassen, die eine optimale Kompensation des Empfangssignals erlauben. Hier können auch neuronale Netzte, HMM-Erkenner (Hidden Markov Modelle), DTW-Erkenner (Dynamic-time-warping), Viterbi-Dekoder und Petri-Netze zum Einsatz kommen, die durch geeignete Vorrichtungen durchgeführt werden.

Somit ist der Schätzer EST ein bevorzugter Bestandteil der erfindungsgemäßen Vorrichtung und das zugehörige Schätzverfahren ein bevorzugter Teil des erfindungsgemäßen Verfahrens, die sehr verschieden ausgeformt werden können. Der bevorzugte Maximums-Schätzer und das darin verwirklichbare Maximumsverfahren wurde bereits als eine mögliche Ausführungsform eines Schätzers und des Schätzverfahrens beschrieben.

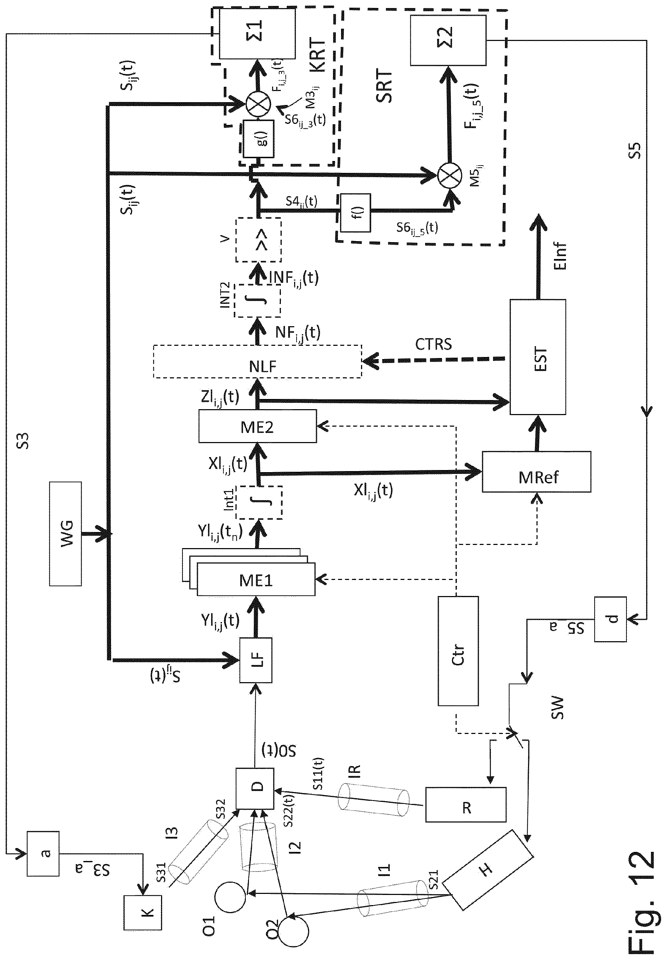

Es ist nun denkbar, dass sich die Vorrichtung bevorzugt selbst vermisst, um eine Referenz zu bestimmen. Hierzu ist es beispielsweise denkbar, dass die Vorrichtung bevorzugt einen Referenzsender R umfasst, wie er beispielhaft in Figur 12 gezeigt ist. Der Referenzsender (R) strahlt bevorzugt über eine bekannte Referenzübertragungsstrecke (IR) überlagernd in den Empfänger (D) ein. Zur Selbstkalibration wird bevorzugt das unmittelbare Sendesignal (S5_a) vom Sender (H) auf den Referenzsender (R), beispielsweise durch einen Schalter (SW), umgeschaltet. Eine Ablaufsteuerung (Ctr) kontrolliert bevorzugt diesen Vorgang. Bevorzugt werden Werte der Signale, die bevorzugt typischerweise vor dem nicht-linearen Filter (NLF) erzeugt wurden, also bevorzugt die Signale $yi_{i,j}(t)$, $yi_{i,j}(t_n)$, $xi_{i,j}(t)$, $zi_{i,j}(t)$ der entsprechenden Matrizen $YI_{i,j}$, $YIn_{i,j}$, $XI_{i,j}$, $ZI_{i,j}$ in einem Referenzspeicher (MRef) zwischengespeichert. Der Schätzer EST kann nun bevorzugt diese zwischengespeicherten Referenzwerte verwenden, um beispielsweise den Untergrund durch Subtraktion und/oder Division zu eliminieren. Bevorzugt kann die Ablaufsteuerung Ctr zweckmäßiger Weise in der Regel auch die Ansteuerung der anderen optionalen Speicher ME1, ME2 steuern. Selbstverständlich kann der Referenzsender R auch ohne die oder einige der Komponenten (ME1, ME2, INT1, INT2, V, KRT, SRT), wie in den Figuren dargestellt, eingesetzt werden. Im weiteren Verlauf wird das Eliminieren des Untergrunds durch Division weiter unten erläutert werden.

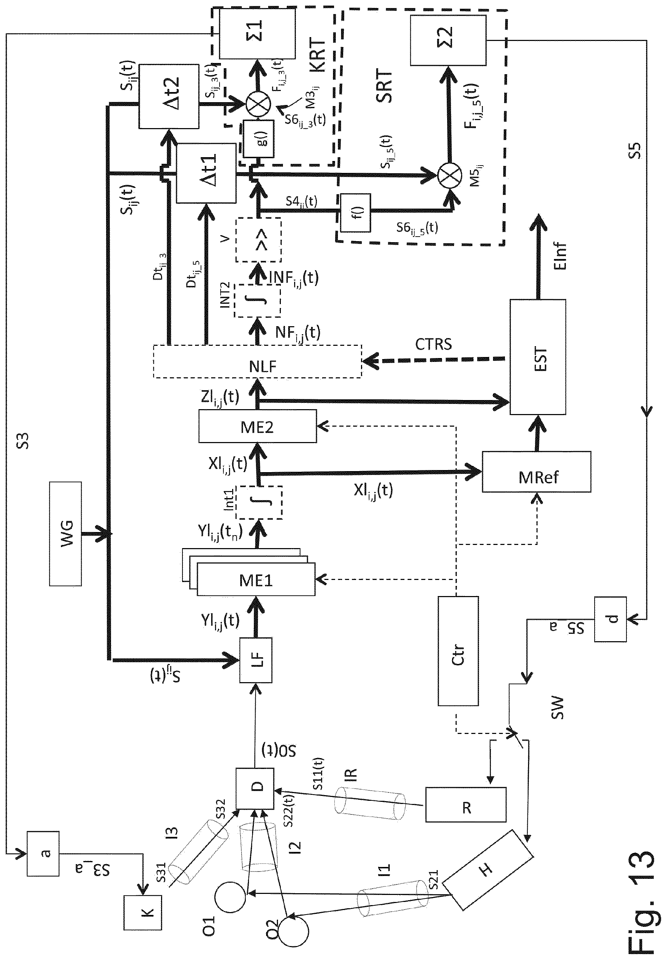

Es wurde ja bereits oben erwähnt, dass bevorzugt ein System mit drei Wavelet-Generatoren denkbar ist. Ein spezielles System dieser Art kann bevorzugt dadurch erzielt werden, dass das nicht-lineare Filter NLF über ein, zwei oder eben mehr zusätzliche Ausgangsbusse verfügt, die die Verzögerungseinheiten für die Verzögerung der Wavelet-Signale $s_{i,j}(t)$ der Ausgangssignal-Matrix $S_{i,j}$ des Wavelet-Generators WG steuern. In der Figur 13 ist ein solches bevorzugtes System beispielhaft dargestellt. Der nicht-lineare Filter NLF verfügt zusätzlich über einen ersten Verzögerungssteuerbus $Dt_{i,j\_3}$ und einen zweiten Verzögerungssteuerbus ($Dt_{i,j\_5}$). Es ist beispielsweise denkbar, dass der nichtlineare Filter (NLF) sich bevorzugt in drei einzelne nicht-lineare Teilfilter mit je einem dieser Ausgangsbusse als Ausgang aufteilt. Für den Fachmann ist es offensichtlich, dass die Verzögerungssteuersignale der Verzögerungssteuerbusse $Dt_{i,j\_3}$ und $Dt_{i,j\_5}$ ggf. integriert und verstärkt werden können. Dies ist in den Zeichnungen zur besseren Übersichtlichkeit nicht eingetragen.

Die Verzögerung bzw. Phasenregelung der Wavelet-Signale ($s_{i,j}(t)$) der Ausgangssignal-Matrix ($S_{i,j}$) des Wavelet-Generators (WG) für die Erzeugung des Sendesignals (S5) wird in dem Beispiel bevorzugt in Abhängigkeit von dem zweiten Verzögerungssteuerbus ($Dt_{i,j\_5}$) durch die erste Verzögerungseinheit ($\Delta t1$) vorgenommen. Die somit verzögerten Basissignale $s_{i,j\_5}(t)$ der Senderseite werden dann bevorzugt statt der Wavelet-Signale ($s_{i,j}(t)$) der Ausgangssignal-Matrix ($S_{i,j}$) des Wavelet-Generators (WG) der fünften Multipliziereinheit ($M5_{ij}$) zugeführt.

Die Verzögerung bzw. Phasenregelung der Wavelet-Signale ($s_{i,j}(t)$) der Ausgangssignal-Matrix ($S_{i,j}$) des Wavelet-Generators (WG) für die Erzeugung des Kompensatorspeisesignals (S3) wird in dem bevorzugten Beispiel analog in Abhängigkeit von dem ersten Verzögerungssteuerbus ($Dt_{i,j\_3}$) durch die zweite Verzögerungseinheit ($\Delta t2$) vorgenommen. Die somit verzögerten Basissignale ($s_{i,j\_3}$) der Kompensationssenderseite werden dann statt der Wavelet-Signale ($s_{i,j}(t)$) der Ausgangssignal-Matrix ($S_{i,j}$) des Wavelet-Generators (WG) der jeweiligen dritten Multipliziereinheit ($M3_{ij}$) zugeführt. Durch diese Konstruktion ist eine sehr feine Ausregelung des Regelkreises möglich.

Wie bereits erwähnt, zeigt Figur 14 beispielhaft mehrere mögliche bevorzugte Alternativen der Kompensationseinspeisung, die einzeln oder in Kombination verwendet werden können. Die gestrichelt gezeichneten Komponenten (ME1, ME2, INT1, IN2, V) sind optional. Zur Vereinfachung sind die Rücktransformationseinheiten (KRT und SRT) nicht genauer ausgeführt; hier wird auf die andere Figuren und die entsprechende Beschreibung verwiesen.

Neben der bereits besprochenen Kompensation über einen Kompensationssender (K), der überlagernd in den Empfänger (D) einstrahlt, ist es bevorzugt auch denkbar, das Kompensationssignal (S3) über einen zweiten Verstärker (b) für das Kompensatorspeisesignal (S3) in den Empfänger selbst einzuspeisen, wenn dessen Empfindlichkeit über ein Signal geändert werden kann. Die Verstärkung des zweiten Verstärkers (b) für das Kompensatorspeisesignal (S3) kann eins sein. Der zweite Verstärker (b) für das Kompensatorspeisesignal (S3) kann über einen Offset verfügen.

Des Weiteren ist es möglich, bevorzugt das Kompensationssignal S3 über einen dritten Verstärker (c) für das Kompensatorspeisesignal (S3) und einen Addierer (A1) direkt in das Empfängerausgangssignal (S0(t)) oder an eine andere Stelle in der Regelschleife einzuspeisen. Die Verstärkung des dritten Verstärkers (c) für das Kompensatorspeisesignal (S3) kann eins sein. Der dritte Verstärker (c) für das Kompensatorspeisesignal (S3) kann über einen Offset verfügen.

Es ist natürlich in vielen Fällen sinnvoll, für jede oder einzelne der Rückkoppelmethoden bevorzugt eine separate Regelschleife mit einem separaten Kompensatorspeisesignal (S3) aufzubauen. Dies ist hier aus Gründen der Übersichtlichkeit nicht dargestellt.

Figur 15 zeigt den beispielhaften Fall, dass das Sensorsystem über mehrere Wavelet-Generatoren (WG, WG_II) verfügt, die bevorzugt parametrisch durch den Schätzer und/oder die Referenzwerte, hier beispielsweise den Inhalt des Referenzspeichers (MRef), gesteuert werden. So ist es beispielsweise denkbar, dass Wavelet-Signale erzeugt werden, die besonders wenig gestört werden oder zwei dicht beieinander liegende Objekte gut trennen. Wenn der Schätzer (EST) nämlich die Bewegung zweier Objekte überwacht, so kann er bevorzugt die Bahn der Objekte extrapolieren und die Auflösung, sprich das Frequenzspektrum, der Wavelets so anpassen, dass sich beispielsweise eine maximale Auflösung zu Ungunsten einer weiträumigen Überwachung ergibt. Das Verfahren lässt sich somit ideal an de gewünschten Anforderungen anpassen.

Figur 16 zeigt einige beispielhafte Wavelets ($s_{i,j}(t)$). Die Wavelets ($s_{i,j}(t)$) können bevorzugt aus einem Ur-Wavelet ($s_{11}(t)$) durch zeitliche Verschiebung, zeitliche Streckung/Stauchung und Summierung/Subtraktion erzeugt werden. Für die Erfüllung der technischen Lehre ist es dabei unerheblich, ob eine solche zeitliche Verschiebung, zeitliche Streckung/Stauchung und Summierung/Subtraktion wirklich stattfindet oder ob die Signale direkt erzeugt werden. Wichtig ist in diesem Fall nur, dass zumindest ein Teil eines Signals als Ur-Wavelet ($s_{11}(t)$) definiert werden kann und wesentliche Teile der anderen Signale ($s_{i,j}(t)$) durch diese Operationen erzeugt werden können. Hinsichtlich der Theorie der Wavelets sei hier auf die einschlägige Literatur, beispielsweise Stephane Mallat, "A Wavelet Tour of Signal Processing" Academic Press London 1997 verwiesen.

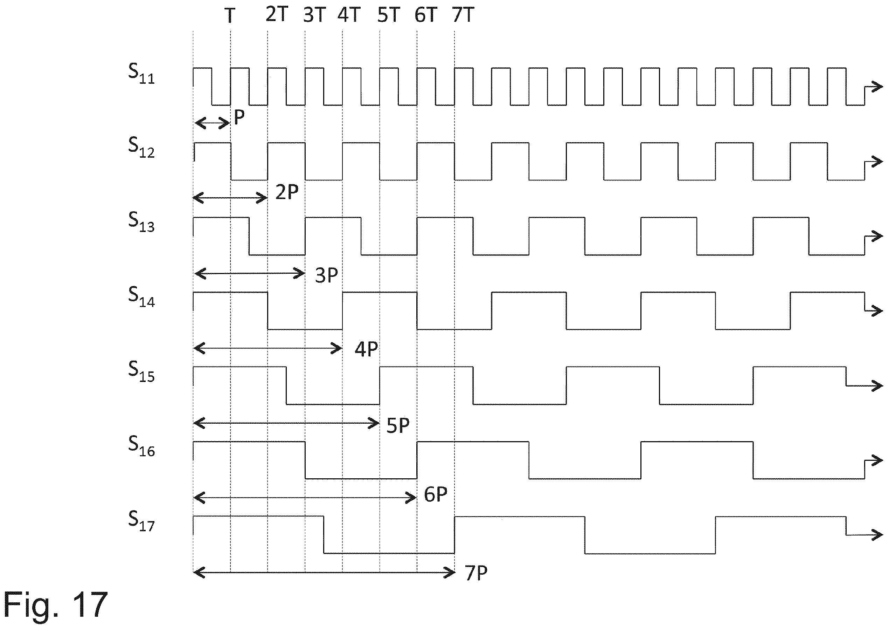

Sinus-Signale und Cosinus-Signale mit unterschiedlicher Phasenverschiebung und/oder unterschiedlicher Frequenz können dementsprechend aus einer einzigen Sinus-Welle oder -Halbwelle hergeleitet werden. Bevorzugt können einzelne Pulse daher für die Herleitung von Rechtecksignalen unterschiedlicher Frequenz verwendet werden. Die ist beispielhaft in Figur 17 gezeigt.

Es ist auch möglich, dass nicht vollständig korrelierende ggf. auch bandbegrenzte Zufallssignale verwendet werden, die sich ausdrücklich nicht unbedingt aus Wavelets herleiten lassen. Es ist ja gerade ein Vorteil der erfindungsgemäßen Vorrichtung und/oder des erfindungsgemäßen Verfahrens, die Korrelationen gerade zulassen. Es ist besonders vorteilhaft, wenn diese Zufallssignale zusammen mit den besprochenen Verzögerungsgliedern $\Delta t1$ und $\Delta t2$ verwendet werden. Insofern werden dann bevorzugt alle oder ein Teil der Wavelet-Generatoren durch Zufallszahlengeneratoren ersetzt. Dies würde die Systemstruktur aber nicht grundsätzlich ändern.

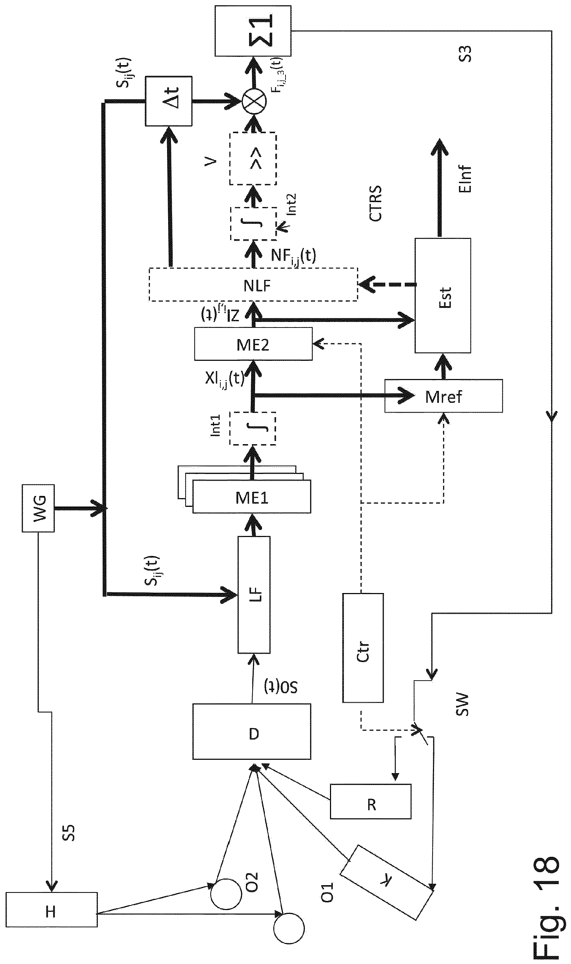

Figur 18 zeigt das Blockschaltbild eines bevorzugten Sensorsystem. Dabei wird der Sender H geregelt und es erfolgt eine kontinuierliche Phasen- bzw. Verzögerungsregelung. Das System weist in der Regel einen bevorzugten hochverstärkenden PI-Regler auf. Das besondere hier ist, dass der Wavelet-Generator WG direkt das Sendesignal S5 liefert.

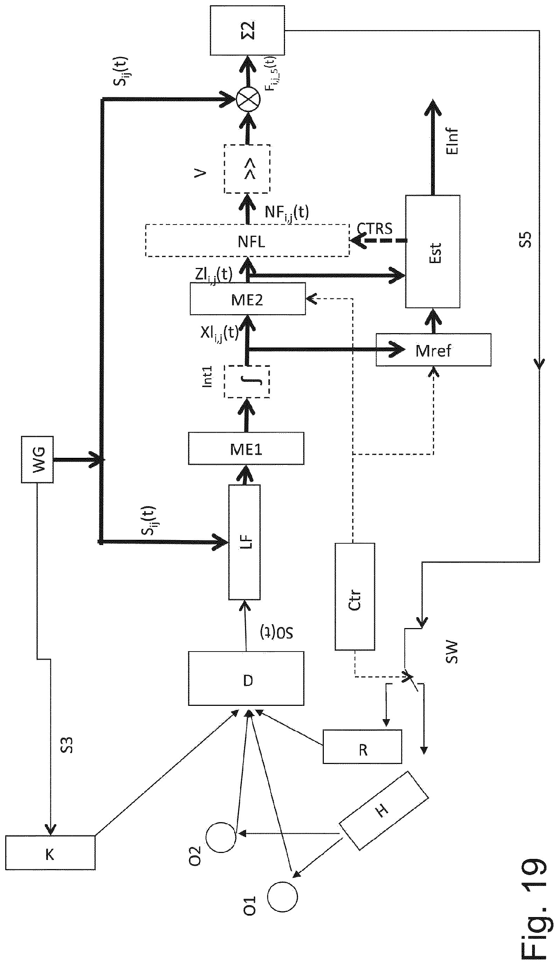

Figur 19 zeigt das Blockschaltbild einer bevorzugten Vorrichtung mit Senderregelung und mit Phasen- bzw. Verzögerungsanpassung durch Mischung orthogonaler Wavelets $s_{i,j}(t)$ und mit einem hochverstärkendem PI-Regler. Das besondere hier ist, dass der Wavelet-Generator WG direkt das Kompensatorspeisesignal S3 liefert.

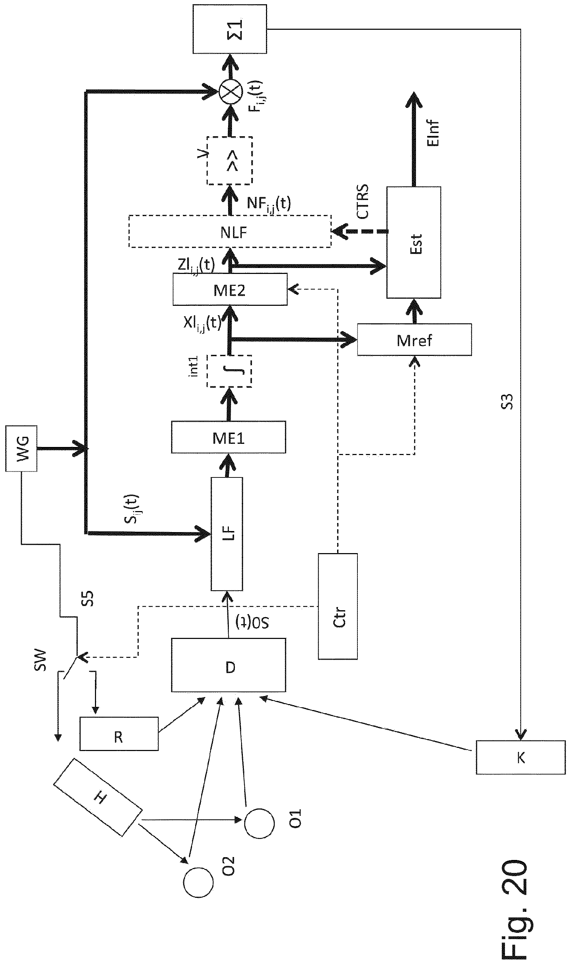

Figur 20 zeigt ein bevorzugtes System im Blockschaltbild mit Kompensationsregelung und hochverstärkendem PI-Regler. Das System kann mittels des Referenzsenders R, wie oben beschrieben, kalibriert werden. Die Kalibrierwerte werden bevorzugt im Speicher MRef abgelegt. Der Schätzer (EST) kann dann mit Hilfe dieser abgelegten Kalibrierwerte den Untergrund eliminieren.

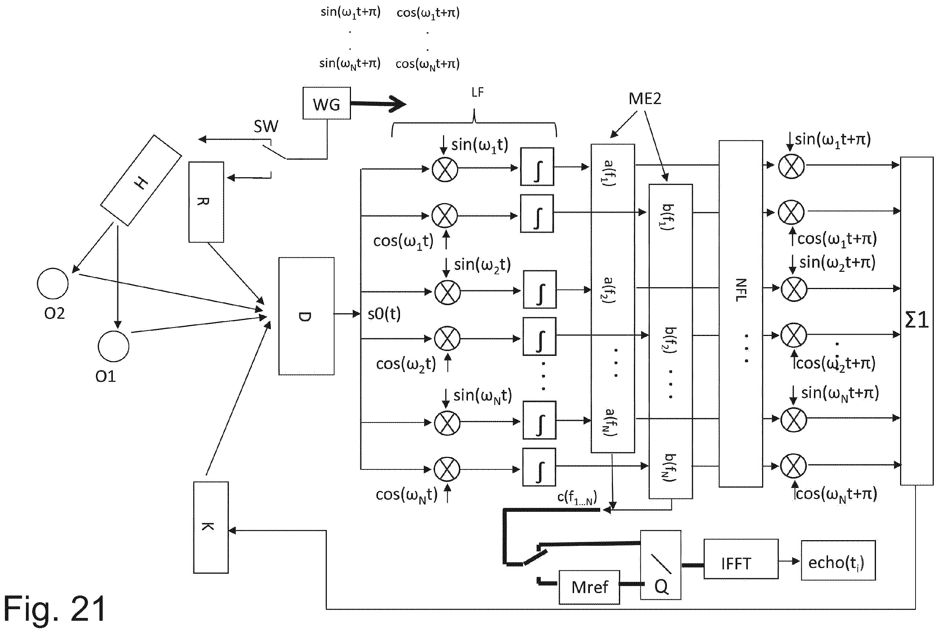

Figur 21 zeigt das Blockschaltbild der bevorzugten Vorrichtung unter Nutzung einer bevorzugten Ausgestaltung eines Frequenzbereichs-Verfahrens mit einem P-Regler ohne Verstärker. Die Wavelets $s_{i,j}(t)$ sind bevorzugt so gewählt, dass sich Paare aus jeweils einer Sinus- und einer dazu orthogonalen Cosinus-Funktion jeweils einer Frequenz ergeben. Die Frequenzen dieser Paare unterscheiden sich jeweils voneinander. Im Gegensatz zum Stand der Technik ist eben keine Orthogonalität unter den Paaren gefordert. Die Frequenzen der Sinus- und Cosinus-Signale müssen daher im Gegensatz zum Stand der Technik keine ganzzahligen Vielfachen einer Grundfrequenz sein, was einer Orthogonalitätsforderung gleichkäme. Zwischen den jeweils zwei Mitgliedern dieser Paare, also dem jeweiligen Cosinus- und Sinus-Signal, besteht aufgrund dieser Definition jedoch Orthogonalität innerhalb des Paares. Es ist also durchaus möglich, dass zumindest eine Teilmenge der Basissignale orthogonal zueinander ist.

Die Selektion der für die Weiterverarbeitung geeigneten Fourier-Koeffizienten aus der Menge der insgesamt so ermittelten Fourier-Koeffizienten $a(f_1)$ bis $a(f_N)$ und $b(f_1)$ bis $b(f_N)$ erfolgt bevorzugt später im Signalpfad durch den nichtlinearen Filter NLF. Die Linearform LF ist bevorzugt eine Fourier-Koeffizientenbestimmung, die bevorzugt durch eine Multiplikation des Eingangssignals S0(t) mit dem jeweiligen Sinus- oder Cosinus-Signal und anschließender Integration in der Linearform LF erfolgt. Der Referenzspeicher MRef wird zum Abspeichern der so ermittelten Fourier-Koeffizienten $a(f_1)$ bis $a(f_N)$ und $b(f_1)$ bis $b(f_N)$ an den zweiten Speicher ME2 angeschlossen. Der zweite Speicher ME2 speichert zumindest einen Teil der Fourier-Koeffizienten $a(f_1)$ bis $a(f_N)$ und $b(f_1)$ bis $b(f_N)$ geeignet ab.

Die Rücktransformation erfolgt bevorzugt hinter dem nicht-linearen Filter NLF durch zumindest teilweise, vorzugsweise aber komplette Multiplikation der Fourier-Koeffizienten $a(f_1)$ bis $a(f_N)$ und $b(f_1)$ bis $b(f_N)$, sofern diese durch den Filter durchgelassen werden, mit dem jeweiligen mit -1 multiplizierten Sinus- oder Cosinus-Signal. Nach der Abspeicherung der Referenz-Fourier-Koeffizienten im Referenzspeicher MRef kann bevorzugt durch Quotientenbildung zwischen den Werten in dem Referenzspeicher MRef und den neu gemessenen Fourier-Koeffizienten $a(f_1)$ bis $a(f_N)$ und $b(f_1)$ bis $b(f_N)$ ein neuer Satz Koeffizienten bestimmt werden, die die Fourier-Koeffizienten eines Reflexionssignals (Echos) an einem Objekt O1, O2 sind. Der Schätzer (EST) dividiert bevorzugt jeden so ermittelten Fourier-Koeffizienten durch seinen korrespondierenden und zuvor im Referenzspeicher (MRef) abgelegten zugehörigen Kalibrationswert. Durch eine anschließende inverse Fourier-Transformation (IFFT) in einer entsprechenden Vorrichtung kann bevorzugt wieder ein zeitliches Echo-Signal $echo(t_i)$ als Ergebnis dieser Rücktransformation ermittelt werden, das ein Echo-Informationssignal EInf ist. In diesem Echo-Signal $echo(t_i)$ wurde der Untergrund durch die beschriebene Division durch die Kalibrationswerte im Speicher (MRef) eliminiert. Hiernach kann die Echoentscheidung pegel- und/oder zeitabhängig erfolgen. Das bedeutet, dass beispielsweise ein Echo als vorliegend angenommen wird, wenn ein vorgegebener absoluter oder relativer Pegel beispielsweise zu einem vorbestimmten Zeitpunkt überschritten wird.

Ein solcher bevorzugter Echoentscheider mit Vorverarbeitung über das Spektrum arbeitet beispielsweise auf Basis des Wiener-Chintschin-Theorems. Das hier beschriebene System ist also in der Lage, Störer zuverlässig zu unterdrücken.

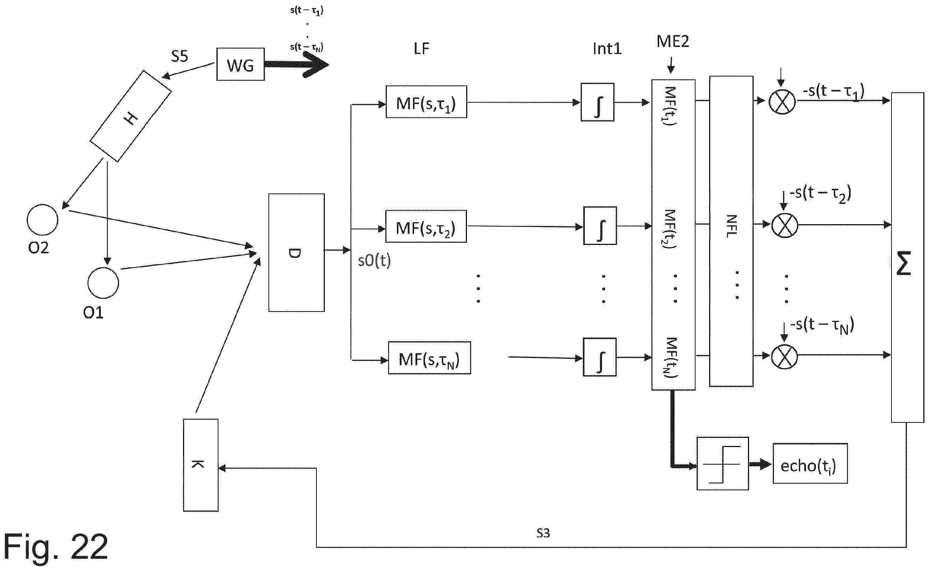

Figur 22 zeigt das schematische Blockschaltbild einer bevorzugten Gestaltung der erfindungsgemäßen Vorrichtung unter Verwendung des Zeitbereichsverfahrens. Der Wavelet-Generator WG erzeugt bevorzugt das Sendesignal S5 und eine Reihe von N Wavelets $s(t-\tau_1)$ bis $s(t-\tau_N)$, die sich nur durch eine unterschiedliche Verzögerung unterscheiden. Vorzugsweise korrelieren die erzeugten N Wavelets $s(t-\tau_1)$ bis $s(t-\tau_N)$ mit dem Sendesignal S5 in der Art, dass sie eine zeitlich verschobene Version desselben darstellen. Gegebenenfalls können sie in der Amplitude modifiziert sein.

Die Linearform wird nun durch jeweils einen bevorzugten Matched-Filter $MF(s,\tau_1)$ bis $MF(s,\tau_N)$ gebildet. Der jeweilige Matched-Filter lässt jeweils den Signalanteil ungefiltert durch, der dem jeweils zugehörigen Signal $s(t-\tau_1)$ bis $s(t-\tau_N)$ entspricht. Alle anderen Signalanteile, die dem zugehörigen Signal $s(t-\tau_1)$ bis $s(t-\tau_N)$ nicht entsprechen, werden bevorzugt nicht durchgelassen oder zumindest stark gedämpft, dass sie bevorzugt ignoriert werden können. Der Pegel wird bevorzugt durch die nachfolgende Integration ermittelt, die noch Teil der Linearform LF ist. Mit den im zweiten Speicher ME2 abgespeicherten Werten wird bevorzugt eine Einheitssprungfunktion multipliziert und durch eine zweite Bank aus Matched-Filtern gesendet. Die Summe der Ausgangssignale dieser zweiten Matched-Filter-Bank ergibt dann bevorzugt das gesuchte Echo-Signal $echo(t_i)$. In diesem Beispiel ist der Untergrund allerdings nicht abgezogen.

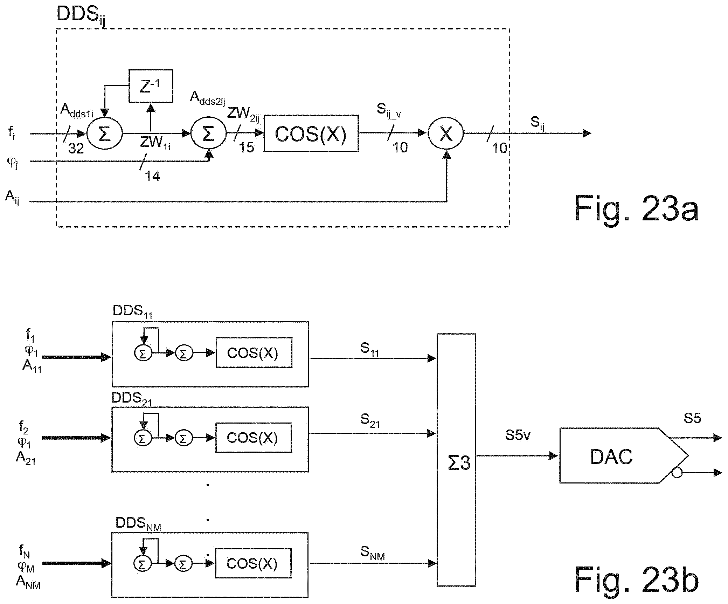

Die Figuren 23a und 23b zeigen ein bevorzugtes Beispiel eines Wavelet-Generators. In Figur 23a ist ein sogenannter Direct-Digital-Sequenzer DDS im Detail dargestellt. Der i-te DDS-Block erhält als Vorgabe eine 32-Bit-Zahl $f_i$, die die zu erzeugende Frequenz für den Kanal i,j vorgibt. Des Weiteren erhält er bevorzugt einen 14-Bit-Phasenoffset $\varphi_j$ und eine Amplitudenvorgabe $A_{i,j}$. Der vorgegebene Frequenzwert $f_i$ wird nun kontinuierlich durch den ersten DDS-Addierer $Adds_{1\_i}$ zu dem Zwischenwert $ZW_{1\_i}$ hinzuaddiert. Je höher $f_i$ ist, desto schneller kommt es zum Überlauf und damit zum Neustart. Zu den höchsten 14 Bit dieses Zwischenwertes $ZW_{1\_i}$ wird kontinuierlich durch den zweiten DDS-Addierer $Adds_{2\_i\_j}$ der 14-Bit-Phasenoffset $\varphi_j$ addiert. Es ergibt sich der zweite Zwischenwert $ZW_{2\_i,j}$. In diesem bevorzugten Beispiel ist dies ein 15-Bit-Wert. Dieser erzeugt mit Hilfe einer Look-Up-Table $cos(x)$ das Vor-Ausgangssignal $s_{i,j\_v}(t)$, das mit der Amplitudenvorgabe $A_{i,j}$ zum eigentlichen Ausgangssignal $s_{i,j}(t)$ multipliziert wird.

Der Vorteil dieses Verfahrens ist, dass das Ur-Wavelet - hier eine einzelne $cos(t)$-Schwingung - in dem Look-Up-Table abgelegt werden kann. Wird dieses als Speicher ausgelegt, so können beliebige Wavelet-Sätze beispielsweise während des Betriebs erzeugt und ggf. durch Umprogrammierung des Speichers ausgetauscht werden.

Es ist von Vorteil und bevorzugt, wenn aus dem Look-Up-Table auch das Signal zum Zurücksetzen des Addierers $Adds_{1\_i}$ gegeben wird. Erst durch dieses Zurücksetzen am Ende einer Periode kommt es zu einer echten Schwingung und periodischen Signalisierung.

Mehrere solche DDS-Blöcke werden bevorzugt durch einen Summierer $\Sigma3$ zu einem Signal S5_v zusammengefasst, aus dem durch Digital-zu-Analogwandlung DAC das Sendesignal S5 erzeugt werden kann. Neben dieser beispielhaften Realisierung des Wavelet-Generators sind sehr viele andere Realisierungsmöglichkeiten gegeben, die weit über den Inhalt dieser Offenbarung hinausgehen würden.

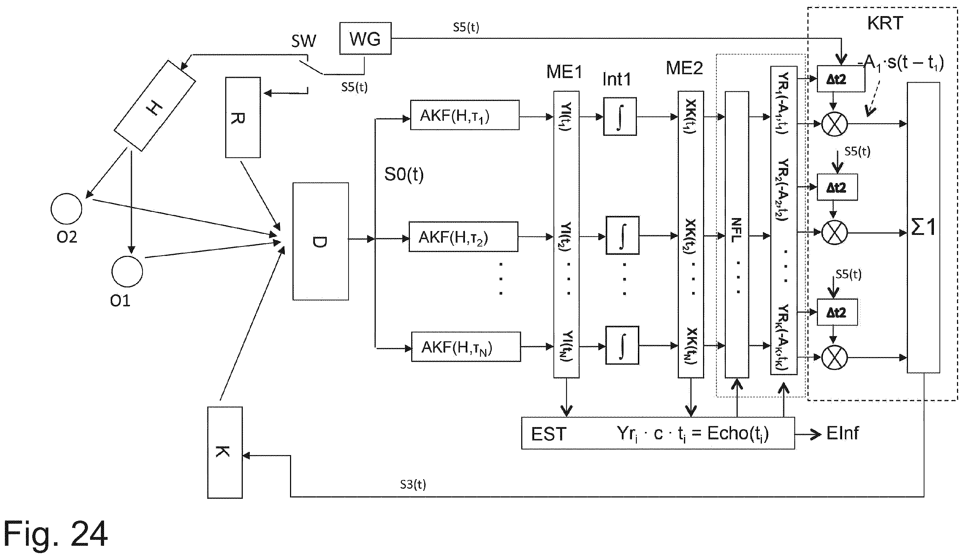

Figur 24 zeigt ein beispielhaftes bevorzugtes System mit Autokorrelationsfiltern $AKF(H, \tau_1)$ bis $AKF(H, \tau_N)$ als Linearform LF. Der Schätzer EST berechnet bevorzugt aus den Regelwert-Signalen $y_i(t_1)$ bis $y_i(t_N)$ und dessen zwischengespeicherten integrierten Signalen $xk(t_1)$ bis $xk(t_N)$ das Echosignal $Echo(t_i)$. Dieses Signal wird in diesem Beispiel als Echo-Information EInf ausgegeben. Der Schätzer kann dabei beispielsweise einen Viterbi-Algorithmus mit einer angepassten Markov-Kette einsetzen, um die Bewegung von zuvor bereits erkannten Objekten zu berücksichtigen. Das gezeigte beispielhafte System gemäß Figur 24 verwendet das erfindungsgemäße Verfahren im Zeitbereich, wobei der Entscheider (Schätzer) die Echos auswertet. Bei diesem Verfahren wird die Laufzeit des Lichts für die Bestimmung des Abstands verwendet.

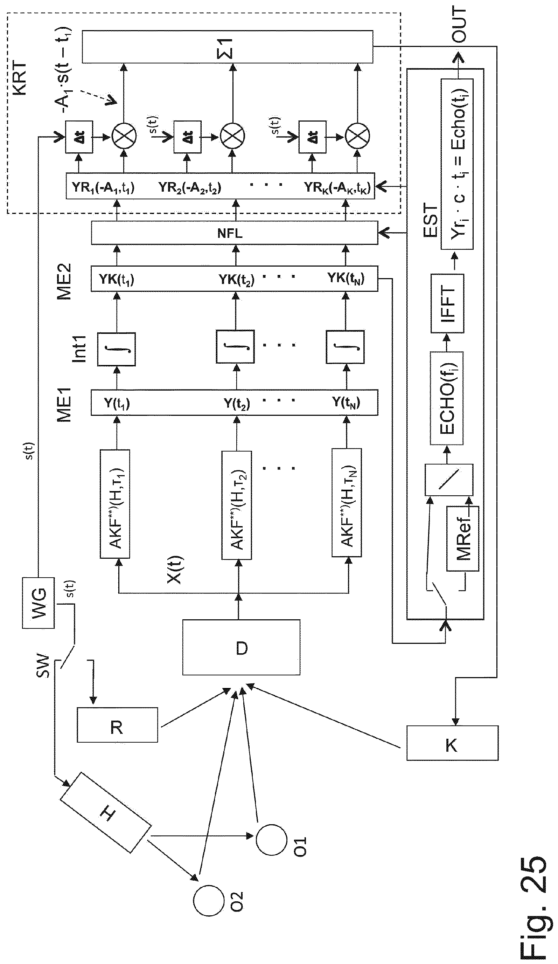

Figur 25 zeigt das System gemäß Figur 24, wobei bevorzugt unter Nutzung des Wiener-Chintschin-Theorems ein im Referenzspeicher MRef zwischengespeichertes Referenzspektrum aus dem Messspektrum eliminiert wird. Hierzu wird, wie oben bereits beschrieben, mittels des Referenzsenders R zunächst das Referenzspektrum $YK(t_1)$ bis $YK(t_n)$ erzeugt und dann gemessen. Das gemessene Spektrum wird im Speicher MRef abgelegt. Danach wird der Referenzsender R abgeschaltet und mit dem Sender H ein Objekt O oder mehreren Messobjekte O1, O2 vermessen. Das neue Spektrum $YK(t_1)$ bis $YK(t_n)$ wird bevorzugt durch die korrespondierenden Werte, die in dem Referenzspeicher MRef gespeichert sind, geteilt. Das sich ergebende Echo-Spektrum $ECHO(f_i)$ wird bevorzugt durch eine inverse Fourier-Transformation (IFFT) in das Echosignal zurückgewandet. Hier können wieder nicht-lineare Schätzalgorithmen zur Bestimmung der Reflexions-Peaks eingesetzt werden. Diese können die Kompensationssignalerzeugung unter Zuhilfenahme des nichtlinearen Filters NLF steuern.

Die ermittelten Reflexionen, die den Entfernungen zum jeweiligen Objekt entsprechen, werden von dem Entscheider (Schätzer EST) als Ausgangssignal OUT ausgegeben.

<div align="center">Bezugszeichenliste</div>

| a | Erster Verstärker für das Kompensatorspeisesignal |
|---|---|

(fortgesetzt)

| A | Beliebiges Signal für die Erläuterung der Linearform |
|---|---|
| $A_{i,j}$ | Amplitudenvorgabe im DDS |
| $Add_{1\_i}$ | Erster DDS Addierer |
| b | Zweiter Verstärker für das Kompensatorspeisesignal |
| B | Beliebiges Signal für die Erläuterung der Linearform |
| c | Dritter Verstärker für das Kompensatorspeisesignal |
| CT | Halios Regler |
| CTRS | Steuersignal-Bus für das nicht-lineare Filter NLF |
| Ctr | Ablaufsteuerung |
| d | Speisesignalverstärker |
| D | Empfänger (Detektor) |
| D1 | Empfänger (Detektor) |
| DDS | Direct Digital Sequencer (DDS) = eine beispielhafte Struktur eines Wavelet-Generators (WG) |
| $Dt_{i,j\_3}$ | erster Verzögerungssteuerbus |
| $Dt_{i,j\_5}$ | zweiter Verzögerungssteuerbus |
| $\Delta t1$ | Erste Verzögerungseinheit $\Delta t1$ für die Phasen- bzw. Verzögerungsregelung der Signalkomponenten des Sendesignals S5 |
| $\Delta t2$ | Zweite Verzögerungseinheit $\Delta t2$ für die Phasen- bzw. Verzögerungsregelung der Signalkomponenten des Kompensatorspeisesignals S3 |
| echo(t) | Echosignal (Zeitbereich) |
| EInf | Echo-Informationssignal |
| EST | Schätzer |
| $f_0$ | Grundfrequenz |
| f() | zweite Gewichtungsmatrix; Filterfunktion |
| $f_i$ | Frequenzvorgabe im DDS |
| $F_{i,j\_3}(t)$ | Rohkompensationssignal (in der Regel eine Signalmatrix.) |
| $F_{i,j\_5}(t)$ | Rohsendesignal (in der Regel eine Signalmatrix.) |
| g() | erste Gewichtungsmatrix; Filterfunktion |
| G1 | Signalgenerator wie im Stand der Technik beschrieben |
| H | Sender |
| H1 | Sender |
| I1 | Erste Übertragungsstrecke |
| I2 | Zweite Übertragungsstrecke |
| I3 | Dritte Übertragungsstrecke (Diese ist typischerweise in ihren Eigenschaften näherungsweise bekannt.) |
| INT1 | Erste Integratoreinheit aus einem oder mehreren Integratoren |
| INT2 | Zweite Integratoreinheit aus einem oder mehreren Integratoren |
| $inf_{i,j}(t)$ | Integriertes Ausgangssignal $inf_{i,j}(t)$ der zweiten Integratoreinheit INT2, Wert der Ausgangssignalmatrix $INF_{i,j}$ |
| $INF_{i,j}$ | integrierte Ausgangssignalmatrix $INF_{i,j}$ der zweiten Integratoreinheit INT2 |
| IR | Referenzübertragungsstrecke |

(fortgesetzt)

| | |
|---|---|
| K | Kompensationssender |
| LF | Linearform. Die Linearform verknüpft mindestens zwei Signale miteinander und ergibt mindestens ein Ausgangssignal. Bei den Signalen kann es sich auch um je eine Signal-Matrix handeln. Eine Linearform hat die Eigenschaft, dass die Multiplikation eines Eingangssignals mit einem Faktor a zu einer Multiplikation des oder der zugehörigen Ausgangssignale um den Faktor a führt. Die Verknüpfung der Summe zweier Signale mit einem dritten Signal mittels einer Linearform ist äquivalent zu der Summierung der Verknüpfungen jedes der beiden Signale vor der Addition mit dem dritten Signal mittels je einer gleichen Linearform und anschließender Addition. Typische Linearformen sind beispielsweise Skalar-Produkte, $L^2$-Normen, Faltungen, Autokorrelationsfilter, Matched-Filter etc. |
| LF(A,B) | Bezeichnet im Text die Verknüpfung zweier Signale A und B mittels einer Linearform. (siehe auch LF) |
| $M3_{ij}$ | Multipliziereinheit bestehend aus verschiedenen Multiplizierern |
| $M5_{ij}$ | Multipliziereinheit bestehend aus verschiedenen Multiplizierern |
| ME1 | Erster Speicher zur Speicherung der Werte der Signale $yi_{i,j}(t)$ der Ausgangssignalmatrix $YI_{i,j}$ der Linearform LF |
| ME2 | Zweiter Speicher zur Speicherung der Werte der Signale $xi_{i,j}(t)$ der Ausgangssignalmatrix $XI_{i,j}$ der ersten Integrationseinheit Int1 |
| MRef | Referenzspeicher. |
| $M_{ref\_i,j}(t)$ | Ausgangssignalmatrix des Referenzspeichers MRef. |
| $NF_{i,j}$ | Ausgangssignalmatrix $NF_{i,j}$ des nicht-linearen Filters NLF. Dabei müssen nicht alle Signale $nf_{i,j}(t)$ der Ausgangssignalmatrix $NF_{i,j}$ tatsächlich vorhanden oder von Null verschieden sein. |
| $nf_{i,j}(t)$ | Signal $nf_{i,j}(t)$ der Ausgangssignalmatrix $NF_{i,j}$ des nicht-linearen Filters NLF. Nicht alle Signale $nf_{i,j}(t)$ müssen in der Ausgangssignalmatrix $NF_{i,j}$ tatsächlich vorhanden oder von Null verschieden sein. |
| O | Objekt in der Übertragungsstrecke, bevorzugt zwischen der Übertragungsstrecke I1 und der Übertragungsstrecke I2. Das Objekt O kann auch selbst eine Übertragungsstrecke sein. |
| O1 | Erstes Objekt in der Übertragungsstrecke. Das Objekt O1 kann auch selbst eine Übertragungsstrecke sein. |
| O2 | Zweites Objekt in der Übertragungsstrecke. Das Objekt O2 kann auch selbst eine Übertragungsstrecke sein. |
| P | Ur-Wavelet-Periode |
| Pa | Ur-Wavelet-Periode |
| PB | Ur-Wavelet-Periode |
| R | Referenzsender |
| $S_{-1}$ bis $S_3$ | Signalanteile des Signals s(t), wobei s(t) im Frequenzbereich als S(f) dargestellt ist. |
| S0(t) | Empfängerausgangssignal |
| S0e(t) | Der Signalanteil im Empfängerausgangssignal S0(t), der auf die Modifikation des Übertragungsstreckenausgangssignals S22(t) durch das Objekt oder die Objekte (O1, O2...) zurückzuführen ist. Er korreliert daher mit dem entsprechenden Anteil (S22e(t)) im ersten Übertragungsstreckenausgangssignal S22(t). |
| $\varphi_i$ | Phasenvorgabe im DDS |
| S0r(t) | Referenzempfangssignal |
| S1(t) | Modifiziertes Empfängerausgangssignal |

| | | |
|---|---|---|
| $S1e(t)$ | Der Signalanteil im modifizierten Empfängerausgangssignal $S1(t)$, der auf die Modifikation des Übertragungsstreckenausgangssignals $S22(t)$ durch das Objekt (O) oder die Objekte (O1, 02...) zurückzuführen ist. Er korreliert daher mit dem entsprechenden Anteil ($S22e(t)$) im ersten Übertragungsstreckenausgangssignal $S22(t)$ und dem Anteil $S0e(t)$ im Empfängerausgangssignal $S0(t)$. | |
| $S3$ | Kompensatorspeisesignal | |
| $S4$ | Das Regelsignal $S4$ wird im Stand der Technik (Halios) als Ausgangssignal verwendet und stellt den Messwert des HALIOS Systems dar. | |
| $S4_{i,j}$ | Ausgangssignalmatrix $S4_{i,j}$ der Verstärkereinheit V | |
| $S4_{i,j}(t)$ | Ausgangssignal $S4_{i,j}(t)$ der Ausgangssignalmatrix $S4_{ij}$ der Verstärkereinheit V | |
| $S5$ | Sendesignal | |
| $S5\_a$ | Unmittelbares Sendesignal | |
| $S6_{i,j\_3}(t)$ | Kompensationspegelmatrix | |
| $S6_{i,j\_5}(t)$ | Sendepegelmatrix | |
| $S11$ | Referenzsignal | |
| $S21$ | Gesendetes Sendersignal | |
| $S22(t)$ | Erstes Übertragungsstreckenausgangssignal | |
| $S22e(t)$ | Der Signalanteil im ersten Übertragungsstreckenausgangssignal $S22$, der auf die Modifikation dieses Signals durch das Objekt oder die Objekte (O1, 02...) zurückzuführen ist. | |
| $S31$ | Gesendetes Kompensationssendersignal | |
| $S32$ | Zweites Übertragungsstreckenausgangssignal | |
| $S_{i,j}$ | Ausgangssignal-Matrix $S_{i,j}$ des Wavelet-Generators (WG) mit den Ausgangssignalen $s_{i,j}(t)$ | |
| $s_{i,j}(t)$ | Ausgangssignal $s_{i,j}(t)$ der Ausgangssignal-Matrix $S_{i,j}$ des Wavelet-Generators (WG) | |
| $S_{i,j\_a}(t)$ | Ausgangssignal $s_{i,j\_a}(t)$ des ersten Wavelet-Generators (WG_I) | |
| $S_{i,j\_b}(t)$ | Ausgangssignal $s_{i,j\_b}(t)$ des zweiten Wavelet-Generators (WG_II) | |
| $s_{i,j\_c}(t)$ | Ausgangssignal $s_{i,j\_c}(t)$ des dritten Wavelet-Generators (WG_III) | |
| $s_{i,j\_v}(t)$ | Vor-Ausgangssignal im DDS | |
| $s_{i,j\_5}(t)$ | verzögerten Basissignale $s_{i,j\_5}(t)$ der Senderseite | |
| $s_{i,j\_3}(t)$ | verzögerten Basissignale $s_{i,j\_3}(t)$ der Kompensationssenderseite | |
| $S(f)$ | Signalbetragsspektrum. Das Signalbetragsspektrum ist der Betrag der Fouriertransformierten des Signals $S(t)$ | |
| $S(t)$ | Allgemeines Signal, dass sich aus mehreren Harmonischen $S_{-1}$ bis $S_3$ zusammensetzt. Es handelt sich um ein Signal, das als beispielhaftes Empfängerausgangssignal $S0(t)$ zu Anfang dieser Offenbarung diskutiert wird. | |
| $SW$ | Schalter zum Umschalten des unmittelbaren Sendesignals $S5\_a$. | |
| $T$ | Periodenlänge / Zeitdauer | |
| $Ta$ | Periodenlänge / Zeitdauer | |
| $Tb$ | Periodenlänge / Zeitdauer | |
| $\Sigma 1$ | Erster Summierer. Dieser berechnet das Kompensatorspeisesignal $S3$. | |
| $\Sigma 2$ | Zweiter Summierer. Dieser berechnet das Sendesignal $S5$. | |
| $WG$ | Wavelet-Generator | |

(fortgesetzt)

| | |
|---|---|
| $XI_{i,j}$ | Ausgangssignalmatrix $XI_{i,j}$ der ersten Integrationseinheit INT1 |
| $xi_{i,j}(t)$ | integrierte Regelwert-Signale $xi_{i,j}(t)$ der Ausgangssignalmatrix $XI_{i,j}$ der ersten Integrationseinheit INT1 |
| $YI_{i,j}$ | Ausgangssignalmatrix $YI_{i,j}$ der Linearform LF |
| $YI_1$, $YI_{1\_i,j}$ | Erste Ausgangssignalmatrix $YI_{1\_i,j}$ der Linearform LF |
| $YI_2$, $YI_{2\_i,j}$ | Zweite Ausgangssignalmatrix $YI_{2\_i,j}$ der Linearform LF |
| $YI_3$, $YI_{3\_i,j}$ | Dritte Ausgangssignalmatrix $YI_{3\_i,j}$ der Linearform LF |
| $YI_4$, $YI_{4\_i,j}$ | Vierte Ausgangssignalmatrix $YI_{4\_i,j}$ der Linearform LF |
| $YI_5$, $YI_{5\_i,j}$ | Fünfte Ausgangssignalmatrix $YI_{5\_i,j}$ der Linearform LF |
| $YI_6$, $YI_{6\_i,j}$ | Sechste Ausgangssignalmatrix $YI_{6\_i,j}$ der Linearform LF |
| $yi_{i,j}(t)$, $yi_{i,j}$ | Regelwert-Signale $yi_{i,j}(t)$ der Ausgangssignalmatrix $YI_{i,j}$ der Linearform LF |
| $yi_{1\_i,j}(t)$, $yi_{1-i,j}$ | Erste Regelwert-Signale $yi_{1\_i,j}(t)$ der ersten Ausgangssignalmatrix $YI_{1\_i,j}$ der Linearform LF, wobei diese durch Verknüpfung mittels der Linearform LF gebildet werden. |
| $yi_{2\_i,j}(t)$, $yi_{2\_i,j}$ | Zweite Regelwert-Signale $yi_{2\_i,j}(t)$ der ersten Ausgangssignalmatrix $YI_{2\_i,j}$ der Linearform LF, wobei diese in der Linearform LF durch Multiplikation gebildet werden. |
| $yi_{3\_i,j}(t)$, $Yi_{3\_i,j}$ | Dritte Regelwert-Signale $yi_{3\_i,j}(t)$ der ersten Ausgangssignalmatrix $YI_{3\_i,j}$ der Linearform LF, wobei diese in der Linearform LF durch Multiplikation und anschließende Filterung und/oder Integration gebildet werden. |
| $yi_{4\_i,j}(t)$, $yi_{4\_i,j}$ | Vierte Regelwert-Signale $yi_{4\_i,j}(t)$ der ersten Ausgangssignalmatrix $YI_{4\_i,j}$ der Linearform LF, wobei diese in der Linearform LF durch Bildung eines Skalar-Produkts gebildet werden. |
| $yi_{5-i,j}(t)$, $yi_{5-i,j}$ | Fünfte Regelwert-Signale $yi_{5\_i,j}(t)$ der ersten Ausgangssignalmatrix $YI_{5\_i,j}$ der Linearform LF, wobei diese in der Linearform LF durch eine Korrelationsfilter gebildet werden. |
| $yi_{6\_i,j}(t)$, $yi_{6\_i,j}$ | Sechste Regelwert-Signale $yi_{6\_i,j}(t)$ der ersten Ausgangssignalmatrix $YI_{6\_i,j}$ der Linearform LF, wobei diese in der Linearform LF durch ein Matched-Filter gebildet werden. |
| $YIn_{i,j}$ | Ausgangssignalmatrix $YIn_{i,j}$ mit den Regelwert-Signalen $yi_{i,j}(t_n)$ zum Zeitpunkt $t_n$ |
| $yi_{i,j}(t_n)$, $yin_{i,j}$ | Regelwert-Signale $yi_{i,j}(t_n)$ der Ausgangssignalmatrix $YIn_{i,j}$ zum Zeitpunkt $t_n$ |
| $ZI_{i,j}$ | Ausgangssignalmatrix $ZI_{i,j}$ der zweiten Speichereinheit ME2 |
| $zi_{i,j}(t)$ | Regelwert-Signale $zi_{i,j}(t)$ der Ausgangssignalmatrix $ZI_{i,j}$ der zweiten Speichereinheit ME2 |
| $ZW_{1\_i}$ | Erster Zwischenwert im DDS |
| $ZW_{2\_i}$ | Zweiter Zwischenwert im DDS |

## Patentansprüche

1. Sensorsystem mit einer Rückführung eines Kompensationsspeisesignal zur Erkennung des Abstands oder von Eigenschaften mindestens eines Objekts (O1, O2) in einer optischen Übertragungsstrecke (I) zwischen einem Sender (H) und einem Empfänger (D), wobei das System auf einer rückkoppelnden Regelung basiert; umfassend

- einen optischen Sender (H) und einen Empfänger (D),
- wobei der Sender (H) mit einem Speisesignal (S5) angesteuert wird, um ein bekanntes Sendesignal (S21) des Senders (H) in die Übertragungsstrecke (I) hinein zu senden, das nach Durchgang durch mindestens einen Teil der Übertragungsstrecke (I) und Beeinflussung durch ein Objekt (O1, O2) zu einem Empfänger (D) gelangt und von dem Empfänger als Empfangssignal (S22) empfangen wird,
- wobei der Empfänger (D) aus dem Empfangssignal (S22) ein Empfängerausgangssignal (S0) mit einem Empfängerausgangssignalanteil (SOe) bildet,

- wobei dem Empfänger (D) ein Kompensationsspeisesignal (S3) zugeführt wird und das Kompensationsspeisesignal (S3) mit dem Empfangssignal (S22) überlagert wird,

- eine Verarbeitungseinheit (LF), um ein das Empfängerausgangssignal (S0) umfassendes Verarbeitungszwischensignal weiterzuverarbeiten und um mindestens einen Empfängerausgangssignalanteil (SOe) zu separieren und daraus Regelwert-Signale ($yi_{i,j}$) zu erzeugen,

- eine Rücktransformations-Einheit, die eines der weiterverarbeiteten Regelwert-Signale ($yi_{i,j}$) rückführt in einer Rückkopplungsschleife, so dass das rückgeführte Regelwert-Signal ($yi_{i,j}$) an dem Empfänger (D) anliegt,

- eine Signal-Erzeugungs-Einheit, die Basissignale erzeugt,

- die Signal-Erzeugungs-Einheit einen Wavelet-Generator (WG) umfasst, der Wavelets ($s_{i,j}$) als Basissignale erzeugt, und der Wavelet-Generator (WG) für jede Systemperiode ein Ur-Wavelet ($s_{1,1}$, $s_{1,1\_a}$, $s_{1,1\_b}$) als Basissignal erzeugt, das periodisch mit einer Ur-Wavelet-Periode (P, Pa, Pb) ist,

wobei

- ein Regelwert-Signal ($yi_{i,j}(t)$) ein Maß für die Eigenschaft oder den Abstand eines Objekts ist,

**dadurch gekennzeichnet, dass**

- Basissignale der Signal-Erzeugungs-Einheit keine Orthogonalität zueinander aufweisen;

- die Verarbeitungseinheit (LF) die Regelwert-Signale dadurch erzeugt, dass das Verarbeitungszwischensignal mit jedem der Basissignale multipliziert wird, so dass für jedes Basissignal ein Regelwert-Signal ($yi_{i,j}$) gebildet wird;

- ein nicht-linearer Filter (NLF) zwischen der Verarbeitungseinheit (LF) und der Rücktransformations-Einheit angeordnet ist,

- der nicht-lineare Filter (NLF) derart ausgebildet ist, dass das Maximum der Regelwert-Signale ($yi_{i,j}$) gesucht wird und dass so das Regelwert-Signal ($yi_{i,j}$) selektiert und als NLF-Ausgangssignal ($nf_{i,j}$) ausgegeben wird, das ein Maß für die Eigenschaft oder den Abstand eines Objekts ist,

und

das Speisesignal (S5) aus der Summe der Basissignale gebildet wird und dem Sender zugeführt wird, und die Rücktransformations-Einheit mit dem NLF-Ausgangssignal ($nf_{i,j}$) eine Kompensationsrücktransformation (KRT) durchführt, wobei das NLF-Ausgangssignal ($nf_{i,j}$) mit den korrespondierenden Basissignalen multipliziert wird und durch Summation das Kompensationsspeisesignal (S3) erzeugt wird, das dem Empfänger (D) zugeführt wird und mit dem Empfangssignal (S22) überlagert wird.

2. Sensorsystem mit einer Rückführung eines Kompensationsspeisesignal zur Erkennung des Abstands oder von Eigenschaften mindestens eines Objekts (O1, O2) in einer optischen Übertragungsstrecke (I) zwischen einem Sender (H) und einem Empfänger (D), wobei das System auf einer rückkoppelnden Regelung basiert; umfassend

- einen optischen Sender (H) und einen Empfänger (D),

- wobei der Sender (H) mit einem Speisesignal (S5) angesteuert wird, um ein bekanntes Sendesignal (S21) des Senders (H) in die Übertragungsstrecke (I) hinein zu senden, das nach Durchgang durch mindestens einen Teil der Übertragungsstrecke (I) und Beeinflussung durch ein Objekt (O1, O2) zu einem Empfänger (D) gelangt und von dem Empfänger als Empfangssignal (S22) empfangen wird,

- wobei der Empfänger (D) aus dem Empfangssignal (S22) ein Empfängerausgangssignal (S0) mit einem Empfängerausgangssignalanteil (SOe) bildet,

- wobei dem Empfänger (D) ein Kompensationsspeisesignal (S3) zugeführt wird und das Kompensationsspeisesignal (S3) mit dem Empfangssignal (S22) überlagert wird,

- eine Verarbeitungseinheit (LF), um ein das Empfängerausgangssignal (S0) umfassendes Verarbeitungszwischensignal weiterzuverarbeiten und um mindestens einen Empfängerausgangssignalanteil (SOe) zu separieren und daraus Regelwert-Signale ($yi_{i,j}$) zu erzeugen,

- eine Rücktransformations-Einheit, die eines der weiterverarbeiteten Regelwert-Signale ($yi_{i,j}$) rückführt in einer Rückkopplungsschleife, so dass das rückgeführte Regelwert-Signal ($yi_{i,j}$) an dem Empfänger (D) anliegt,

- eine Signal-Erzeugungs-Einheit, die Basissignale erzeugt,

- die Signal-Erzeugungs-Einheit einen Wavelet-Generator (WG) umfasst, der Wavelets ($s_{i,j}$) als Basissignale erzeugt, und der Wavelet-Generator (WG) für jede Systemperiode ein Ur-Wavelet ($s_{1,1}$, $s_{1,1\_a}$, $s_{1,1\_b}$) als Basissignal erzeugt, das periodisch mit einer Ur-Wavelet-Periode (P, Pa, Pb) ist,

wobei

- ein Regelwert-Signal ($yi_{i,j}(t)$) ein Maß für die Eigenschaft oder den Abstand eines Objekts ist,

**dadurch gekennzeichnet, dass**

- Basissignale der Signal-Erzeugungs-Einheit keine Orthogonalität zueinander aufweisen;

- die Verarbeitungseinheit (LF) die Regelwert-Signale dadurch erzeugt, dass das Verarbeitungszwischensignal mit jedem der Basissignale multipliziert wird, so dass für jedes Basissignal ein Regelwert-Signal ($yi_{i,j}$) gebildet wird;

- ein nicht-linearer Filter (NLF) zwischen der Verarbeitungseinheit (LF) und der Rücktransformations-Einheit angeordnet ist,

- der nicht-lineare Filter (NLF) derart ausgebildet ist, dass das Maximum der Regelwert-Signale ($yi_{i,j}$) gesucht wird und dass so das Regelwert-Signal ($yi_{i,j}$) selektiert und als NLF-Ausgangssignal ($nf_{i,j}$) ausgegeben wird, das ein Maß für die Eigenschaft oder den Abstand eines Objekts ist, und

das Kompensationsspeisesignal (S3) aus der Summe der Basissignale gebildet wird und dem Empfänger (D) zugeführt wird und mit dem Empfangssignal überlagert wird, und

die Rücktransformations-Einheit mit dem NLF-Ausgangssignal ($nf_{i,j}$) eine Senderücktransformation (SRT) durchführt, wobei das NLF-Ausgangssignal ($nf_{i,j}$) mit den korrespondierenden Basissignalen multipliziert wird und durch Summation das Speisesignal (S5) erzeugt wird.

3. Sensorsystem nach Anspruch 1 oder 2, **dadurch gekennzeichnet, dass** der nicht-lineare Filter (NLF) ein Maximum-Schätzer ist.

4. Sensorsystem nach Anspruch 1 oder 2, **dadurch gekennzeichnet, dass** ein Maximum-Schätzer aus den Regelwert-Signalen das Maximum sucht und der nicht-lineare Filter (NLF) mittels des Maximum-Schätzers (EST) gesteuert wird; wobei der nicht-lineare Filter (NLF) eine Multiplikation der Regelwert-Signale ($yi_{i,j}$) mit Steuersignalen des Maximum-Schätzers (EST) durchführt.

5. Sensorsystem nach Anspruch 1 oder 2, **dadurch gekennzeichnet, dass** der nicht-lineare Filter (NLF) eine Schaltmatrix mit Schaltelementen ist, die durch einen Steuersignal-Bus (CTRS) eines Maximum-Schätzers (EST) kontrolliert werden, wobei der Maximum-Schätzer das Maximum der Regelwert-Signale ermittelt.

6. Sensorsystem nach einem der Ansprüche 3 bis 5, **dadurch gekennzeichnet, dass** der Maximum-Schätzer ein neuronales Netz umfasst.

7. Sensorsystem nach einem der vorhergehenden Ansprüche, **dadurch gekennzeichnet, dass** das Sensorsystem (1) mit einer Systemperiode einer Periodenlänge ($T$, $T_a$, $T_b$) getaktet ist, die für jede Periode unterschiedlich sein kann und jedenfalls von der Periodenlänge Null verschieden ist.

8. Sensorsystem nach dem vorausgehenden Anspruch, **dadurch gekennzeichnet, dass** der Wavelet-Generator (WG) gleichzeitig eine Teilmenge von n x m periodischen Tochter-Wavelets ($s_{i,j}$, $s_{i,j\_a}$, $s_{i,j\_b}$ mit $1 \leq i \leq n$, $1 \leq j \leq m$) aus dem Ur-Wavelet erzeugt, wobei die Tochter-Wavelets ($s_{i,j}$, $s_{i,j\_a}$, $s_{i,j\_b}$ mit $1 \leq i \leq n$, $1 \leq j \leq m$)

- gegenüber dem jeweiligen Ur-Wavelet ($s_{1,1}$, $s_{1,1\_a}$, $s_{1,1\_b}$) zeitlich um den Faktor $1/j$ gestaucht oder um einen Faktor j gestreckt sind und

- um einen Faktor $(n-1)*T/j$ bzw. $(n-1)*T_a/j$ bzw. $(n-1)*T_b/j$ oder $(n-1)*T*j$ bzw. $(n-1)*T_a*j$ bzw. $(n-1)*T_b*j$ gegenüber dem korrespondierenden Wavelet $s_{1,j}$ bzw. $s_{1,j\_a}$ bzw. $s_{1,j\_b}$ verzögert sind, oder

- um einen Faktor $(n-1)*T$ bzw. $(n-1)*T_a$ bzw. $(n-1)*T_b$ gegenüber dem korrespondierenden Wavelet $s_{1,j}$ bzw. $s_{1,j\_a}$ bzw. $s_{1,j\_b}$ verzögert sind und

- eine Tochter-Wavelet-Periode der Periodenlänge $P/j$ bzw. $P_a/j$ bzw. bzw. $P_b/j$ oder $P*j$ bzw. $P_a*j$ bzw. bzw. $P_b*j$ aufweisen.

9. Sensorsystem nach Anspruch 5 oder 6, **dadurch gekennzeichnet, dass** die erste Verarbeitungseinheit (LF) das Verarbeitungszwischensignal mit jeweils einem der Wavelets ($s_{i,j}$, $s_{i,j\_a}$, $s_{1,j\_b}$) verknüpft, wobei das Ergebnis dieser n x m Verknüpfungen die Regelwert-Matrix (YI) in Form der ersten Regelwert-Signale ($yi_{i,j}$) ist und wobei die Verknüpfungen, die die erste Verarbeitungseinheit (LF) ausführt, mit Hilfe jeweils einer der folgenden Möglichkeiten erfolgt:

a. einer stets gleichartigen Linearform,
b. einer Multiplikation,
c. einer Multiplikation gefolgt von einer Filterung oder Integration,
d. eines stets gleichartigen Skalar-Produkts,
e. eines stets gleichartigen Korrelationsfilters.

10. Sensorsystem nach einem der vorhergehenden Ansprüche, **dadurch gekennzeichnet, dass** im Signalablauf des Sensorsystems (1) zwischen der Verarbeitungseinheit (LF) und dem nicht-linearen Filter (NLF)

ein erster Speicher (ME1), in dem eines der Regelwert-Signale $(yi_{i,j})$ für zumindest einen Speicherzeitpunkt $(t_n)$ gespeichert ist, und/oder

ein erster Integrator (INT1), der eines der an seinem Eingang anliegenden Regelwert-Signale $(yi_{i,j}, yi_{i,j}(t_n))$ integriert, und/oder ei

n zweiter Speicher (ME2), in dem mindestens eines der an seinem Eingang anliegenden Regelwert-Signale $(yi_{i,j}, yi_{i,j}(t_n), xi_{i,j})$ für zumindest einen Speicherzeitpunkt $(t_m)$ gespeichert ist,

angeordnet ist.

11. Sensorsystem nach einem der vorhergehenden Ansprüche, **dadurch gekennzeichnet, dass** im Signalablauf des Sensorsystems (1) hinter dem nicht-linearen Filter (NLF) ein zweiter Integrator (INT2), mit dem das Ausgangssignal $(NF_{i,j})$ des nicht-linearen Filters (NLF) integriert wird, und/oder ein Verstärker (V), der eines an seinem Eingang anliegenden Signale verstärkt, angeordnet ist.

12. Sensorsystem nach einem der vorhergehenden Ansprüche mit einer Senderücktransformation (SRT) **dadurch gekennzeichnet, dass**

- ein Multiplikator $(M5_{ij})$ ein mit einer ersten Filterfunktion (f(S)) gefiltertes Ausgangssignal $(NF_{i,j})$ des nicht-linearen Filters (NLF) mit einem zugeordneten Wavelet $(s_{i,j}, s_{i,j\_b})$ zu einem Sendevorsignal $(F_{1,j\_5})$ multipliziert und

- ein Summierer $(\Sigma 2)$ aus allen Sendevorsignalen $(F_{i,j\_5})$ durch Summierung das Speisesignal (S5) erzeugt.

13. Sensorsystem nach einem der vorhergehenden Ansprüche mit einer Kompensatorrücktransformation (KRT) **dadurch gekennzeichnet, dass** in einer Multipliziereinheit $(M3_{ij})$ ein mit einer zweiten Filterfunktion (g(S)) gefiltertes Ausgangssignal $(NF_{i,j})$ des nicht-linearen Filters (NLF) mit einem zugeordneten Wavelet $(s_{i,j}, s_{i,j\_b})$ zu einem Kompensationsvorsignal $(F_{i,j\_3})$ multipliziert wird

und

- ein Summierer $(\Sigma 1)$ aus allen Kompensationsvorsignalen $(F_{i,j\_3})$ durch Summierung ein Kompensationsspeisesignal (S3) erzeugt.

14. Sensorsystem nach einem der vorhergehenden Ansprüche, **dadurch gekennzeichnet, dass** das nicht-lineare Filter (NLF) di

e Verzögerung eines der Wavelets $(s_{i,j})$ zu einem ersten verzögerten Wavelet $(s_{i,j\_5})$ durch eine erste Verzögerungsvorrichtung $(\Delta t1)$ und/oder

die Verzögerung eines der Wavelets $(s_{i,j})$ zu einem zweiten verzögerten Wavelet $(s_{i,j\_3})$ durch eine zweite Verzögerungsvorrichtung $(\Delta t2)$

steuert.

15. Sensorsystem nach einem der vorhergehenden Ansprüche, **dadurch gekennzeichnet, dass**

- ein linearer Filter und/oder ein Integrator (INT1) im Signalpfad vor dem nicht-linearen Filter (NLF) und/oder

- ein linearer Filter und/oder ein Integrator (INT2) im Signalpfad hinter dem nicht-linearen Filter (NLF) angeordnet ist.

16. Sensorsystem nach Anspruch 10, **gekennzeichnet durch** einen Referenzsender (R), der mit dem Speisesignal (S5) gespeist wird und zumindest zeitweise ein Referenzsignal (S11) direkt zu dem Empfänger (D) sendet, das am Empfänger (D) als Referenzempfangssignal (S0r) empfangen und in der Verarbeitungseinheit (LF) weiterverarbeitet wird,

wobei

- bevorzugt in einem Referenzspeicher $(MRef_{i,j})$

i. mindestens ein Regelwert-Signal $(yi_{i,j})$ der Regelwert-Matrix $(YI_{i,j})$ und/oder

ii. mindestens eines der gespeicherten Regelwert-Signale $(yi_{i,j}(t_n))$ der Ausgangssignalmatrix $(YIn_{i,j})$ zum Zeitpunkt $t_n$ und/oder

iii. mindestens eines der integrierten Regelwert-Signale ($xi_{i,j}$) der Ausgangssignalmatrix ($XI_{i,j}$) der ersten Integrationseinheit (INT1) und/oder

iv. mindestens eines der Regelwert-Signale ($zi_{i,j}$) der Ausgangssignalmatrix ($ZI_{i,j}$) der zweiten Speichereinheit (ME2) und/oder

v. mindestens eines der Signale ($nf_{i,j}$) der Ausgangssignalmatrix ($NF_{i,j}$) des nicht-linearen Filters (NLF) und/oder

vi. mindestens ein integriertes Ausgangssignal ($inf_{i,j}$) der Ausgangssignalmatrix ($INF_{i,j}$) der zweiten Integratoreinheit (INT2) und/oder

vii. mindestens ein Ausgangssignal ($S4_{i,j}$) der Ausgangssignalmatrix ($S4_{ij}$) der Verstärkereinheit (V) und/oder

viii. ein aus diesen Signalen abgeleitetes Signal als Referenzinformation abgelegt wird, und

- besonders bevorzugt mindestens eines der Regelwert-Signale ($yi_{i,j}$) in einer zeitlichen Tiefe von mehr als einem Wert speichert.

**17.** Sensorsystem nach Anspruch 10, **dadurch gekennzeichnet, dass**

a. eines der Regelwert-Signale ($yi_{i,j}$) der Regelwert-Matrix ($YI_{i,j}$) oder

b. eines der gespeicherten Regelwert-Signale ($yi_{i,j}(t_n)$) der Ausgangssignalmatrix ($YIn_{i,j}$) zum Zeitpunkt $t_n$ oder

c. eines der integrierten Regelwert-Signale ($xi_{i,j}$) der Ausgangssignalmatrix ($XI_{i,j}$) der ersten Integrationseinheit (INT1) oder

d. eines der Regelwert-Signale ($zi_{i,j}$) der Ausgangssignalmatrix ($ZI_{i,j}$) der zweiten Speichereinheit (ME2) oder

e. eines der Signale ($nf_{i,j}$) der Ausgangssignalmatrix ($NF_{i,j}$) des nicht-linearen Filters (NLF) oder

f. mindestens ein integriertes Ausgangssignal ($inf_{i,j}$) der Ausgangssignalmatrix ($INF_{i,j}$) der zweiten Integratoreinheit (INT2) oder

g. mindestens ein Ausgangssignal ($S4_{i,j}$) der Ausgangssignalmatrix ($S4_{i,j}$) der Verstärkereinheit (V) oder

h. ein aus diesen Signalen abgeleitetes Signal

in einer Echo-Auswerteeinheit derart weiterverarbeitet wird, dass die Echoanteile (EInf) des Empfangssignals (S22) oder ein Echo-Zeitsignal (echo(t)) bestimmt werden, wobei bevorzugt das Echo-Zeitsignal (echo(t)) ausgegeben oder weiterverarbeitet wird, um daraus die Entfernung zu einem Objekt zu bestimmen oder um auf das Vorhandensein weiterer Objekte zu schließen, deren Entfernung nicht bestimmt wird.

**18.** Sensorsystem nach einem der vorhergehenden Ansprüche, **dadurch gekennzeichnet, dass** das Objekt (O) eine der Übertragungsstrecken (I, I1, I2) repräsentiert und bevorzugt ein Regelwert-Signal ($yi_{i,j}(t)$) ein Maß für die Eigenschaft der Übertragungsstrecke (I, I1, I2) selbst ist.

**Claims**

**1.** Sensor system with a feedback of a compensation supply signal for detecting the distance or properties of at least one object (O1, O2) in an optical transmission path (I) between a transmitter (H) and a receiver (D), wherein the system is based on feedback control;
comprising

- an optical transmitter (H) and a receiver (D),
- wherein the transmitter (H) is triggered by a supply signal (S5) to transmit a known transmission signal (S21) of the transmitter (H) into the transmission path (I), which transmission signal, after passing through at least a part of the transmission path (I) and being influenced by an object (O1, O2), reaches a receiver (D) and is received by the receiver as reception signal (S22),
- wherein the receiver (D) generates a receiver output signal (S0) with a receiver output signal portion (SOe) from the reception signal (S22),
- wherein a compensation supply signal (S3) is fed to the receiver (D) and the compensation supply signal (S3) is superimposed with the reception signal (S22),
- a processing unit (LF) for further processing a processing interim signal comprising the receiver output signal (S0) and for separating at least one receiver output signal portion (SOe) and creating control value signals ($yi_{i,j}$) therefrom,
- a reverse transformation unit which refeeds one of the further processed control value signals ($yi_{i,j}$) in a feedback loop so that the refed control value signal ($yi_{i,j}$) is present at the receiver (D),

- a signal-creating unit that generates base signals,
- the signal-creating unit comprises a wavelet generator (WG) that generates wavelets ($s_{i,j}$) as base signals, and the wavelet generator (WG) for each system period generates a primary wavelet ($s_{1,1}$, $s_{1,1\_a}$, $s_{1,1\_b}$) as base signal, which is periodic with a primary wavelet period (P, Pa, Pb),

wherein

- a control value signal ($yi_{i,j}(t)$) is a measure for the property or the distance of an object,

**characterized in that**

- base signals of the signal-creating unit are not orthogonal to one another;
- the processing unit (LF) generates the control value signals by multiplying the processing interim signal by each base signal so that for each base signal a control value signal ($yi_{i,j}$) is formed;
- a non-linear filter (NLF) is arranged between the processing unit (LF) and the reverse transformation unit,
- the non-linear filter (NLF) is designed in such a manner that the maximum of control value signals ($yi_{i,j}$) is searched for and thus the control value signal ($yi_{i,j}$) is selected and output as NLF-output signal ($nf_{i,j}$), which is a measure for the property or the distance of an object,

and

- the supply signal (S5) is formed from the sum of the base signals and is supplied to the transmitter, and
- the reverse transformation unit carries out a compensation reverse transformation (KRT) with the NLF-output signal ($nf_{i,j}$), wherein the NLF-output signal ($nf_{i,j}$) is multiplied by the corresponding base signals, and the compensation supply signal (S3) is formed by summation, which supply signal is fed to the receiver (D) and is superimposed with the reception signal (S22).

2. Sensor system with a feedback of a compensation supply signal for detecting the distance or properties of at least one object (O1, O2) in an optical transmission path (I) between a transmitter (H) and a receiver (D), wherein the system is based on feedback control;

comprising

- an optical transmitter (H) and a receiver (D),
- wherein the transmitter (H) is triggered by a supply signal (S5) to transmit a known transmission signal (S21) of the transmitter (H) into the transmission path (I), which transmission signal, after passing through at least a part of the transmission path (I) and being influenced by an object (O1, O2), reaches a receiver (D) and is received by the receiver as reception signal (S22),
- wherein the receiver (D) generates a receiver output signal (S0) with a receiver output signal portion (SOe) from the reception signal (S22),
- wherein a compensation supply signal (S3) is fed to the receiver (D) and the compensation supply signal (S3) is superimposed with the reception signal (S22),
- a processing unit (LF) for further processing a processing interim signal comprising the receiver output signal (S0) and for separating at least one receiver output signal portion (SOe) and creating control value signals ($yi_{i,j}$) therefrom,
- a reverse transformation unit which refeeds one of the further processed control value signals ($yi_{i,j}$) in a feedback loop so that the refed control value signal ($yi_{i,j}$) is present at the receiver (D),
- a signal-creating unit that generates base signals,
- the signal-creating unit comprises a wavelet generator (WG) that generates wavelets ($s_{i,j}$) as base signals, and the wavelet generator (WG) for each system period generates a primary wavelet ($s_{1,1}$, $s_{1,1\_a}$, $s_{1,1\_b}$) as base signal, which is periodic with a primary wavelet period (P, Pa, Pb),

wherein

- a control value signal ($yi_{i,j}(t)$) is a measure for the property or the distance of an object,

**characterized in that**

- base signals of the signal-creating unit are not orthogonal to one another;
- the processing unit (LF) generates the control value signals by multiplying the processing interim signal by each base signal so that for each base signal a control value signal ($yi_{i,j}$) is formed;
- a non-linear filter (NLF) is arranged between the processing unit (LF) and the reverse transformation unit,
- the non-linear filter (NLF) is designed in such a manner that the maximum of control value signals ($yi_{i,j}$) is searched for and thus the control value signal ($yi_{i,j}$) is selected and output as NLF-output signal ($nf_{i,j}$), which is a measure for the property or the distance of an object,

and

the compensation supply signal (S3) is formed from the sum of the base signals and is supplied to the receiver (D) and is superimposed with the reception signal, and

the reverse transformation unit with the NLF-output signal ($nf_{i,j}$) carries out a transmission reverse transformation (SRT), wherein the NLF-output signal ($nf_{i,j}$) is multiplied by the corresponding base signals, and the supply signal (S5) is formed by summation.

3. Sensor system according to claim 1 or 2, **characterized in that** the non-linear filter (NLF) is a maximum estimator.

4. Sensor system according to claim 1 or 2, **characterized in that** a maximum estimator searches for the maximum of the control value signals, and the non-linear filter (NLF) is controlled by means of the maximum estimator (EST); wherein the non-linear filter (NLF) carries out a multiplication of the control value signals ($yi_{i,j}$) by the control signals of the maximum estimator (EST).

5. Sensor system according to claim 1 or 2, **characterized in that** the non-linear filter (NLF) is a switching matrix with switching elements that are controlled by a control signal bus (CTRS) of a maximum estimator (EST), wherein the maximum estimator determines the maximum of the control value signals.

6. Sensor system according to any one of the claims 3 to 5, **characterized in that** the maximum estimator comprises a neural network.

7. Sensor system according to any one of the preceding claims, **characterized in that** the sensor system (1) is clocked with a system period of a period length ($T, T_a, T_b$), which can be different for each period and in any case is different from the period length zero.

8. Sensor system according to the preceding claim, **characterized in that** the wavelet generator (WG) at the same time creates a subset of n x m periodical daughter wavelets ($s_{i,j}, s_{i,j\_a}, s_{i,j\_b}$ with $1 \leq i \leq n$, $1 \leq j \leq m$) from the primary wavelet, wherein the daughter wavelets ($s_{i,j}, s_{i,j\_a}, s_{i,j\_b}$ with $1 \leq i \leq n$, $1 \leq j \leq m$)

- are temporally compressed by the factor $1/j$ or stretched by a factor j compared with the corresponding primary wavelet ($s_{1,1}, S_{1,1\_a}, S_{1,1\_b}$) and
- are delayed by a factor $(n-1)*T/j$ and/or $(n-1)*T_a/j$ and/or $(n-1)*T_b/j$ or $(n-1)*T*j$ and/or $(n-1)*T_a*j$ and/or $(n-1)*T_b*j$ compared with the corresponding wavelet $s_{1,j}$ and/or $S_{1,j\_a}$ and/or $s_{1,j\_b}$,
or
- are delayed by a factor $(n-1)*T$ and/or $(n-1)*T_a$ and/or $(n-1)*T_b$ compared with the corresponding wavelet $s_{1,j}$ and/or $s_{1,j\_a}$ and/or $s_{1,j\_b}$ and
- have a daughter-wavelet period of the period length $P/j$ and/or $P_a/j$ and/or $P_b/j$ or $P*j$ and/or $P_a*j$ and/or $P_b*j$.

9. Sensor system according to claim 5 or 6, **characterized in that** the first processing unit (LF) links the processing interim signal to one of the wavelets ($s_{i,j}, s_{i,j\_a}, s_{i,j\_b}$) each, wherein the result of these n x m links is the control value matrix (YI) in the form of the first control value signals ($yi_{i,j}$) and
wherein the links that are executed by the first processing unit (LF) are carried out by means of one of the following possibilities:

a. a consistently uniform linear form,
b. a multiplication,
c. a multiplication followed by a filtration or integration,
d. a consistently uniform scalar product,
e. a consistently uniform correlation filter.

10. Sensor system according to any one of the preceding claims, **characterized in that** in the signal sequence of the sensor system (1) between the processing unit (LF) and the non-linear filter (NLF) a
first memory (ME1) is arranged, in which one of the control value signals ($yi_{i,j}$) is stored for at least one storage instant ($t_n$), and/or
a first integrator (INT1) is arranged that integrates one of the control value signals ($yi_{i,j}, yi_{i,j}(t_n)$) present at its entrance, and/or
a second memory (ME2) is arranged, in which at least one of the control value signals ($yi_{i,j}, yi_{i,j}(t_n), xi_{i,j}$) present at its entrance is stored for at least one storage instant ($t_m$).

11. Sensor system according to any one of the preceding claims, **characterized in that** in the signal sequence of the sensor system (1) behind the non-linear filter (NLF), a second integrator (INT2) is arranged with which the output signal ($NF_{i,j}$) of the non-linear filter (NLF) is integrated, and/or an amplifier (V) is arranged that amplifies one of the signals present at its entrance.

12. Sensor system according to any one of the preceding claims with a transmission reverse transformation (SRT), **characterized in that**

    - a multiplier ($M5_{ij}$) multiplies an output signal ($NF_{i,j}$) of the non-linear filter (NLF) filtered with a first filter function (f(S)) by a corresponding wavelet ($s_{i,j}$, $s_{i,j\_b}$) to a transmission pre-signal ($F_{i,j\_5}$) and
    - a summing unit ($\Sigma 2$) generates the supply signal (S5) by summing up all the transmission pre-signals ($F_{i,j\_5}$).

13. Sensor system according to any one of the preceding claims with a compensator reverse transformation (KRT), **characterized in that** in a multiplication unit (M3ij), an output signal ($NF_{i,j}$) of the non-linear filter (NLF) filtered with a second filter function (g(S)) is multiplied by a corresponding wavelet ($s_{i,j}$, $s_{i,j\_b}$) to a compensation pre-signal ($F_{i,j\_3}$) and

    - a summing unit ($\Sigma 1$) generates a compensation supply signal (S3) by summing up all the compensation pre-signals ($F_{i,j\_3}$).

14. Sensor system according to any one of the preceding claims, **characterized in that** the non-linear filter (NLF) controls the delay of one of the wavelets ($s_{i,j}$) to a first delayed wavelet ($s_{i,j\_5}$) by means of a first delay unit ($\Delta t1$) and/or the delay of one of the wavelets ($s_{i,j}$) to a second delayed wavelet ($s_{i,j\_3}$) by means of a second delay unit ($\Delta t2$).

15. Sensor system according to any one of the preceding claims, **characterized in that**

    - a linear filter and/or an integrator (INT1) is arranged in the signal path before the non-linear filter (NLF) and/or
    - a linear filter and/or an integrator (INT2) is arranged in the signal path behind the non-linear filter (NLF).

16. Sensor system according to claim 10, **characterized by** a reference transmitter (R) that is fed with the supply signal (S5) and at least temporarily transmits a reference signal (S11) directly to the receiver (D), which reference signal is received at the receiver (D) as reference reception signal (S0r) and is further processed in the processing unit (LF), wherein

    - preferably in a reference memory ($MRef_{i,j}$)

        i. at least one control value signal ($yi_{i,j}$) of the control value matrix ($YI_{i,j}$) and/or
        ii. at least one of the stored control value signals ($yi_{i,j}(t_n)$) of the output signal matrix ($YIn_{i,j}$) at the instant of time $t_n$ and/or
        iii. at least one of the integrated control value signals ($xi_{i,j}$) of the output signal matrix ($XI_{i,j}$) of the first integration unit (INT1) and/or
        iv. at least one of the control value signals ($zi_{i,j}$) of the output signal matrix ($ZI_{i,j}$) of the second memory unit (ME2) and/or
        v. at least one of the signals ($nf_{i,j}$) of the output signal matrix ($NF_{i,j}$) of the non-linear filter (NLF) and/or
        vi. at least one integrated output signal ($inf_{i,j}$) of the output signal matrix ($INF_{i,j}$) of the second integration unit (INT2) and/or
        vii. at least one output signal ($S4_{i,j}$) of the output signal matrix ($S4_{ij}$) of the amplifier unit (V) and/or
        viii. a signal derived from these signals

    is stored as reference information, and
    - particularly preferably at least one of the control value signals ($yi_{i,j}$) is stored in a temporal depth of more than one value.

17. Sensor system according to claim 10, **characterized in that**

    a. one of the control value signals ($yi_{i,j}$) of the control value matrix ($YI_{i,j}$) or
    b. one of the stored control value signals ($yi_{i,j}(t_n)$) of the output signal matrix ($YIn_{i,j}$) at the instant of time $t_n$ or
    c. one of the integrated control value signals ($xi_{i,j}$) of the output signal matrix ($XI_{i,j}$) of the first integration unit (INT1) or

d. one of the control value signals $(zi_{i,j})$ of the output signal matrix $(ZI_{i,j})$ of the second memory unit (ME2) or

e. one of the signals $(nf_{i,j})$ of the output signal matrix $(NF_{i,j})$ of the non-linear filter (NLF) or

f. at least one integrated output signal $(inf_{i,j})$ of the output signal matrix $(INF_{i,j})$ of the second integration unit (INT2) or

g. at least one output signal $(S4_{i,j})$ of the output signal matrix $(S4_{i,j})$ of the amplifier unit (V) or

h. a signal derived from these signals

is further processed in an echo evaluation unit in such a manner that the echo portions (EInf) of the reception signal (S22) or an echo time signal (echo(t)) are determined, wherein preferably the echo time signal (echo(t)) is output or further processed to determine the distance to an object or to deduct the presence of further objects whose distance is not determined.

18. Sensor system according to any one of the preceding claims, **characterized in that** the object (O) represents one of the transmission paths (I, I1, 12) and preferably a control value signal $(yi_{i,j}(t))$ is a measure for the property of the transmission path (I, I1, 12) itself.

**Revendications**

1. Système de capteurs comprenant un retour d'un signal d'alimentation de compensation pour la détection de la distance ou de propriétés d'au moins un objet (O1, O2) dans un trajet de transmission optique (I) entre un émetteur (H) et un récepteur (D), dans lequel le système est basé sur une régulation à rétro-couplage ; comprenant

- un émetteur optique (H) et un récepteur (D),
- dans lequel l'émetteur (H) est piloté par un signal d'alimentation (S5) pour envoyer un signal d'émission connu (S21) de l'émetteur (H) dans le trajet de transmission (I), qui, après le passage à travers au moins une partie du trajet de transmission (I) et l'influence par un objet (O1, O2) arrive à un récepteur (D) et est reçu par le récepteur en tant que signal de réception (S22),
- dans lequel le récepteur (D) forme à partir du signal de réception (S22), un signal de sortie de récepteur (S0) avec une partie de signal de sortie de récepteur (S0e),
- dans lequel un signal d'alimentation de compensation (S3) est envoyé au récepteur (D) et le signal d'alimentation de compensation (S3) est superposé au signal de réception (S22),
- une unité de traitement (LF) pour transformer un signal intermédiaire de traitement comprenant le signal de sortie de récepteur (S0) et pour séparer au moins une partie de signal de sortie de récepteur (SOe) et en produire des signaux de valeur de régulation $(yi_{i,j})$,
- une unité de rétro-transformation qui renvoie un des signaux de valeur de régulation $(yi_{i,j})$ transformés dans une boucle de rétro-couplage de façon à ce que le signal de valeur de régulation $(yi_{i,j})$ renvoyé soit présent sur le récepteur (D),
- une unité de production de signal qui produit des signaux de base,
- l'unité de production de signal comprend un générateur d'ondelettes (WG) qui produit des ondelettes $(s_{i,j})$ en tant que signaux de base, et le générateur d'ondelettes (WG) produit pour chaque période de système une ondelette d'origine $(s_{1,1}, s_{1,1\_a}, s_{1,1\_b})$ en tant que signal de base qui est périodique avec une période d'ondelette d'origine (P, Pa, Pb),

dans lequel

- un signal de valeur de régulation $(yi_{i,j}(t))$ est une mesure de la propriété ou de la distance d'un objet,

**caractérisé en ce que**

- des signaux de base de l'unité de production de signal ne présentent aucune orthogonalité entre eux,
- l'unité de traitement (LF) produit les signaux de valeur de régulation **en ce que** le signal intermédiaire de traitement est multiplié par chacun des signaux de base, de sorte que pour chaque signal de base, un signal de valeur de régulation $(yi_{i,j})$ est formé ;
- un filtre non-linéaire (NLF) est agencé entre l'unité de traitement (LF) et l'unité de rétro-transformation,
- le filtre non-linéaire (NLF) est ainsi formé que le maximum des signaux de valeur de régulation $(yi_{i,j})$ est recherché et que le signal de valeur de régulation $(yi_{i,j})$ est ainsi sélectionné et émis en tant que signal de sortie NLF $(nf_{i,j})$ qui est une mesure de la propriété ou de la distance d'un objet, et

le signal d'alimentation (S5) est formé à partir de la somme des signaux de base et envoyé à l'émetteur, et

l'unité de rétro-transformation exécute une rétro-transformation de compensation (KRT) avec le signal de sortie NLF ($nf_{i,j}$), dans lequel le signal de sortie NLF ($nf_{i,j}$) est multiplié par les signaux de base correspondants et le signal d'alimentation de compensation (S3) est produit par addition, lequel est envoyé au récepteur (D) et superposé au signal de réception (S22).

2. Système de capteurs comprenant un retour d'un signal d'alimentation de compensation pour la détection de la distance ou de propriétés d'au moins un objet (O1, O2) dans un trajet de transmission optique (I) entre un émetteur (H) et un récepteur (D), dans lequel le système est basé sur une régulation à rétro-couplage ;
comprenant

- un émetteur optique (H) et un récepteur (D),
- dans lequel l'émetteur (H) est piloté par un signal d'alimentation (S5) pour envoyer un signal d'émission connu (S21) de l'émetteur (H) dans le trajet de transmission (I), qui, après le passage à travers au moins une partie du trajet de transmission (I) et l'influence par un objet (O1, O2) arrive à un récepteur (D) et est reçu par le récepteur en tant que signal de réception (S22),
- dans lequel le récepteur (D) forme à partir du signal de réception (S22), un signal de sortie de récepteur (S0) avec une partie de signal de sortie de récepteur (S0e),
- dans lequel un signal d'alimentation de compensation (S3) est envoyé au récepteur (D) et le signal d'alimentation de compensation (S3) est superposé au signal de réception (S22),
- une unité de traitement (LF) pour transformer un signal intermédiaire de traitement comprenant le signal de sortie de récepteur (S0) et pour séparer au moins une partie de signal de sortie de récepteur (S0e) et en produire des signaux de valeur de régulation ($yi_{i,j}$),
- une unité de rétro-transformation qui renvoie un des signaux de valeur de régulation ($yi_{i,j}$) transformés dans une boucle de rétro-couplage de façon à ce que le signal de valeur de régulation ($yi_{i,j}$) renvoyé soit présent sur le récepteur (D),
- une unité de production de signal qui produit des signaux de base,
- l'unité de production de signal comprend un générateur d'ondelettes (WG) qui produit des ondelettes ($s_{i,j}$) en tant que signaux de base, et le générateur d'ondelettes (WG) produit pour chaque période de système une ondelette d'origine ($s_{1,1}$, $s_{1,1\_a}$, $s_{1,1\_b}$) en tant que signal de base qui est périodique avec une période d'ondelette d'origine (P, Pa, Pb),
dans lequel
- un signal de valeur de régulation ($yi_{i,j}(t)$) est une mesure de la propriété ou de la distance d'un objet,
**caractérisé en ce que**
- des signaux de base de l'unité de production de signal ne présentent aucune orthogonalité entre eux,
- l'unité de traitement (LF) produit les signaux de valeur de régulation **en ce que** le signal intermédiaire de traitement est multiplié par chacun des signaux de base, de sorte que pour chaque signal de base, un signal de valeur de régulation ($yi_{i,j}$) est formé ;
- un filtre non-linéaire (NLF) est agencé entre l'unité de traitement (LF) et l'unité de rétro-transformation,
- le filtre non-linéaire (NLF) est ainsi formé que le maximum des signaux de valeur de régulation ($yi_{i,j}$) est recherché et que le signal de valeur de régulation ($yi_{i,j}$) est ainsi sélectionné et émis en tant que signal de sortie NLF ($nf_{i,j}$) qui est une mesure de la propriété ou de la distance d'un objet,
et
le signal d'alimentation de compensation (S3) est formé à partir de la somme des signaux de base et est envoyé au récepteur (D) et superposé au signal de réception, et
l'unité de rétro-transformation exécute une rétro-transformation d'émission (SRT) avec le signal de sortie NLF ($nf_{i,j}$), dans lequel le signal de sortie NLF ($nf_{i,j}$) est multiplié par les signaux de base correspondants et le signal d'alimentation (S5) est produit par addition.

3. Système de capteurs selon la revendication 1 ou 2, **caractérisé en ce que** le filtre non-linéaire (NLF) est un estimateur de maximum.

4. Système de capteurs selon la revendication 1 ou 2, **caractérisé en ce qu'**un estimateur de maximum recherche le maximum à partir des signaux de valeur de régulation et le filtre non-linéaire (NLF) est commandé au moyen de l'estimateur de maximum (EST) ;
dans lequel le filtre non-linéaire (NLF) effectue une multiplication des signaux de valeur de régulation ($yi_{i,j}$) par des signaux de commande de l'estimateur de maximum (EST).

5. Système de capteurs selon la revendication 1 ou 2, **caractérisé en ce que** le filtre non-linéaire (NLF) est une matrice de commutation avec des éléments de commutation qui sont contrôlés par un bus de signal de commande (CTRS) d'un estimateur de maximum (EST), dans lequel l'estimateur de maximum calcule le maximum des signaux de valeur de régulation.

6. Système de capteurs selon l'une des revendications 3 à 5, **caractérisé en ce que** l'estimateur de maximum comprend un réseau neuronal.

7. Système de capteurs selon l'une des revendications précédentes, **caractérisé en ce que** le système de capteurs (1) est synchronisé avec une période de système d'une longueur de période ($T$, $T_a$, $T_b$) qui peut être différente pour chaque période et est en tout cas différente de la longueur de période zéro.

8. Système de capteurs selon la revendication précédente, **caractérisé en ce que** le générateur d'ondelettes (WG) produit parallèlement une quantité partielle de $n \times m$ ondelettes-filles périodiques ($s_{i,j}$, $s_{ij\_a}$, $s_{i,j\_b}$ avec $1 \leq i \leq n$, $1 \leq j \leq m$) à partir de l'ondelette d'origine, dans lequel les ondelettes-filles périodiques ($s_{i,j}$, $s_{i,j\_a}$, $s_{i,j\_b}$ avec $1 \leq i \leq n$, $1 \leq j \leq m$)

- sont temporellement refoulées du facteur $1/j$ ou étendues d'un facteur $j$ par rapport à l'ondelette d'origine ($s_{1,1}$, $s_{1,1\_a}$, $s_{1,1\_b}$) respective et
- sont retardées d'un facteur $(n-1)*T/j$ respectivement $(n-1)*T_a/j$ respectivement $(n-1)*T_b/j$ ou $(n-1)*T*j$ respectivement $(n-1)*T_a*j$ respectivement $(n-1)*T_{b*}j$ par rapport à l'ondelette correspondante $s_{1,j}$, respectivement $s_{1,j\_a}$, respectivement $s_{1,j\_b}$,
ou
- sont retardées d'un facteur $(n-1)*T$ respectivement $(n-1)*T_a$ respectivement $(n-1)*T_b$ par rapport à l'ondelette correspondante $s_{1,j}$ respectivement $s_{1,j\_a}$ respectivement $s_{1,j\_b}$ et
- présentent une période d'ondelette-fille de la longueur de période $P/j$ respectivement $P_a/j$ respectivement $P_b/j$ ou $P*j$ respectivement $P_a*j$ respectivement $P_b*j$.

9. Système de capteurs selon la revendication 5 ou 6, **caractérisé en ce que** la première unité de traitement (LF) relie le signal intermédiaire de traitement à respectivement une des ondelettes ($s_{i,j}$, $s_{i,j\_a}$, $s_{i,j\_b}$), dans lequel le résultat de ces $n \times m$ liaisons est la matrice de valeur de régulation (YI) sous forme des premiers signaux de valeur de régulation ($yi_{i,j}$) et
dans lequel les liaisons qu'effectue la première unité de traitement (LF) sont effectuées à l'aide respectivement d'une des possibilités suivantes :

a. une forme linéaire toujours égale
b. une multiplication
c. une multiplication suivie d'un filtrage ou d'une intégration
d. un produit scalaire toujours égal,
e. un filtre de corrélation toujours égal.

10. Système de capteurs selon l'une des revendications précédentes, **caractérisé en ce que** dans le parcours de signal du système de capteurs (1) entre l'unité de traitement (LF) et le filtre non-linéaire (NLF) une première mémoire (ME1) est disposée dans laquelle un des signaux de valeur de régulation ($yi_{i,j}$) est enregistré pour au moins un instant de mémoire ($t_n$), et/ou un premier intégrateur (INT1) est disposé, qui intègre un des signaux de valeur de régulation ($yi_{i,j}$, $yi_{i,j}(t_n)$) présents à son entrée, et/ou une deuxième mémoire (ME2) est disposée dans laquelle au moins un des signaux de valeur de régulation ($yi_{i,j}$, $yi_{i,j}(t_n)$, $xi_{i,j}$) présents à son entrée est enregistré pour au moins un instant de mémoire ($t_m$).

11. Système de capteurs selon l'une des revendications précédentes, **caractérisé en ce que** dans le parcours de signal du système de capteurs (1) derrière le filtre non-linéaire (NLF), un deuxième intégrateur (INT2) est disposé, avec lequel le signal de sortie ($NF_{i,j}$) du filtre non-linéaire (NLF) est intégré, et/ou un amplificateur (V) est disposé, qui amplifie un des signaux présents à son entrée.

12. Système de capteurs selon l'une des revendications précédentes comprenant une rétro-transformation d'émission (SRT), **caractérisé en ce que**

- un multiplicateur ($M5_{ij}$) multiplie un signal de sortie ($NF_{i,j}$) du filtre non-linéaire (NLF) filtré avec une première fonction de filtre ($f(S)$) par une ondelette attribuée ($s_{i,j}$, $s_{i,j\_b}$) en un pré-signal d'émission ($F_{i,j\_5}$)

et

un totaliseur ($\Sigma$2) produit le signal d'alimentation (S5) par totalisation à partir de tous les pré-signaux d'émission ($F_{i,j\_5}$).

**13.** Système de capteurs selon l'une des revendications précédentes comprenant une rétro-transformation de compensateur (KRT), **caractérisé en ce que** dans une unité de multiplication ($M3_{ij}$), un signal de sortie ($NF_{i,j}$) du filtre non-linéaire (NLF) filtré avec une deuxième fonction de filtre (g(S)) est multiplié par une ondelette attribuée ($s_{i,j}$, $s_{i,j\_b}$) en un pré-signal de compensation ($F_{i,j\_3}$) et

- un totaliseur ($\Sigma$1) produit un signal d'alimentation de compensation (S3) par totalisation à partir de tous les pré-signaux de compensation ($F_{i,j\_3}$).

**14.** Système de capteurs selon l'une des revendications précédentes, **caractérisé en ce que** le filtre non-linéaire (NLF) commande

le retardement d'une des ondelettes ($s_{i,j}$) en une première ondelette retardée ($s_{i,j\_5}$) par un premier dispositif de retardement ($\Delta t1$) et/ou

le retardement d'une des ondelettes ($s_{i,j}$) en une deuxième ondelette retardée ($s_{i,j\_3}$) par un deuxième dispositif de retardement ($\Delta t2$).

**15.** Système de capteurs selon l'une des revendications précédentes, **caractérisé en ce**

- **qu'**un filtre linéaire et/ou un intégrateur (INT1) est disposé dans le trajet de signal devant le filtre non-linéaire (NLF)
et/ou
- **qu'**un filtre linéaire et/ou un intégrateur (INT2) est disposé dans le trajet de signal derrière le filtre non-linéaire (NLF).

**16.** Système de capteurs selon la revendication 10, **caractérisé par** un émetteur de référence (R) qui est alimenté par le signal d'alimentation (S5) et envoie au moins temporairement un signal de référence (S11) directement au récepteur (D), qui est reçu sur le récepteur (D) en tant que signal de réception de référence (S0r) et est transformé dans l'unité de traitement (LF), dans lequel

- de préférence, dans une mémoire de référence ($MRef_{i,j}$)

i. au moins un signal de valeur de régulation ($yi_{i,j}$) de la matrice de valeur de régulation ($Yi_{i,j}$) et/ou
ii. au moins un des signaux de valeur de régulation ($yi_{i,j}(t_n)$) enregistrés de la matrice de signal de sortie ($YIn_{i,j}$) à l'instant $t_n$ et/ou
iii. au moins un des signaux de valeur de régulation ($xi_{i,j}$) intégrés de la matrice de signal de sortie ($Xi_{i,j}$) de la première unité d'intégration (INT1) et/ou
iv. au moins un des signaux de valeur de régulation ($zi_{i,j}$) de la matrice de signal de sortie ($Zi_{i,j}$) de la deuxième unité de mémoire (ME2) et/ou
v. au moins un des signaux ($nf_{i,j}$) de la matrice de signal de sortie ($NF_{i,j}$) du filtre non-linéaire (NLF) et/ou
vi. au moins un signal de sortie ($inf_{i,j}$) intégré de la matrice de signal de sortie ($INF_{i,j}$) de la deuxième unité d'intégrateur (INT2) et/ou
vii. au moins un signal de sortie ($S4_{i,j}$) de la matrice de signal de sortie ($S4_{ij}$) de l'unité d'amplificateur (V) et/ou
viii. un signal dérivé de ces signaux

est déposé en tant qu'information de référence, et
- de manière particulièrement préférée au moins un des signaux de valeur de régulation ($yi_{i,j}$) est enregistré à une profondeur temporelle de plus d'une valeur.

**17.** Système de capteurs selon la selon la revendication 10, **caractérisé en ce que**

a. un des signaux de valeur de régulation ($yi_{i,j}$) de la matrice de valeur de régulation ($Yi_{i,j}$) ou
b. un des signaux de valeur de régulation ($yi_{i,j}(t_n)$) enregistrés de la matrice de signal de sortie ($YIn_{i,j}$) à l'instant $t_n$ ou
c. un des signaux de valeur de régulation ($xi_{i,j}$) intégrés de la matrice de signal de sortie ($Xi_{i,j}$) de la première unité d'intégration (INT1) ou

d. un des signaux de valeur de régulation ($zi_{i,j}$) de la matrice de signal de sortie ($Zi_{i,j}$) de la deuxième unité de mémoire (ME2) ou

e. un des signaux ($nf_{i,j}$) de la matrice de signal de sortie ($NF_{i,j}$) du filtre non-linéaire (NLF) ou

f. au moins un signal de sortie ($inf_{i,j}$) intégré de la matrice de signal de sortie ($INF_{i,j}$) de la deuxième unité d'intégrateur (INT2) ou

g. au moins un signal de sortie ($S4_{i,j}$) de la matrice de signal de sortie ($S4_{i,j}$) de l'unité d'amplificateur (V) ou

h. un signal dérivé de ces signaux

est transformé dans une unité d'évaluation d'écho de telle façon que les parties d'écho (EInf) du signal de réception (S22) ou un signal temporel d'écho (echo(t)) est déterminé, dans lequel de préférence le signal temporel d'écho (echo(t)) est émis ou transformé pour en déterminer l'éloignement par rapport à un objet ou conclure à la présence d'autres objets dont l'éloignement n'est pas déterminé.

**18.** Système de capteurs selon l'une des revendications précédentes, **caractérisé en ce que** l'objet (O) représente un des trajets de transmission (I, I1, I2) et de préférence un signal de valeur de régulation ($yi_{i,j}(t)$) est lui-même une mesure de la propriété du trajet de transmission (I, I1, I2).

Fig. 1

EP 2 924 466 B1

Fig. 2

a)

$S(f)$    $S_{-1}$      $S_0$      $S_1$      $S_2$      $S_3$

$-f_0$      $0$      $f_0$      $2*f_0$      $3*f_0$   $f$

b)

$A(f)$      $A_1$

$f_0$    $f$

c)

$S_1(f)<A(f)*S(f)>=S_1(f)$      $S_1$

$f_0$    $f$

Fig. 3

EP 2 924 466 B1

a)

$S(f)$

$S_{-1}$   $S_0$   $S_1$   $S_2$   $S_3$

$-f_0$   $0$   $f_0$   $2*f_0$   $3*f_0$   $f$

b)

$A(f)$   $S(f)$ $A_1$

$f_0$   $f$

c)

$|S(f)<A(f)*S(f)>|$   $f_0$ $A_1$

$f$

d)

$F(S(f)<A(f)*S(f)>)$   $f_0$ $A_1$

$f_0$   $f$

# Fig. 4

Fig. 5

Fig. 6

Fig. 7

Fig. 8

Fig. 9

Fig. 10

EP 2 924 466 B1

Fig. 11

Fig. 12

Fig. 13

Fig. 14

EP 2 924 466 B1

Fig. 15

EP 2 924 466 B1

Fig. 16

Fig. 17

Fig. 18

Fig. 19

Fig. 20

Fig. 21

Fig. 22

Fig. 23a

Fig. 23b

Fig. 24

Fig. 25

EP 2 924 466 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012024597
- DE 102013013664
- WO 2013124018 A
- DE 10001955 A1
- DE 10024156 A1
- DE 19839730 C1
- DE 930983 U1
- DE 10001943 C1

- DE 10346741 B3
- DE 102004025345 B3
- DE 102005013325 A1
- DE 102005010745 B3
- DE 102007005187 B4
- EP 2631674 A1
- DE 10001943 C2

**In der Beschreibung aufgeführte Nicht-Patentliteratur**

- **STEPHANE MALLAT.** A Wavelet Tour of Signal Processing. Academic Press, 1997